# EUROPÄISCHE PATENTSCHRIFT

(11) **EP 2 670 818 B1**
(45) Veröffentlichungstag und Bekanntmachung des Hinweises auf die Patenterteilung: **05.10.2016**
(21) Anmeldenummer: 12700775.5
(22) Anmeldetag: 09.01.2012
(51) Int. Cl.: C09K 19/54, C09K 19/30, C09K 19/44, C09K 19/04, C09K 19/56, G02F 1/1337

(54) **FLÜSSIGKRISTALLANZEIGEN MIT HOMÖOTROPER AUSRICHTUNG**
LIQUID CRYSTAL DISPLAYS WITH HOMEOTROPIC ALIGNMENT
DISPOSITIFS D'AFFICHAGE À BASE DE CRISTAUX LIQUIDES À ORIENTATION HOMÉOTROPE

(30) Priorität: 05.02.2011 DE 102011010380
(43) Veröffentlichungstag der Anmeldung: 11.12.2013
(73) Patentinhaber: Merck Patent GmbH, 64293 Darmstadt (DE)
(72) Erfinder: ARCHETTI, Graziano, 64289 Darmstadt (DE); TAUGERBECK, Andreas, 64285 Darmstadt (DE)
(86) Internationale Anmeldenummer: PCT/EP2012/000068
(87) Internationale Veröffentlichungsnummer: WO 2012/104008

(56) Entgegenhaltungen:
- EP-A1- 1 813 287
- WO-A1-2010/089092
- WO-A2-02/068562
- WO-A2-2009/066947
- DE-A1- 2 356 889
- DE-A1- 4 000 451
- US-A- 3 848 966
- ABEYGUNARATNE S ET AL: "TILTED SUPRAMOLECULAR STRUCTURES OF AMPHIPHILIC GLYCOLIPIDS IN STRAIGHT-CORE SMECTIC C LIQUID CRYSTALS", LIQUID CRYSTALS: AN INTERNATIONAL JOURNAL OF SCIENCE AND TECHNOLOGY, TAYLOR & FRANCIS, GB, Bd. 34, Nr. 4, 1. April 2007 (2007-04-01), Seiten 441-445, XP001540575, ISSN: 0267-8292, DOI: 10.1080/02678290701223939

## Beschreibung

Die vorliegende Erfindung betrifft flüssigkristalline Medien (FK-Medien) mit negativer oder positiver dielektrischer Anisotropie enthaltend selbstausrichtende Additive, die eine homöotrope (vertikale) Ausrichtung der FK-Medien an einer Oberfläche oder den Zellwänden einer Flüssigkristallanzeige (FK-Anzeige) bewirken. Die Erfindung umfasst daher auch FK-Anzeigen mit homöotroper Ausrichtung des flüssigkristallinen Mediums (FK-Medium) ohne konventionelle Imid-Orientierungsschichten. Die FK-Medien sind durch eine polymerisierbare oder polymerisierte Komponente ergänzt, die zur Stabilisierung der Ausrichtung, zur Justierung des Tiltwinkels und/oder als Passivierungsschicht dient.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Alignment).

Anzeigen, die den ECB-Effekt verwenden, haben sich als sogenannte VAN-(Vertically Aligned Nematic) Anzeigen beispielsweise in den Bauformen MVA- (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technology ...", SID 2004 International Symposium, Digest of Technical Papers, XXXV, Buch II, S. 750 bis 753), PVA- (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS- (In Plane Switching) (z.B.: Yeo, S.D., Vortrag 15.3: "A LC Display for the TV Application", SID 2004 International Symposium, Digest of Technical Papers, XXXV, Buch II, S. 758 & 759) und den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein nicht zufriedenstellend gelöstes Problem.

Mit der Erzeugung der VA-Displays mit zwei oder mehr Domänen unterschiedlicher Vorzugsrichtung ist ein beträchtlicher Aufwand verbunden. Ein Ziel dieser Erfindung ist es, die Herstellprozesse und die Anzeigevorrichtungen selbst zu vereinfachen, ohne die Vorteile der VA-Technik, wie relativ schnelle Schaltzeiten und gute Blickwinkelabhängigkeit, aufzugeben.

VA-Anzeigen die FK-Medien mit positiver dielektrischer Anisotropie enthalten, werden in S.H. Lee et al. Appl. Phys. Lett. (1997), 71, 2851-2853 beschrieben. Diese Anzeigen verwenden auf eine Substratoberfläche angeordnete Interdigitalelektroden (In-plane Ansteuerelektroden-Konfiguration kammförmiger Struktur), wie sie unter anderem bei den kommerziell erhältlichen IPS-(in-plane switching) Anzeigen zum Einsatz kommen (wie z.B. in DE 40 00 451 und EP 0 588 568 offenbart), und weisen eine homöotrope Anordnung des Flüssigkristallmediums auf, die zu einer planaren Anordnung beim Anlegen einer elektrischen Feldes wechselt.

Weiterentwicklungen der oben genannten Anzeige sind zum Beispiel in K.S. Hun et al. J. Appl. Phys. (2008), 104, 084515 (DSIPS: 'double-side in-plane switching' für Verbesserungen von Treiberspannung und Transmission), M. Jiao et al. App. Phys. Lett (2008), 92, 111101 (DFFS: 'dual fringe field switching' für verbesserte Schaltzeiten) und Y.T. Kim et al. Jap. J. App. Phys. (2009), 48, 110205 (VAS: 'viewing angle switchable' LCD) zu finden.
Darüber hinaus sind VA-IPS-Anzeigen auch unter dem Namen Positiv-VA und HT-VA bekannt.

Bei allen solchen Anzeigen (hier nachfolgend allgemein als VA-IPS-Anzeigen bezeichnet) ist auf beiden Substratoberflächen eine Orientierungsschicht zur homöotropen Ausrichtung des FK-Mediums aufgebracht, deren Erzeugung bisher mit einem beträchtlichen Aufwand verbunden ist.

Ein Ziel dieser Erfindung ist es, die Herstellprozesse selbst zu vereinfachen, ohne die Vorteile der VA-Display-Technik, wie relativ schnelle Schaltzeiten, gute Blickwinkelabhängigkeit und hohen Kontrast aufzugeben.

Für die technische Anwendung dieser Effekte in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft, den Materialien in den Substratoberflächen und physikalischen Einflüssen wie Wärme, Strahlung im infraroten, sichtbaren und ultravioletten Bereich und elektrische Gleich- und Wechselfelder.

Ferner werden von technisch verwendbaren FK-Phasen eine flüssigkristalline Mesophase in einem geeigneten Temperaturbereich und eine niedrige Viskosität gefordert.

VA- und VA-IPS-Anzeigen sollen im Allgemeinen einen sehr hohen spezifischen Widerstand bei gleichzeitig großem Arbeitstemperaturbereich, kurze Schaltzeiten und niedrige Schwellenspannung, mit deren Hilfe verschiedene Graustufen erzeugt werden können, besitzen.

In den herkömmlichen VA- und VA-IPS-Displays sorgt eine Polyimidschicht auf den Substratoberflächen für die homöotrope Orientierung des Flüssigkristalls. Die Herstellung einer geeigneten Orientierungsschicht im Display erfordert einen erheblichen Aufwand. Außerdem können Wechselwirkungen der Orientierungsschicht mit dem FK-Medium den elektrischen Widerstand der Anzeige verschlechtern. Wegen solcher möglichen Wechselwirkungen reduziert sich die Zahl der geeigneten Flüssigkristallkomponenten erheblich. Daher wäre es erstrebenswert die homöotrope Ausrichtung des FK-Mediums ohne Polyimid zu erreichen.

Der Nachteil der häufig verwendeten Aktivmatrix-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Wesentlich bessere Blickwinkelabhängigkeiten weisen VA-Displays auf und werden daher hauptsächlich für Fernseher und Monitore verwendet.

Eine Weiterentwicklung stellen die sogenannten PS-bzw. PSA-Anzeigen ("Polymer Sustained" bzw. "Polymer Sustained Alignment") dar, für die auch gelegentlich der Begriff "Polymer Stabilized" verwendet wird. Ohne nennenswerte Einbußen sonstiger Parameter, wie insbesondere der günstigen Blickwinkelabhängigkeit des Kontrastes, zeichnen sich die PSA-Anzeigen durch die Verkürzung der Schaltzeiten aus.

In diesen Anzeigen wird dem FK-Medium eine geringe Menge (zum Beispiel 0,3 Gew.%, typischerweise <1 Gew.%) einer oder mehrerer polymerisierbare(n) Verbindung(en) zugesetzt, welche nach Einfüllen in die FK-Zelle mit oder ohne angelegte elektrische Spannung zwischen den Elektroden *in situ* polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als reaktive Mesogene oder "RM"s bezeichnet, zur FK-Mischung erwiesen. Die PSA-Technik wird bisher hauptsächlich für FK-Medien mit negativer dielektrischer Anisotropie eingesetzt.

Nachfolgend wird der Begriff "PSA", falls nicht anders angegeben, stellvertretend für PS-Anzeigen und PSA-Anzeigen verwendet.

Mittlerweile wird das PSA-Prinzip in diversen klassischen FK-Anzeigen angewendet. So sind beispielsweise PSA-VA-, PSA-OCB-, PSA-IPS-, PSA-FFS- und PSA-TN-Anzeigen bekannt. Die Polymerisation der polymerisierbaren Verbindung(en) erfolgt bei PSA-VA- und PSA-OCB-Anzeigen vorzugsweise bei angelegter elektrischer Spannung, bei PSA-IPS-Anzeigen mit oder ohne angelegte elektrische Spannung. Wie man in Testzellen nachweisen kann, führt das PS(A)-Verfahren zu einem 'pretilt' in der Zelle. Bei PSA-OCB-Anzeigen beispielsweise kann man erreichen, dass die Bend-Struktur stabilisiert wird, so dass man ohne Offset-Spannung auskommt oder diese reduzieren kann. Im Falle von PSA-VA-Anzeigen wirkt sich der 'pretilt' positiv auf die Schaltzeiten aus. Für PSA-VA-Anzeigen kann ein Standard-MVA- bzw. -PVA Pixel- und Elektroden-Layout verwendet werden. Darüber hinaus kann man aber beispielsweise auch mit nur einer strukturierten Elektrodenseite und ohne 'Protrusions' auskommen, was die Herstellung wesentlich vereinfacht und gleichzeitig zu einem sehr guten Kontrast bei sehr guter Lichtdurchlässigkeit führt.

PSA-VA-Anzeigen sind beispielsweise in WO 2009/066947, JP 10-036847 A, EP 1 170 626 A2, US 6,861,107, US 7,169,449, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C- Chien, Jpn. J. Appl. Phys. 43, 2004, 7643-7647 beschrieben. PSA-IPS-Anzeigen sind zum Beispiel in US 6,177,972 und Appl. Phys. Lett. 1999, 75(21), 3264 beschrieben. PSA-TN-Anzeigen sind zum Beispiel in Optics Express 2004, 12(7), 1221 beschrieben. PSA-VA-IPS Anzeigen sind zum Beispiel in WO 2010/089092 A1 offenbart.

PSA-Anzeigen können ebenso wie die oben beschriebenen konventionellen FK-Anzeigen als Aktivmatrix- oder Passivmatrix-Anzeigen betrieben werden. Bei Aktivmatrix-Anzeigen erfolgt die Ansteuerung einzelner Bildpunkte üblicherweise durch integrierte, nicht-lineare aktive Elemente wie beispielsweise Transistoren (z.B. Dünnfilmtransistoren, engl. 'thin film transistor' bzw. "TFT"), bei Passivmatrix-Anzeigen üblicherweise nach dem Multiplex-Verfahren, wobei beide Verfahren aus dem Stand der Technik bekannt sind.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere bei PSA-VA-Anzeigen kann man ohne nennenswerte Einbußen sonstiger Parameter eine Verkürzung der Schaltzeiten erreichen, die mit einem in Testzellen messbaren 'pretilt' korrelieren.

Im Stand der Technik werden für PSA-VA beispielsweise polymerisierbare Verbindungen der folgenden Formel verwendet 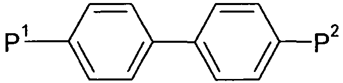 worin P¹ und P² jeweils eine polymerisierbare Gruppe, üblicherweise eine Acrylat- oder Methacrylatgruppe bedeutet, wie beispielsweise in US 7,169,449 beschrieben.

Der Aufwand für das Erzeugen einer Polyimidschicht, Behandlung der Schicht und Verbesserung mit Erhebungen oder Polymerschichten, ist relativ groß. Eine vereinfachende Technologie wäre daher wünschenswert, die einerseits die Produktionskosten verringert und andererseits die Bildqualität (Blickwinkelabhängigkeit, Kontrast, Schaltzeiten) zu optimieren hilft.

Über eine spontane horizontale bis vertikale Ausrichtung einer Flüssigkristallschicht mit Hilfe von Nanopartikeln basierend auf polyhedralen oligomeren Silsesquioxanen (nachfolgend einfach Silsesquioxane, PSS) berichtet die Druckschrift Shie-Chang Jeng et al. Optics Letters (2009), 34, 455-457. Ab einer Konzentration von ca. 1 Gew.% wird eine nahezu homöotrope Ausrichtung beobachtet. Der 'pretilt' (engl.) ist nur durch die Konzentration beeinflussbar.

In der Druckschrift US 2008/0198301 A1 wird ebenfalls PSS als Orientierungsmaterial vorgeschlagen. Man erkennt, dass die Selbstorientierung auf ITO und auf planar orientierendem Polyimid funktioniert.

Auf das Problem der Temperaturabhängigkeit des Schaltvorgangs und der fehlenden Passivierungsschicht wird in beiden Druckschriften nicht hingewiesen. In der Tat hat es sich gezeigt, dass der Grad der von PSS induzierten homöotropen Orientierung mit steigender Temperatur rasch abnimmt. Eine Passivierungsschicht ist darüber hinaus besonders wichtig, da die Polyimidschicht nicht nur für die Orientierung des FK-Mediums, sondern auch für eine elektrische Isolierung sorgt. Ohne Passivierungsschicht können Probleme mit der Zuverlässigkeit der Anzeige ('Reliability') wie R-DC ('Residual-DC') erscheinen.

Auf einem Konferenzposter zur SID 2010 (H.Y. Gim et al., P-128) wird beschrieben, dass ein phenethylsubstituiertes polyhedrales oligomeres Silsesquioxan in einer Konzentration von 10 Gew.-% in einer Anzeige ohne konventionelle Orientierungsschicht vom PSA-VA-Typ verwendet wird. Das FK-Medium mit negativer dielektrischer Anisotropie wird durch das PSS homöotrop orientiert. Die große Menge an Dotierstoff beeinflusst aber erheblich die Eigenschaften des FK-Mediums, daher ist die Anzahl an einsetzbaren Flüssigkristallkomponenten für eine derartige FK-Anzeige sehr begrenzt.

Langkettige Alkohole wurden bereits als Ausgangsprodukt für kovalent gebundene Ethergruppen auf Glasoberflächen verwendet (vgl. US 4022934 A), an denen eine vertikale Ausrichtung eines Flüssigkristalls beobachtet wurde. Die kovalente Anbindung des Alkohols an die Oberfläche erfordert eine Vorbehandlung der Substratoberfläche in einem Verarbeitungsschritt.

In der Druckschrift US 3,972,589 wird über langkettige Carbonsäuren, Nitrile und Amine berichtet, die bei einer Konzentration von 1-4 Gew.-% einen Imin-Flüssigkristall (MBBA) zwischen Glassubstraten homöotrop ausrichten. Über weitere solche Additive wie Gallussäurecetylester und Lecithin wird in der Druckschrift DE 2356889 A1 berichtet. In der Patentschrift US 3,848,966 wir über ein Additiv der Formel Octadecyl-CH(COOH)₂ berichtet, das bei ≤ 0,5 % Zugabe eine homöotrope Oberflächenausrichtung eines Flüssigkristalls induziert.

Auf das Problem der Stabilität der induzierten Orientierung wird in beiden Druckschriften nicht hingewiesen. Andere Lösungsansätze lassen sich aus EP 1 813 287, WO 02/068562 und Liquid Crystals 2007, 34, 4, S. 441 - 445 ableiten. In der Tat hat es sich gezeigt, dass nach Hitzebelastung der Grad der von dem Additiven induzierten homöotropen Orientierung mit steigender Temperatur rasch abnimmt.

Die bestehenden Ansätze um zu Displayanwendungen ohne Orientierungsschicht (Polyimidschicht etc.) zu gelangen sind daher noch nicht vollständig zufrieden stellend.

Ein erster Gegenstand der vorliegenden Erfindung ist ein FK-Medium enthaltend eine niedermolekulare flüssigkristalline Komponente und eine oder mehrere organische Verbindungen, die mindestens eine polare Ankergruppe, umfassend polare Strukturelemente mit Atomen ausgewählt aus N, O, S, und P, die eine nicht-kovalente Wechselwirkung mit der Substratoberfläche aus Glas oder Metalloxiden eingeht, und mindestens einen langkettigen unpolaren Rest mit mindestens 8 C-Atomen aufweisen, sowie eine polymerisierbare oder eine polymerisierte Komponente, wobei die polymerisierte Komponente erhältlich ist durch Polymerisation einer polymerisierbaren Komponente.

Die flüssigkristalline Komponente bzw. das FK-Medium können wahlweise eine positive oder eine negative dielektrischen Anisotropie aufweisen. Das erfindungsgemäße FK-Medium ist vorzugsweise nematisch.

Ein weiterer Gegenstand der vorliegenden Erfindung ist ein Verfahren zur Herstellung eines FK-Mediums indem man eine niedermolekulare flüssigkristalline Komponente mit einer oder mehreren organischen Verbindungen, die mindestens eine polare Ankergruppe und mindestens einen langkettigen unpolaren Rest mit mindestens 8 C-Atomen aufweisen, mischt und eine oder mehrere polymerisierbare Verbindungen und optional Hilfsstoffe zugibt. Die flüssigkristalline Komponente bzw. das FK-Medium können wahlweise eine positive oder eine negative dielektrische Anisotropie aufweisen.

Ein weiterer Gegenstand der vorliegenden Erfindung ist eine Flüssigkristallanzeige (FK-Anzeige) enthaltend eine Flüssigkristallzelle (FK-Zelle) mit zwei Substraten und mindestens zwei Elektroden, wobei mindestens ein Substrat lichtdurchlässig ist, sowie einer zwischen den Substraten befindlichen Schicht eines Flüssigkristallmediums (FK-Mediums) enthaltend eine niedermolekulare flüssigkristalline Komponente und eine oder mehrere organische Verbindungen, wobei die organische Verbindung dadurch gekennzeichnet ist, dass sie mindestens eine polare Ankergruppe aufweist und mindestens einen langkettigen unpolaren Rest mit mindestens 8 C-Atomen aufweist, und die geeignet ist, eine homöotrope (vertikale) Ausrichtung des FK-Mediums gegenüber den Substratoberflächen herbeizuführen. Das FK-Medium der FK-Anzeige enthält außerdem eine polymerisierte oder polymerisierbare Komponente, wobei die polymerisierte Komponente erhältlich ist durch Polymerisation einer oder mehrerer polymerisierbarer Verbindungen zwischen den Substraten der FK-Zelle im FK-Medium, optional unter Anlegen einer elektrischen Spannung an die Elektroden der Zelle oder unter der Wirkung eines anderen elektrischen Feldes. Mit dieser Komponente lassen sich das FK-Medium und insbesondere seine Orientierung stabilisieren und gegebenenfalls ein gewünschter 'pre-tilt' einstellen. Die FK-Anzeige ist bevorzugt so aufgebaut, dass sie auf mindestens einem Substrat mindestens eine oder zwei Elektroden aufweist.

Ein weiterer Gegenstand der Erfindung ist ein Verfahren zu Herstellung einer FK-Anzeige, vorzugsweise des PSA-VA-Typs, enthaltend eine FK-Zelle mit zwei Substraten und mindestens zwei Elektroden, wobei mindestens ein Substrat lichtdurchlässig ist, umfassend die Verfahrensschritte:
- Befüllen der Zelle mit einem FK-Medium wie vor und nachstehend oder in den Ansprüchen beschrieben, umfassend eine organische Verbindung die geeignet ist, eine homöotrope (vertikale) Ausrichtung des FK-Mediums gegenüber den Substratoberflächen herbeizuführen, und optional:
- Polymerisieren der enthaltenen polymerisierbaren Komponente, optional unter Anlegen einer Spannung an die Elektroden der Zelle oder unter der Wirkung eines elektrischen Feldes.

Die organische Verbindung, die mindestens eine polare Ankergruppe und mindestens einen langkettigen unpolaren Rest mit mindestens 8 C-Atomen aufweist (das Selbstorientierungsadditiv) wird im Flüssigkristall gelöst. Sie bewirkt eine homöotrope Ausrichtung des Flüssigkristalls gegenüber den Substratoberflächen (wie z.B. eine Oberfläche aus Glas oder mit ITO oder mit Polyimid beschichtetes Glas). Es scheint in Anbetracht der Untersuchungen zu dieser Erfindung so, dass die polare Ankergruppe in lockerer Wechselwirkung mit der Substratoberfläche tritt. Dadurch richten sich die organischen Verbindungen auf der Substratoberfläche aus und induzieren eine homöotrope Orientierung des Flüssigkristalls.

Das Selbstorientierungsadditiv wird vorzugsweise in einer Konzentration von weniger als 10 Gew.-%, besonders bevorzugt ≤ 8 Gew.-% und ganz besonders ≤ 5 Gew.-% eingesetzt. Es wird bevorzugt in einer Konzentration von mindestens 0,1 Gew.-% eingesetzt, bevorzugt mindestens 0,2 Gew.-%. Der Einsatz von 0,1 bis 2,5 Gew.-% des Selbstorientierungsadditivs führt in der Regel schon zu vollständig homöotroper Orientierung der FK-Schicht bei den üblichen Zelldicken (3 bis 4 µm).

Die polare Ankergruppe umfasst bevorzugt keine polymerisierbare Gruppen wie z.B. Acrylatgruppen.

Die polare Ankergruppe des Selbstorientierungsadditivs besteht bevorzugt aus einer Gruppe, die eine nicht-kovalente Wechselwirkung mit der Substratoberfläche aus Glas oder Metalloxiden eingeht. Geeignete Gruppen sind polare Gruppen umfassend polare Strukturelemente mit Atomen ausgewählt aus N, O, S, und P. Die Gruppen sollten gleichzeitig ausreichend stabil für den Einsatz als LC-Medium sein. Sie sollen außerdem die VHR-Werte ('voltage holding ratio') des FK-Mediums in der FK-Zelle und die Langzeitstabilität ('reliability') nur gering beeinflussen. Bevorzugt sind ein oder mehrere, bevorzugt zwei oder mehr, dieser Heteroatome in der Ankergruppe enthalten.

Die polare Ankergruppe besteht besonders bevorzugt aus wenigstens zwei Strukturelementen enthaltend Heteroatome ausgewählt aus (N, O), und kovalenten, verknüpfenden Strukturen zwischen den Heteroatomen und zwischen einem oder mehreren der Heteroatome und dem Rest des Moleküls der Formel I (ohne die Ankergruppe). Die polare Ankergruppe umfasst bevorzugt mindestens eine OH-Struktur oder ein N-Atom in einer primären, sekundären oder tertiären Amingruppe.

Die Selbstorientierungsadditive besitzen bevorzugt eine oder zwei langkettige unpolare Reste, bevorzugt einen dieser Reste. Unter den Begriff "langkettiger unpolarer Rest" fallen bevorzugt aliphatische Kohlenwasserstoffreste, auch verzweigte, mit einer längsten Kettenlänge von mindestens 8 C-Atomen, wobei bestimmte funktionelle Gruppen in der Kette mit umfasst sind. Der Rest kann auch ungesättigt und/oder halogeniert (mit Cl, F) sein. In der langkettigen Alkylgruppe können eine oder mehrere nicht benachbarte und nicht endständige CH₂-Gruppen durch -O-, -(CO)- oder eine Estergruppe ersetzt sein. Weiterhin kann eine CH₂-Gruppe durch eine Cycloalkylengruppe mit 3 bis 8 C-Atomen ersetzt sein.

Der "langkettige unpolare Rest" hat höchstens 30 C-Atome. Die längste Kette hat eine maximale Kettenlänge von 20 C-Atomen. Bevorzugt hat der Rest 8 bis 18 C-Atome. Bevorzugt ist der Rest eine lineare Alkylkette mit 10 bis 16 C-Atomen, wobei höchstens 5 C-Atome in Nebenketten angeschlossen sind.

Das Selbstorientierungsadditiv ist bevorzugt eine organische Verbindung mit einer relativen Molmasse ≥ 130 g/mol, damit die Substanzen weniger flüchtig sind. Besonders bevorzugt weist es eine relative Molmasse ≥ 150 g/mol auf, um einen noch stabileren Effekt der Selbstausrichtung zu erzielen. Als Obergrenze hat es bevorzugt eine relative Molmasse von ≤ 500 g/mol.

Das Selbstorientierungsadditiv hat besonders bevorzugt eine Struktur der Formel I:

(R¹)ₙ-R²

wobei
- R¹: geradkettiges oder verzweigtes Alkyl mit 8 bis 20 C-Atomen, worin auch eine oder mehrere nicht benachbarte CH₂-Gruppen durch -CH=CH-, -CF=CH-, -CH=CF- oder -C≡C-ersetzt sein können, worin eine CH₂-Gruppe durch eine Cycloalkylengruppe mit 3 bis 8 C-Atomen und worin auch ein oder mehrere H-Atome durch F oder Cl, ersetzt sein können,
- R²: eine polare Ankergruppe, und
- n: 1 oder 2, bevorzugt 1,
bedeutet.

Der Rest R¹ umfasst bevorzugt 8 bis 20 C-Atome. Besonders bevorzugt umfasst er keine Ringe und bedeutet:
- R¹: geradkettiges oder verzweigtes Alkyl mit 10 bis 18 C-Atomen, worin auch eine oder mehrere nicht benachbarte CH₂-Gruppen durch -CH=CH-, -CF=CH-, -CH=CF-, -C≡C- oder -O-ersetzt sein können, und worin auch ein oder mehrere H-Atome durch F oder Cl, ersetzt sein können.

Der Rest R² in Formel I umfasst beispielsweise Alkohole, primäre, sekundäre und tertiare Amine, Ketone, Carbonsäuren, Thiole, Ester und (Thio-)Ether, sowie Kombinationen daraus. Die Struktur kann dabei linear, verzweigt, cyclisch oder eine Kombination davon sein.

Die Gruppe R² umfasst in den vorangehenden Formeln bevorzugt eine Gruppe der Formel (A1)

-Sp-[X²-Z³-]ₖX¹ (A1)

worin
- Sp: eine Einfachbindung oder eine Abstandsgruppe definiert wie Sp^{a} wie nachstehend für Formel M definiert, bevorzugt eine Abstandsgruppe Sp"-X" wie für Formel M unten definiert, die über die Gruppe X" mit dem Rest R¹ verbunden ist, wobei Sp" ganz besonders eine Einfachbindung oder ein Alkylen mit 1 bis 12 C-Atomen bedeutet,
- X¹: eine Gruppe -NH₂, -NHR¹¹ -NR¹¹₂, -OR¹¹, -OH, -(CO)OH oder eine Gruppe der Formeln 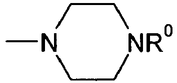 oder 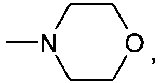
- R⁰: H oder Alkyl mit 1 bis 12 C-Atomen,
- X²: jeweils unabhängig -NH-, -NR¹¹-, -O- oder eine Einfachbindung,
- Z³: jeweils unabhängig eine Alkylengruppe mit 1-15 C-Atomen, carbocyclische Ringe mit 5 oder 6 C-Atomen, oder Kombinationen aus einem oder mehreren Ringen und Alkylengruppen, worin jeweils Wasserstoff durch -OH, OR¹¹, -(CO)OH, -NH₂, -NHR¹¹, -NR¹¹₂, oder Halogen (bevorzugt F, Cl) ersetzt sein kann,
- R¹¹: jeweils unabhängig einen halogenierten oder unsubstituierten Alkylrest mit 1 bis 15 C-Atomen, wobei in diesem Rest auch eine oder mehrere CH₂-Gruppen jeweils unabhängig voneinander durch -C≡C-, -CH=CH-, -(CO)O-, -O(CO)-, -(CO)- oder -O- so ersetzt sein können, dass O-Atome nicht direkt miteinander verknüpft sind, und wobei zwei Reste R¹¹ miteinander zu einem Ring verknüpft sein können, oder H, und
- k: 0 bis 3
bedeutet.

Besonders bevorzugt umfasst die Gruppe R² in den vorangehenden Formeln eine (N/O)-heteroatomhaltige Gruppe der Teilformel (A2) 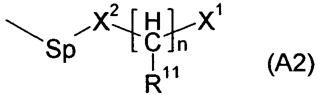 worin
Sp, X¹, X²
   - und R¹¹: wie oben für R² (Formel A1) definiert sind, und
   - n: 1, 2 oder 3,
   bedeutet.

Besonders bevorzugt bedeutet die Gruppe R² genau eine Gruppe der Formeln (A1) bzw. (A2).

Besonders bevorzugte stickstoffhaltige Gruppen R² sind ausgewählt aus -NH₂, -NH-(CH₂)ₙ₃H, -(CH₂)ₙ-NH₂, -(CH₂)ₙ-NH-(CH₂)ₙ₃H, -NH-(CH₂)ₙ-NH₂, -NH-(CH₂)ₙ-NH-(CH₂)ₙ₃H, -(CH₂)ₙ₁-NH-(CH₂)ₙ₂-NH₂, -(CH₂)ₙ₁-NH-(CH₂)ₙ₂-NH-(CH₂)ₙ₃H, -O-(CH₂)ₙ-NH₂, -(CH₂)ₙ₁-O-(CH₂)ₙ-NH₂, -(CH₂)ₙ₁-NH-(CH₂)ₙ₂-OH, -O-(CH₂)ₙ₁-NH-(CH₂)ₙ₂-NH₂, -O-(CH₂)ₙ₁-NH-(CH₂)ₙ₂-OH, -(CH₂)ₙ₁-NH-(CH₂)ₙ₂-NH-(CH₂)ₙ₃H,
worin n, n1, n2 und n3 unabhängig 1, 2, 3, 4, 5, 6, 7, 8, 9, 10, 11 oder 12, insbesondere 1, 2, 3 oder 4 bedeuten. Aufgrund der besseren Löslichkeit in hochpolaren flüssigkristallinen Medien sind die Gruppen -OH und -NH₂ besonders bevorzugt. Unter den sauerstoffhaltigen Funktionen in den Ankergruppen ist die OH-Gruppe aufgrund der hohen Ankerkraft bevorzugt gegenüber den Funktionen -O-, -(CO)- oder -(CO)O-. Die mehrfach mit Heteroatomen (N, O) ausgestatteten Gruppen besitzen eine besondere Stärke als Ankergruppe. Sie können in kleineren Konzentrationen eingesetzt werden.

Besonders bevorzugte stickstofffreie Gruppen R² sind ausgewählt aus -OH, -(CH₂)ₙ-OH, -O-(CH₂)ₙ-OH, -[O-(CH₂)ₙ₁-]ₙ₂-OH, -(CO)OH, -(CH₂)ₙ-(CO)OH, -O-(CH₂)ₙ-(CO)OH oder -[O-(CH₂)ₙ₁-]ₙ₂-(CO)OH, worin n, n1 und n2 unabhängig 1, 2, 3, 4, 5, 6, 7, 8, 9, 10, 11 oder 12, insbesondere 1, 2, 3 oder 4 bedeuten.

"Halogen" steht im Zusammenhang der vorliegenden Erfindung für Fluor, Chlor, Brom beziehungsweise Iod, bevorzugt für Fluor oder Chlor.

Besonders bevorzugte Verbindungen der Formel I sind ausgewählt aus den folgenden beispielhaften Verbindungen, welche gleichzeitig besonders bevorzugte Gruppen R¹ und R² der Selbstorientierungsadditive wiedergeben:

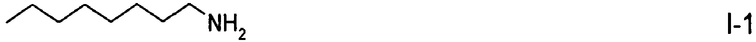

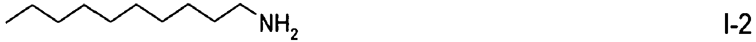

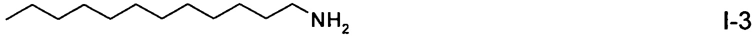

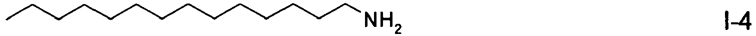

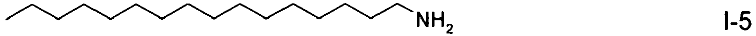

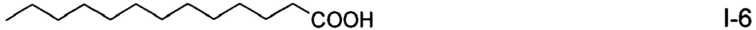

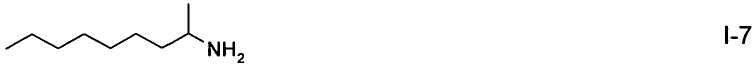

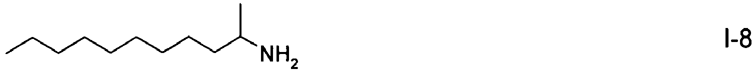

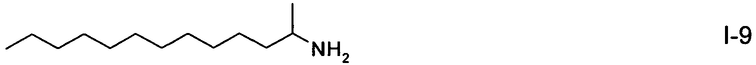

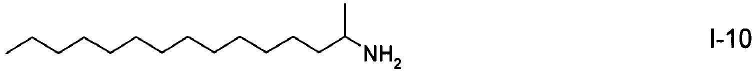

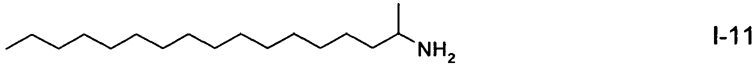

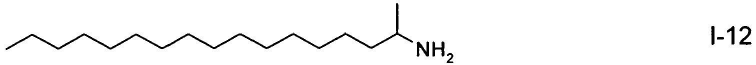

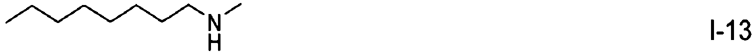

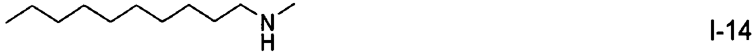

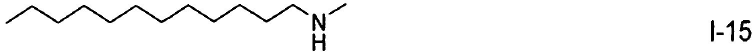

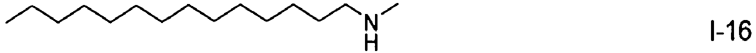

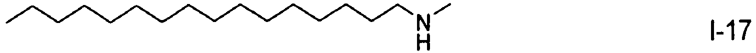

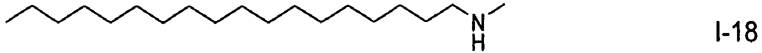

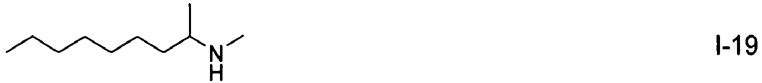

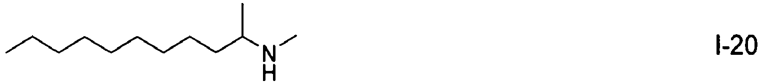

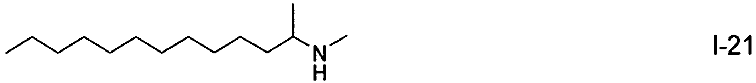

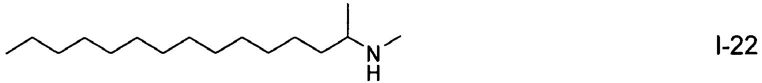

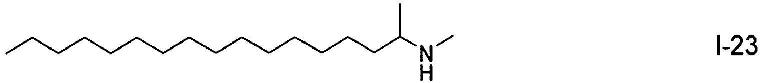

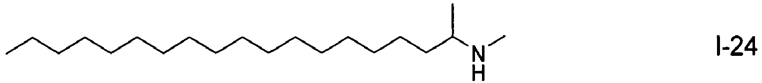

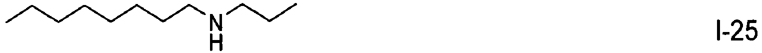

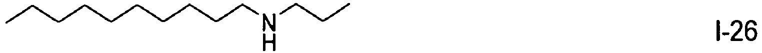

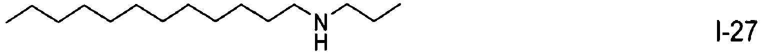

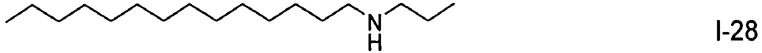

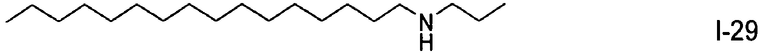

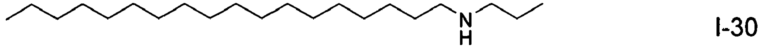

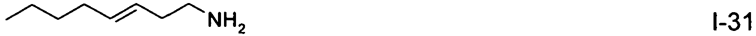

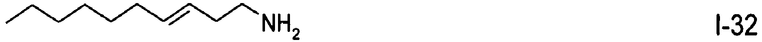

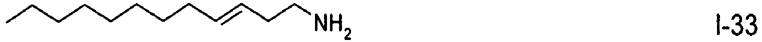

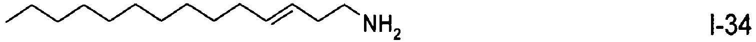

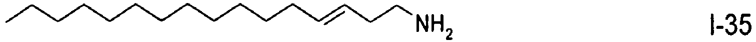

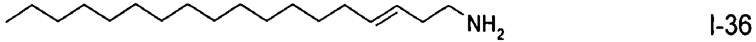

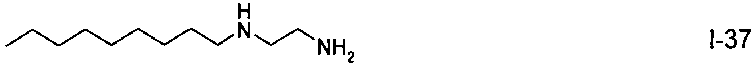

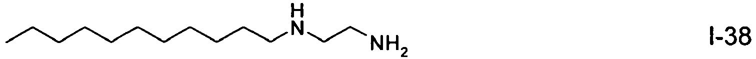

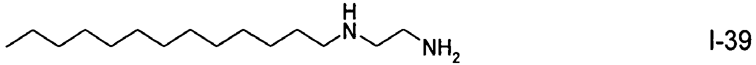

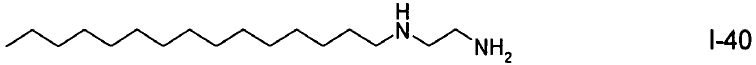

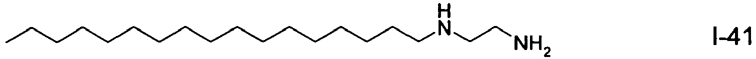

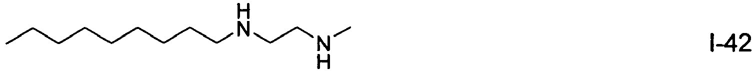

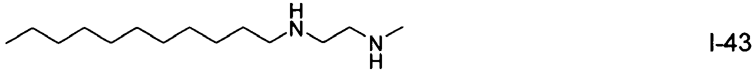

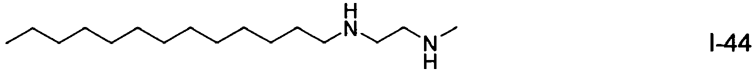

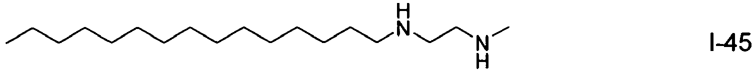

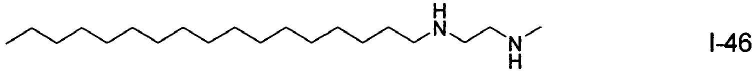

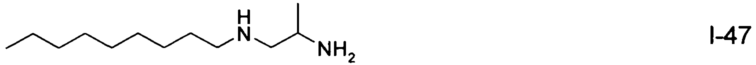

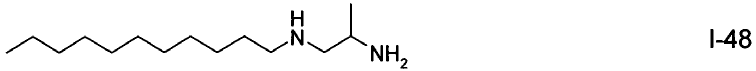

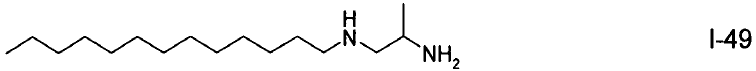

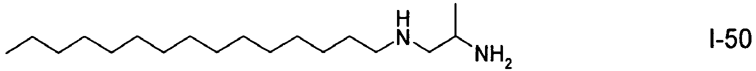

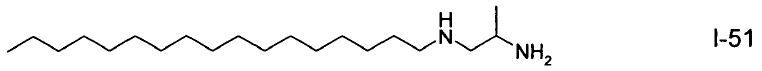

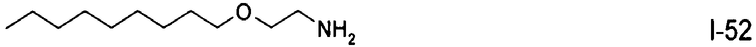

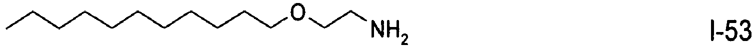

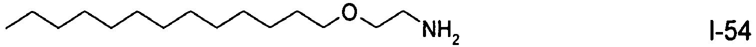

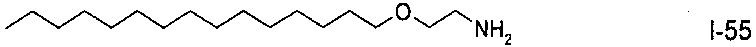

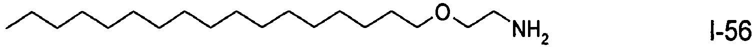

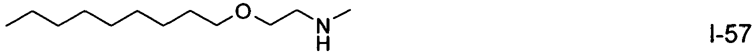

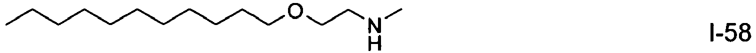

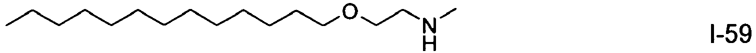

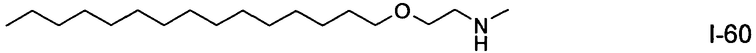

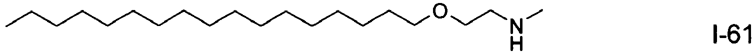

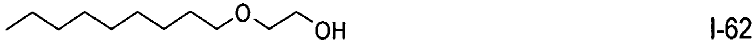

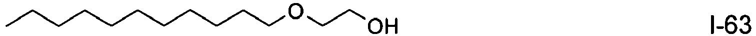

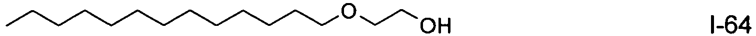

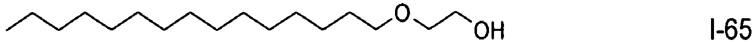

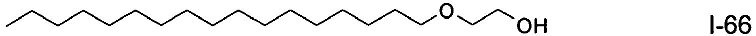

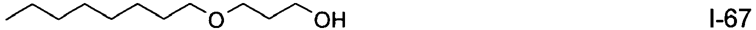

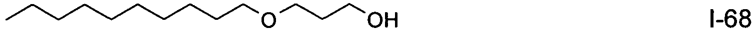

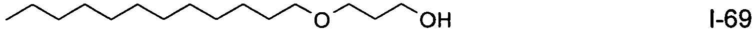

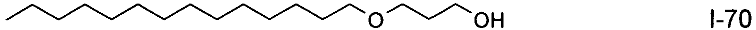

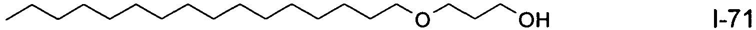

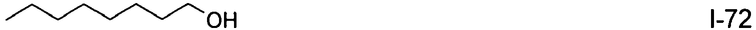

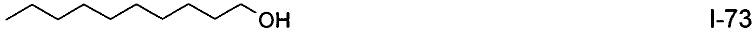

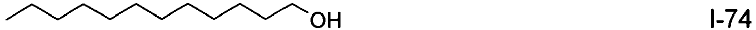

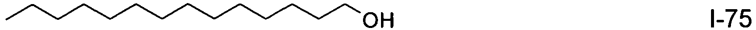

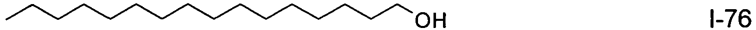

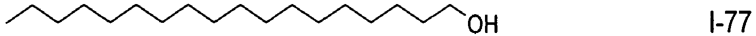

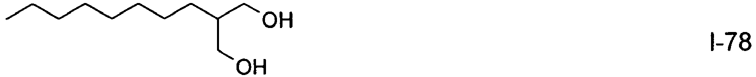

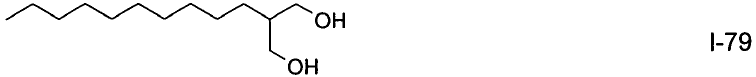

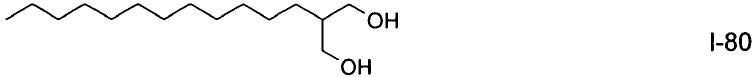

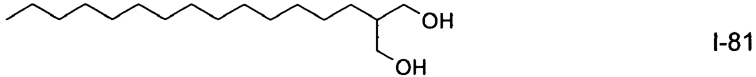

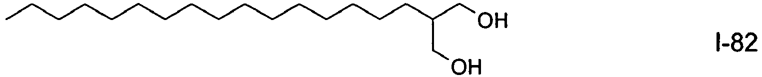

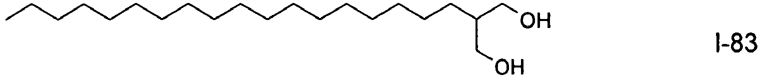

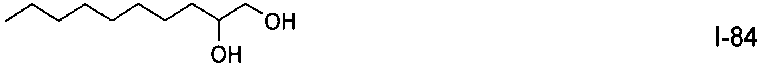

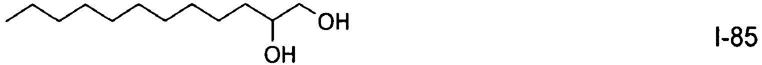

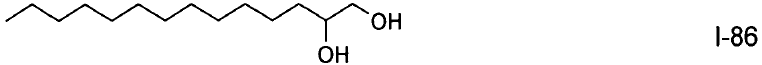

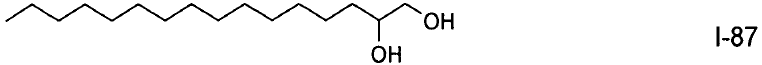

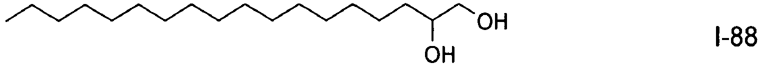

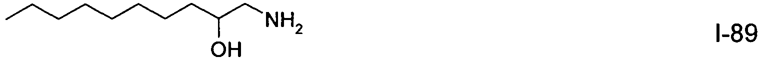

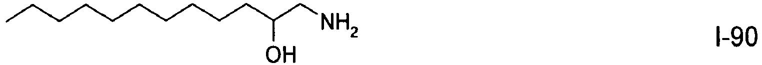

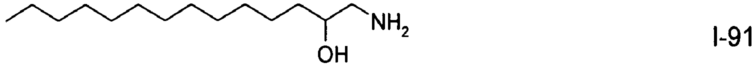

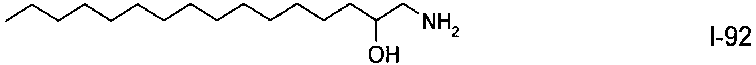

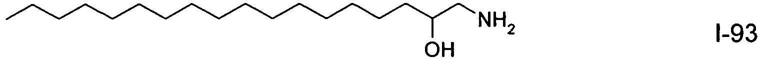

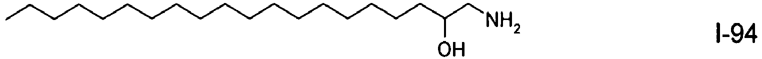

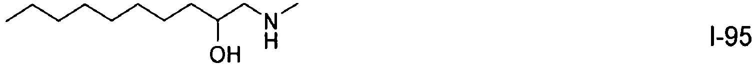

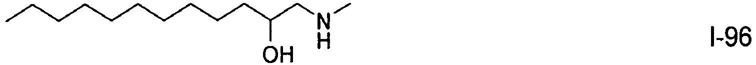

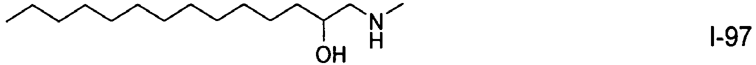

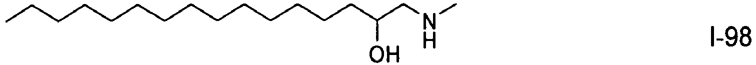

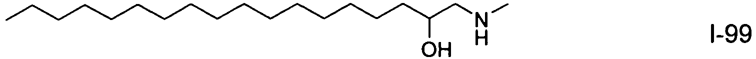

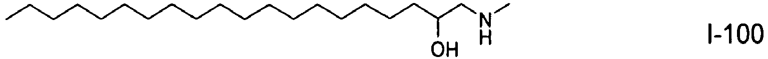

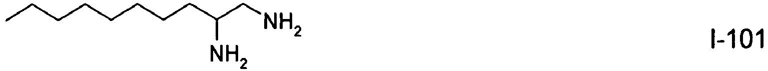

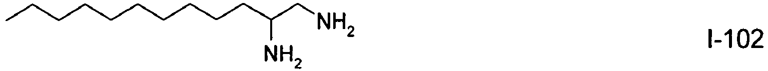

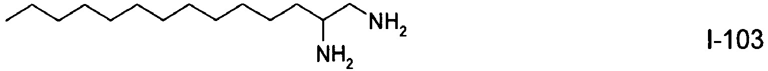

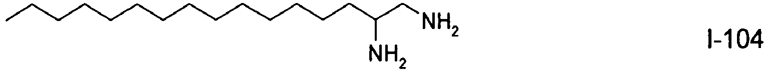

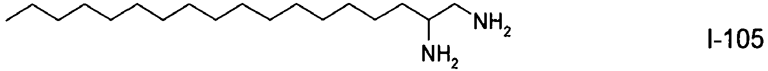

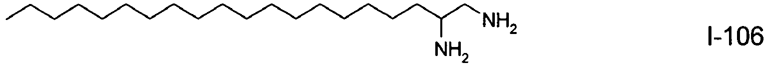

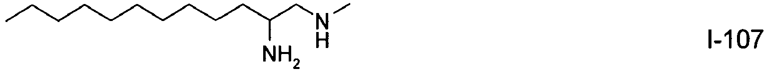

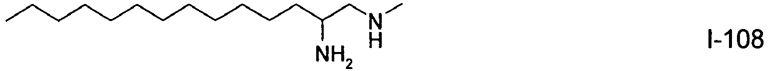

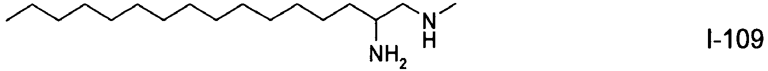

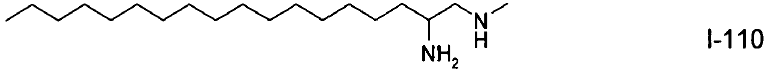

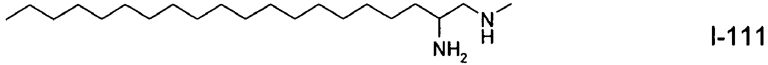

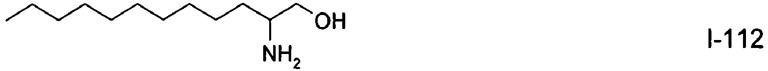

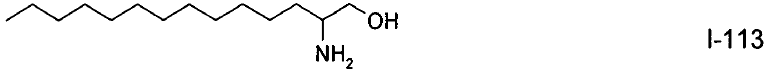

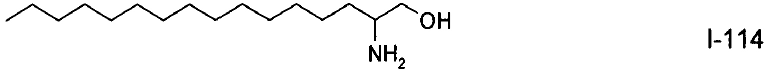

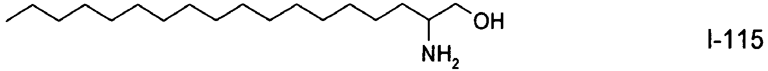

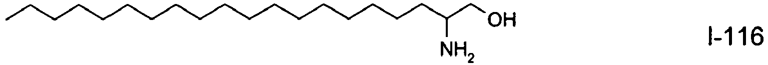

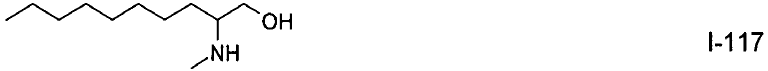

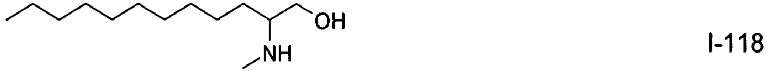

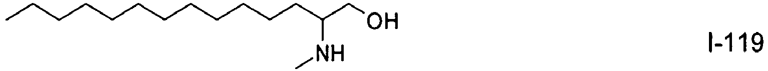

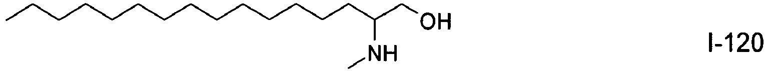

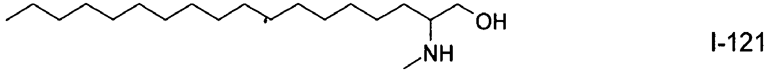

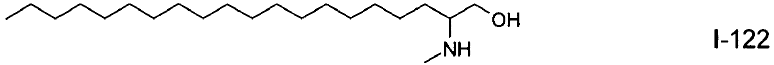

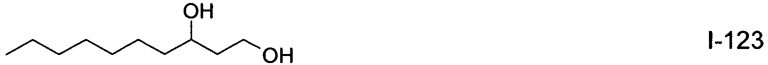

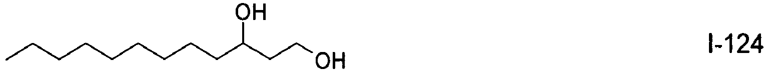

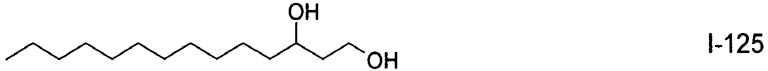

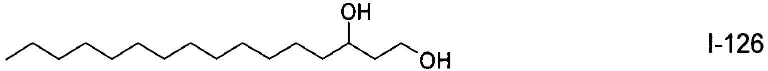

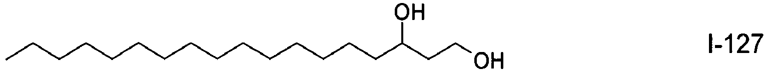

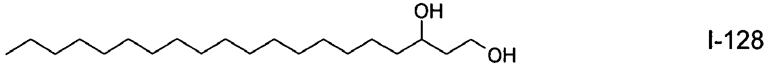

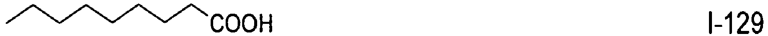

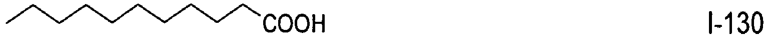

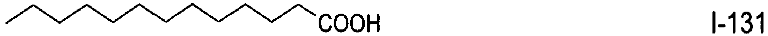

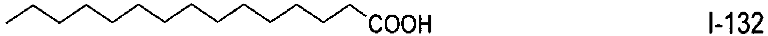

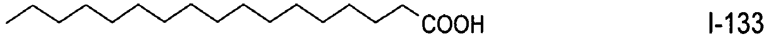

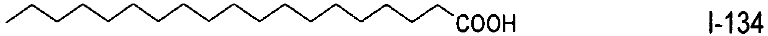

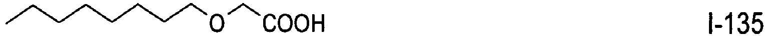

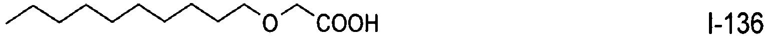

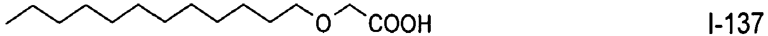

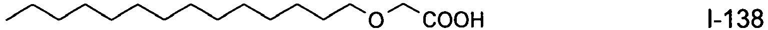

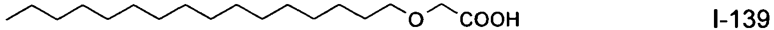

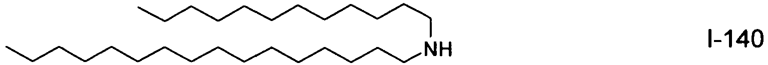

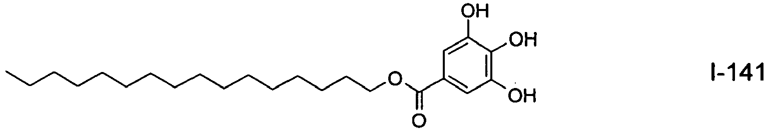

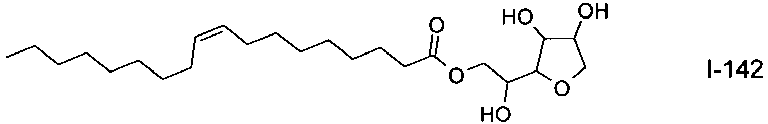

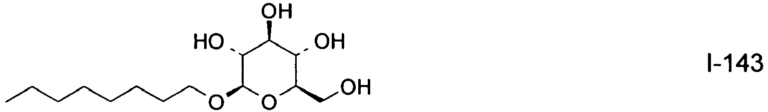

In einer weiteren bevorzugten Ausführungsform der Erfindung werden organische Verbindungen mit der polaren Ankergruppe bzw. Verbindungen der Formel I verwendet, die als weitere Funktionalisierung neben dem polaren Anker eine oder mehrere polymerisierbare Gruppen aufweisen (vergleiche Gruppe P^{a} oder P^{b} unten). Bevorzugte polymerisierbare Gruppen sind Gruppen wie Acrylat-, Methacrylat-, Fluoracrylat-, Oxetan-, Vinyloxy- oder Epoxygruppe, besonders bevorzugt Acrylat und Methacrylat. Durch den Einschluss der Verbindungen der Formel I in die Polymerisation werden die Verbindungen nachhaltig immobilisiert, wodurch sie ihre Funktion beibehalten.

Ein Vorteil der erfindungsgemäßen FK-Anzeigen ist, dass die Anzeige ohne die übliche Polyimid-Orientierungsschicht die gewünschte homöotrope Orientierung erreicht. Dadurch vereinfacht sich die Herstellung der FK-Anzeigen erheblich. Diese Orientierung bleibt in der Regel auch bei höherer Temperatur erhalten.

Durch die Polymerstabilisierung wird die homöotrope Orientierung zusätzlich stabilisiert; dadurch wird eine verbesserte Temperaturstabilität des elektrooptischen Schaltens erreicht. Die homöotrope Orientierung bleibt auch bei höheren Temperaturen innerhalb des Arbeitsbereichs des Mediums (z.B. 70 °C) erhalten. Auch die Langzeitstabilität der homöotropen Orientierung wird durch die polymerisierbare Komponente verbessert. Eine Temperaturbelastung jenseits des Klärpunktes über mehrere Tage führt zu keiner Veränderung der Vororientierung, auch nicht bei höheren Temperaturen. Die erfindungsgemäßen, polymerstabilisierten Anzeigen zeichnen sich durch verbesserte Schaltzeiten (Pretiltwinkel durch Polymerisation unter Anlegen von Spannung) und besseres Kontrastverhältnis (Temperaturabhängigkeit des Kontrasts) aus. Die vorzugsweise enthaltene polymerisierte Komponente kann gleichzeitig als eine Passivierungsschicht dienen, die die Zuverlässigkeit (die sog. 'reliability') des Displays erhöht, da sie die Elektrodenoberfläche von dem flüssigkristallinen Medium isoliert.

Die Selbstorientierungsadditive bzw. die Verbindungen der Formel I beeinflussen dank der relativ kleinen Menge die Eigenschaften der FK-Medien praktisch unerheblich. Daher kann eine breite Vielfalt an Flüssigkristall-Komponenten in der FK-Anzeige verwendet werden.

Die erfindungsgemäßen FK-Anzeigen besitzen daher bevorzugt keine Orientierungsschicht ('alignment layer') für homöotrope Ausrichtung auf den Oberflächen der FK-Zelle, d.h. sie sind polyimidfrei. Für den Fall, dass die FK-Anzeigen dennoch ein- oder beidseitig Orientierungsschichten aufweisen, so bestehen diese vorzugsweise aus Polyimid. Die Orientierungsschichten sind vorzugsweise nicht gerieben. Damit entfällt das bisher notwendige Reiben der Orientierungsschicht, ein besonders aufwändiger Schritt in der Herstellung. Eine ungeriebene Polyimidschicht kann dennoch als Passivierungsschicht dienen.

Die erfindungsgemäßen FK-Anzeigen verwenden in einer besonderen Ausführungsform ein FK-Medium mit negativer dielektrischer Anisotropie (Δ_{ε} ≤ -1,5). Entsprechende flüssigkristalline Medien sind ebenfalls bevorzugt. In der Regel handelt es sich dabei um eine VA- Anzeige mit auf gegenüberliegenden Seiten der FK-Zelle angeordneten Elektroden, bevorzugt mit Elektroden, die so angeordnet sind, dass sie ein überwiegend senkrecht zur Substratoberfläche orientiertes elektrisches Feld erzeugen können. Typische verwendete Substrate sind die, die aus dem VAN-mode und PSA-VA verwendet werden (Strukturierung der Elektroden ist daher möglich).

Die erfindungsgemäßen FK-Anzeigen verwenden in einer besonderen Ausführungsform ein FK-Medium mit positiver dielektrischer Anisotropie (Δε ≥ 1,5). Entsprechende flüssigkristalline Medien sind ebenfalls bevorzugt. In der Regel handelt es sich dabei um eine VA-IPS-Anzeige mit auf einer Seite der FK-Zelle angeordneten Elektroden, bevorzugt mit Elektroden, die so angeordnet sind, dass sie ein überwiegend planar zur Substratoberfläche orientiertes elektrisches Feld erzeugen können, z. B. Interdigitalelektroden (In-plane Ansteuerelektroden-Konfiguration kammförmiger Struktur).

Die FK-Anzeigen sind in der üblichen Art und Weise mit einem oder mehreren Polarisator(en) versehen, die den Schaltvorgang des FK-Mediums sichtbar machen.

Die polymerisierte Komponente der FK-Zelle (Polymer) ist erhältlich durch Polymerisieren einer polymerisierbaren Komponente (Monomere). In der Regel sind die Monomere zunächst in dem FK-Medium gelöst und werden in der FK-Zelle polymerisiert, nachdem sich eine homöotrope Ausrichtung oder ein hoher Tiltwinkel des FK-Medium eingestellt hat. Zur Unterstützung der gewünschten Ausrichtung kann eine Spannung an die FK-Zelle angelegt werden. Im einfachsten Fall erübrigt sich eine solche Spannung und die gewünschte Ausrichtung stellt sich allein durch die Beschaffenheit des FK-Mediums und der Zellgeometrie ein.

Die geeigneten Monomere (polymerisierbare Komponente) des FK-Mediums sind solche aus dem Stand der Technik, die für PSA-VA-Anzeigen verwendet werden, insbesondere polymerisierbare Verbindungen der unten genannten Formel M und/oder der Formeln M1 bis M22. Die erfindungsgemäßen FK-Medien zur Verwendung in PSA-Anzeigen enthalten vorzugsweise < 5 Gew.-%, besonders bevorzugt < 1 Gew.-% und ganz besonders bevorzugt < 0,5 Gew.-% an polymerisierbaren Verbindungen, insbesondere polymerisierbaren Verbindungen der unten genannten Formeln. Um einen ausreichenden Effekt zu erreichen werden bevorzugt 0,2 Gew.-% oder mehr eingesetzt. Die optimale Menge ist abhängig von der Schichtdicke.

Geeignete Monomere der polymerisierbaren Komponente des FK-Mediums werden durch die folgende Formel M beschrieben:

P^{a}-(Sp^{a})ₛ₁-A²-(Z¹-A¹)ₙ-(Sp^{b})ₛ₂-P^{b} M

worin die einzelnen Reste folgende Bedeutung besitzen:
- P^{a}, P^{b}: jeweils unabhängig voneinander eine polymerisierbare Gruppe,
- Sp^{a}, Sp^{b}: bei jedem Auftreten gleich oder verschieden eine Abstandsgruppe,
- s1, s2: jeweils unabhängig voneinander 0 oder 1,
- A¹, A²,: jeweils unabhängig voneinander einen Rest ausgewählt aus folgenden Gruppen

a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch F ersetzt sein können,
b) der Gruppe bestehend aus 1,4-Phenylen und 1,3-Phenylen, worin auch eine oder zwei CH-Gruppen durch N ersetzt sein können und worin auch ein oder mehrere H-Atome durch L ersetzt sein können,
c) der Gruppe bestehend aus Tetrahydropyran-2,5-diyl, 1,3-Dioxan-2,5-diyl, Tetrahydrofuran-2,5-diyl, Cyclobut-1,3-diyl, Piperidin-1,4-diyl, Thiophen-2,5-diyl und Selenophen-2,5-diyl, welche auch ein oder mehrfach durch L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 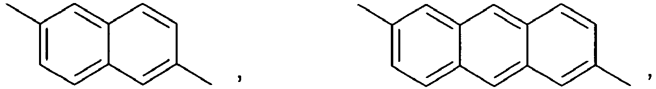 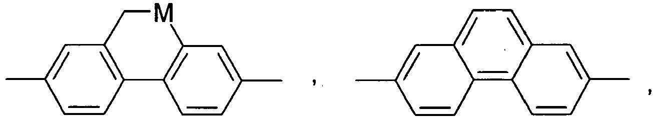 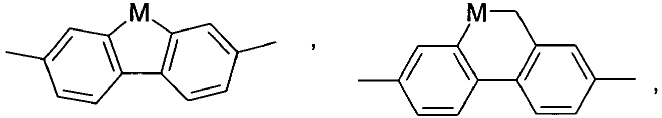 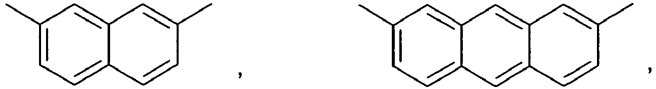 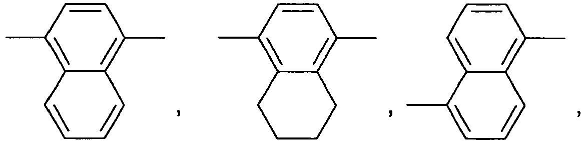 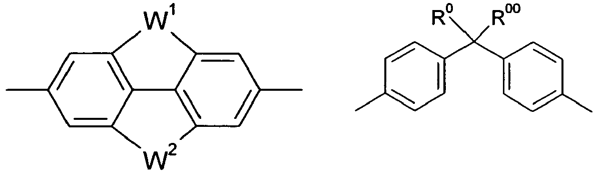 wobei in diesen Resten auch ein oder mehrere H- Atome durch L ersetzt sein können, und/oder eine oder mehrere Doppelbindungen durch Einfachbindungen ersetzt sein können, und/oder ein oder mehrere CH-Gruppen durch N ersetzt sein können,
   - n: 0, 1, 2 oder 3,
   - Z¹: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{c}R^{d})-, -CH₂CF₂-, -CF₂CF₂-, oder eine Einfachbindung,
   - L: bei jedem Auftreten gleich oder verschieden F, Cl, CN, SCN, SF₅ oder geradkettiges oder verzweigtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
   - R⁰, R⁰⁰: jeweils unabhängig voneinander H, F oder geradkettiges oder verzweigtes Alkyl mit 1 bis 12 C-Atomen, worin auch ein oder mehrere H-Atome durch F ersetzt sein können,
   - M: -O-, -S-, -CH₂-, -CHY¹- oder -CY¹Y²-,
   - Y¹, und Y²: jeweils unabhängig voneinander eine der oben für R⁰ angegebenen Bedeutungen, Cl oder CN, und vorzugsweise H, F, Cl, CN, OCF₃ oder CF₃,
   - W¹, W²: jeweils unabhängig voneinander -CH₂CH₂-, -CH=CH-, -CH₂-O-, -O-CH₂-, -C(R^{c}R^{d})- oder -O-, und
   - R^{c} und R^{d}: jeweils unabhängig voneinander H oder Alkyl mit 1 bis 6 C-Atomen, vorzugsweise H, Methyl oder Ethyl,
   bedeuten.

Die polymerisierbare Gruppe P^{a,b} ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Bevorzugte Gruppen P^{a,b} sind ausgewählt aus der Gruppe bestehend aus CH₂=CW¹-CO-O-, CH₂=CW¹-CO-, 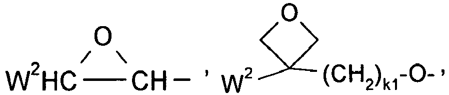 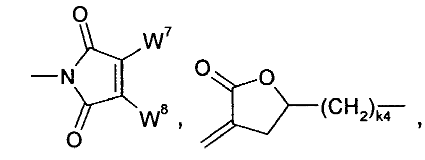 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einem oder mehreren, von P-Sp- verschiedenen Resten L wie oben definiert substituiert ist, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Besonders bevorzugte Gruppen P^{a,b} sind ausgewählt aus der Gruppe bestehend aus CH₂=CW¹-CO-O-, CH₂=CW¹-CO-, 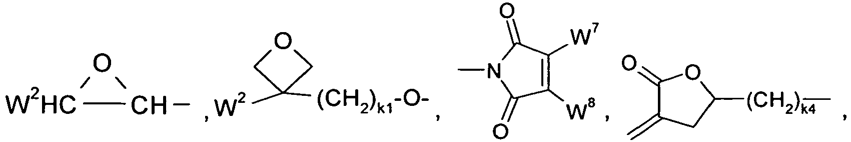 CH₂=CW²-O-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Ganz besonders bevorzugte Gruppen P^{a,b} sind ausgewählt aus der Gruppe bestehend aus CH₂=CW¹-CO-O-, insbesondere CH₂=CH-CO-O-, CH₂=C(CH₃)-CO-O- und CH₂=CF-CO-O-, ferner CH₂=CH-O-, (CH₂=CH)₂CH-O-CO-, (CH₂=CH)₂CH-O-, 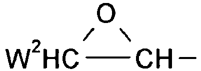 und 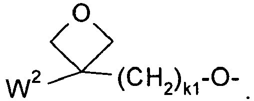 Ganz besonders bevorzugte Gruppen P^{a,b} sind daher ausgewählt aus der Gruppe bestehend aus Acrylat-, Methacrylat-, Fluoracrylat-, ferner Vinyloxy-, Chloracrylat-, Oxetan- und Epoxygruppen, und unter diesen bevorzugt eine Acrylat- oder Methacrylatgruppe.

Bevorzugte Abstandsgruppen Sp^{a,b} sind ausgewählt aus der Formel Sp"-X", so dass der Rest P^{a/b}-Sp^{a/b}- der Formel P^{a/b}-Sp"-X"- entspricht, wobei
- Sp": Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -NH-, -N(R⁰)-, -Si(R⁰⁰R⁰⁰⁰)-, -CO-, -CO-O-, -O-CO-, -O-CO-O-, -S-CO-, -CO-S-, -N(R⁰⁰)-CO-O-, -O-CO-N(R⁰⁰)-, -N(R⁰⁰)-CO-N(R⁰⁰)-, -CH=CH-oder -C=C- ersetzt sein können, dass O- und/oder S-Atome nicht direkt miteinander verknüpft sind,
- X": -O-, -S-, -CO-, -CO-O-, -O-CO-, -O-CO-O-, -CO-N(R⁰⁰)-, -N(R⁰⁰)-CO-, -N(R⁰⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³⁻, -C≡C-, -CH=CH-CO-O-, -O-CO-CH=CH- oder eine Einfachbindung
bedeutet,
- R⁰⁰ und R⁰⁰⁰: jeweils unabhängig voneinander H oder Alkyl mit 1 bis 12 C-Atomen bedeuten, und
- Y² und Y³: jeweils unabhängig voneinander H, F, Cl oder CN
bedeuten.

X' ist vorzugsweise -O-, -S -CO-, -COO-, -OCO-, -O-COO-, -CO-NR⁰-, -NR⁰-CO-, -NR⁰-CO-NR⁰- oder eine Einfachbindung.

Typische Abstandsgruppen Sp" sind beispielsweise -(CH₂)ₚ₁-, -(CH₂CH₂O)_{q1}-CH₂CH₂-, -CH₂CH₂-S-CH₂CH₂-, -CH₂CH₂-NH-CH₂CH₂- oder -(SiR⁰⁰R⁰⁰⁰-O)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -Sp"-X"- sind -(CH₂)ₚ₁-, -(CH₂)ₚ₁-O-, -(CH₂)ₚ₁-O-CO-, -(CH₂)ₚ₁-O-CO-O-, worin p1 und q1 die oben angegebene Bedeutung haben.

Besonders bevorzugte Gruppen Sp" sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

Besonders bevorzugte Monomere sind die folgenden: 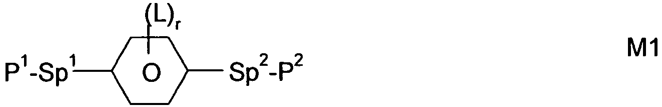 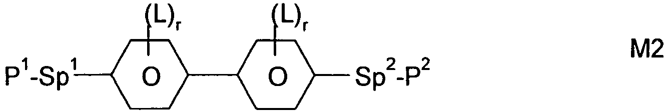 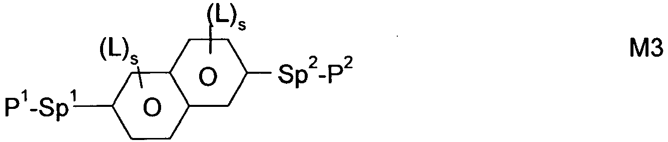 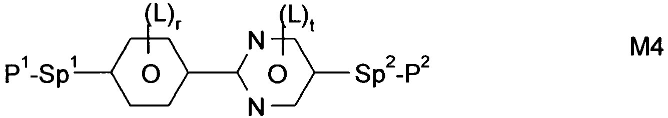 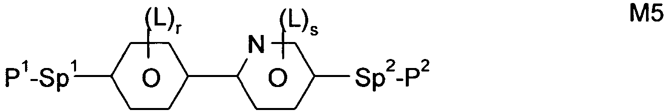 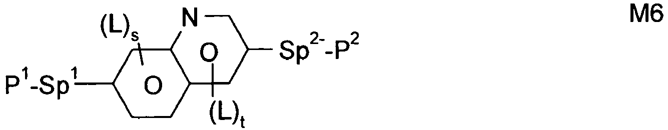 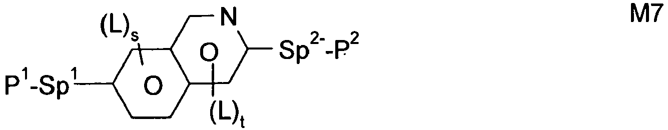 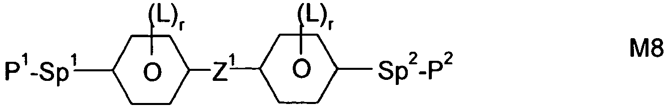 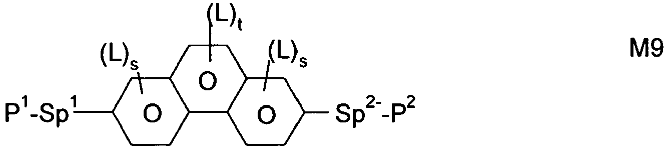 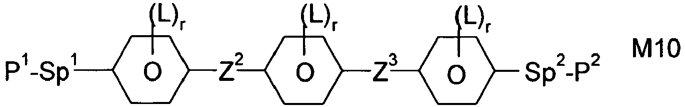 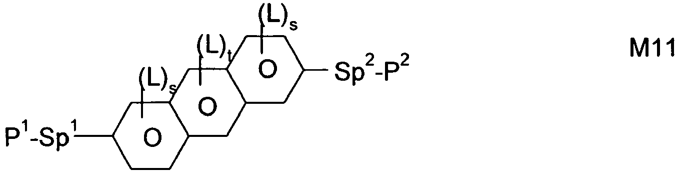 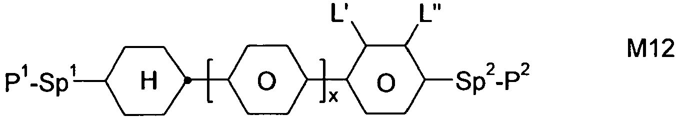 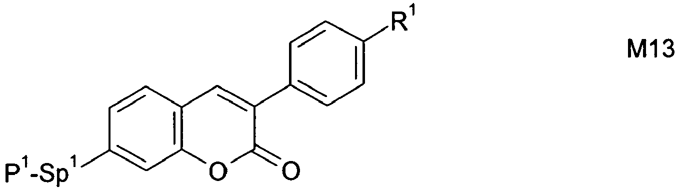 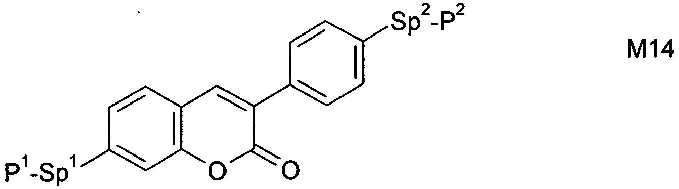 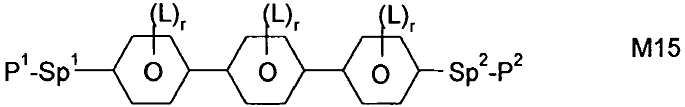 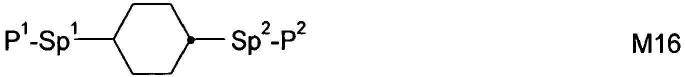 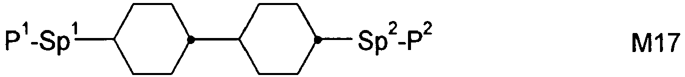 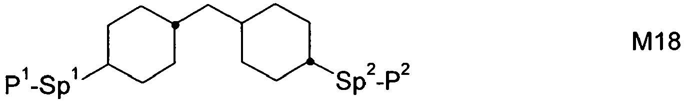 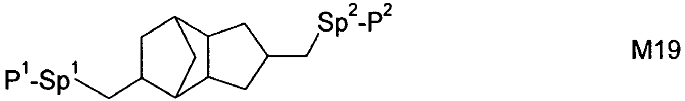 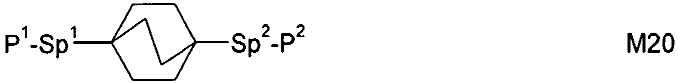 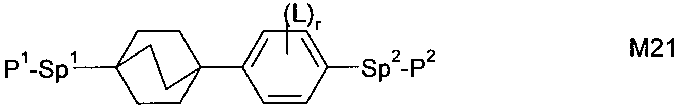 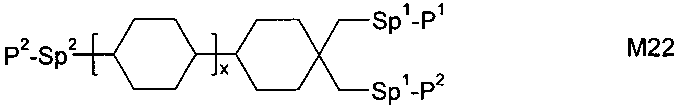 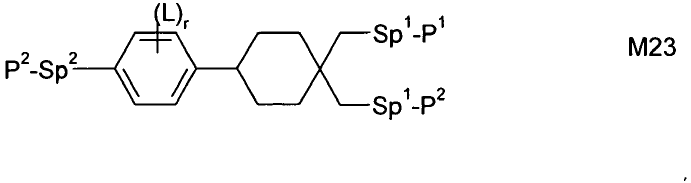 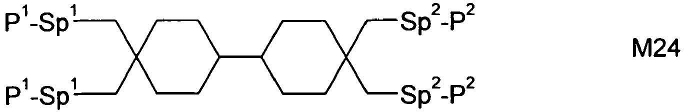 worin die einzelnen Reste folgende Bedeutung besitzen:
- P¹ und P²: jeweils unabhängig voneinander eine polymerisierbare Gruppe wie für Formel I definiert, bevorzugt eine Acrylat-, Methacrylat-, Fluoracrylat-, Oxetan-, Vinyloxy- oder Epoxygruppe,
- Sp¹ und Sp²: jeweils unabhängig voneinander eine Einfachbindung oder eine Abstandsgruppe, vorzugsweise mit einer der vor- und nachstehend für Sp^{a} angegebenen Bedeutungen, und besonders bevorzugt -(CH₂)ₚ₁-, -(CH₂)ₚ₁-O-, -(CH₂)ₚ₁-CO-O-oder -(CH₂)ₚ₁-O-CO-O-, worin p1 eine ganze Zahl von 1 bis 12 ist, und wobei in den letztgenannten Gruppen die Verknüpfung zur benachbarten Ring über das O-Atom erfolgt, wobei auch einer oder mehrere der Reste P¹-Sp¹- und P²-Sp²-einen Rest R^{aa} bedeuten können, mit der Maßgabe dass mindestens einer der vorhandenen Reste P¹-Sp¹- und P²-Sp²-nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰⁰)=C(R⁰⁰)-, -C≡C-, -N(R⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹-ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
- R⁰, R⁰⁰: jeweils unabhängig voneinander H oder Alkyl mit 1 bis 12 C-Atomen,
- R^{y} und R^{z}: jeweils unabhängig voneinander H, F, CH₃ oder CF₃,
- Z¹: -O-, -CO-, -C(R^{y}R^{z})-, oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen, vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2, und
- x: 0 oder 1.

Vorzugsweise enthält das FK-Medium oder die polymerisierbare Komponente eine oder mehrere Verbindungen ausgewählt aus der Gruppe bestehend aus den Formeln M1-M21, besonders bevorzugt bestehend aus den Formeln M2-M15, ganz besonders bevorzugt bestehend aus den Formeln M2, M3, M9, M14 und M15.
Vorzugsweise enthält das FK-Medium oder die polymerisierbare Komponente keine Verbindungen der Formel M10, worin Z² und Z³ -(CO)O- oder -O(CO)- bedeuten.

Zur Herstellung von PSA-Anzeigen werden die polymerisierbaren Verbindungen im FK-Medium zwischen den Substraten der FK-Anzeige, optional unter Anlegen einer Spannung, durch in-situ-Polymerisation polymerisiert oder vernetzt (falls eine polymerisierbare Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil vorzugsweise 0,001 bis 5 Gew.-%, besonders bevorzugt 0,001 bis 1 Gew.-%.

Die polymerisierbaren Verbindungen mit aromatischen Ringen (vgl. insbesondere die Formeln M1 bis M15) eignen sich auch für die Polymerisation ohne Initiator, was erhebliche Vorteile mit sich bringt, wie beispielsweise geringere Materialkosten und insbesondere eine geringere Verunreinigung des FK-Mediums durch mögliche Restmengen des Initiators oder dessen Abbauprodukte. Die Polymerisation kann somit auch ohne Zusatz eines Initiators erfolgen. Somit enthält das FK-Medium in einer bevorzugten Ausführungsform keinen Polymerisationsinitiator.

Die polymerisierbare Komponente oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente, vorzugsweise 10 - 10000 ppm, besonders bevorzugt 50 - 500 ppm.

Die FK-Medien zur Verwendung in den erfindungsgemäßen FK-Anzeigen enthalten, neben den oben beschriebenen Additiven und den optionalen polymerisierbaren Verbindungen (RMs) eine FK-Mischung ("Host-Mischung") enthaltend eine oder mehr, vorzugsweise zwei oder mehr niedermolekulare (d.h. monomere bzw. unpolymerisierte) Verbindungen. Letztere sind stabil bzw. unreaktiv gegenüber einer Polymerisationsreaktion unter den zur Polymerisation der polymerisierbaren Verbindungen verwendeten Bedingungen. Prinzipiell eignet sich als Host-Mischung jede zur Verwendung in herkömmlichen VA- und VA-IPS-Anzeigen geeignete dielektrisch negative oder positive FK-Mischung.

Geeignete FK-Mischungen sind dem Fachmann bekannt und in der Literatur beschrieben. FK-Medien für VA-Anzeigen mit negativer dielektrischer Anisotropie sind in EP 1 378 557 A1 beschrieben.

Geeignete FK-Mischungen mit positiver dielektrischer Anisotropie, die sich für LCDs und speziell für IPS-Anzeigen eignen, sind z.B. aus JP 07-181 439 (A), EP 0 667 555, EP 0 673 986, DE 195 09 410, DE 195 28 106, DE 195 28 107, WO 96/23 851 und WO 96/28 521 bekannt.

Im Folgenden werden bevorzugte Ausführungsformen für das erfindungsgemäße flüssigkristalline Medium mit negativer dielektrischer Anisotropie angeführt:
a) FK-Medium, welches zusätzlich eine oder mehrere Verbindungen ausgewählt aus der Gruppe der Verbindungen der Formeln A, B und C enthält, 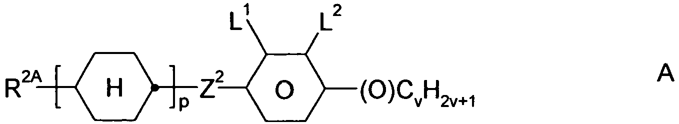 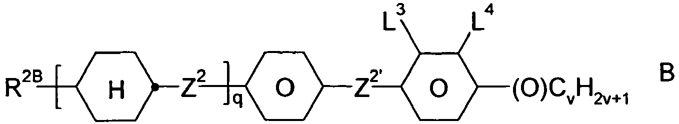 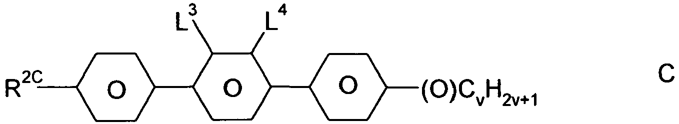 worin
   - R^{2A}, R^{2B} und R^{2C}: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 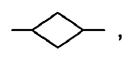 -C≡C-, -CF₂O-, -OCF₂-, -OC-O- oder -O-CO-so ersetzt sein können, dass O-Atome nicht direkt miteinander verknüpft sind,
   - L¹⁻⁴: jeweils unabhängig voneinander F, Cl, CF₃ oder CHF₂,
   - Z² und Z^{2'}: jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
   - p: 1 oder 2,
   - q: 0 oder 1, und
   - v: 1 bis 6
   bedeuten.
   In den Verbindungen der Formeln A und B können Z² gleiche oder unterschiedliche Bedeutungen haben. In den Verbindungen der Formel B können Z² und Z^{2'} gleiche oder verschiedene Bedeutungen aufweisen.
   In den Verbindungen der Formeln A, B und C bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.
   In den Verbindungen der Formeln A und B bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln A und B vorzugsweise jeweils unabhängig voneinander eine Einfachbindung, ferner eine -C₂H₄-Brücke.
   Sofern in der Formel B Z² = -C₂H₄- ist, ist Z^{2'} vorzugsweise eine Einfachbindung bzw. falls Z^{2'} = -C₂H₄- bedeutet, ist Z² vorzugsweise eine Einfachbindung. In den Verbindungen der Formeln A und B bedeutet (O)CᵥH₂ᵥ₊₁ vorzugsweise OCᵥH₂ᵥ₊₁, ferner CᵥH₂ᵥ₊₁. In den Verbindungen der Formel C bedeutet (O)CᵥH₂ᵥ₊₁ vorzugsweise CᵥH₂ᵥ₊₁. In den Verbindungen der Formel C bedeuten L³ und L⁴ vorzugsweise jeweils F.
   Bevorzugte Verbindungen der Formeln A, B und C werden nachfolgend genannt: 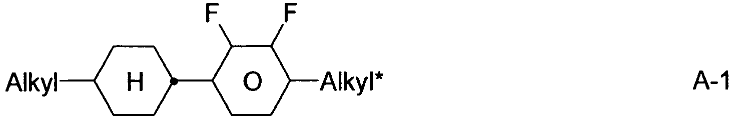 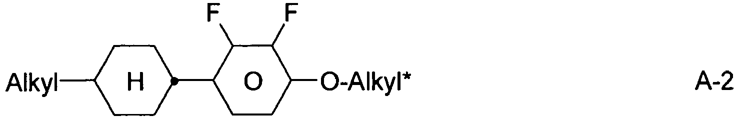 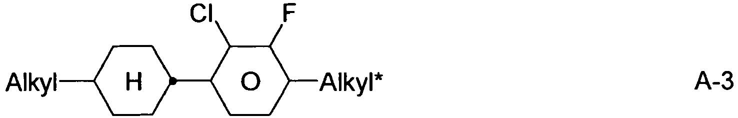 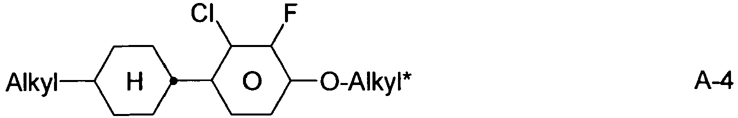 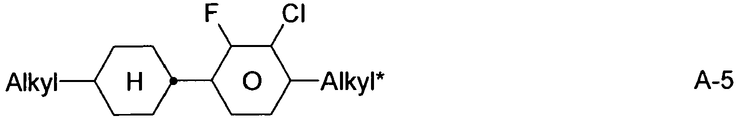 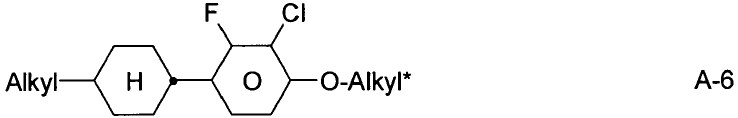 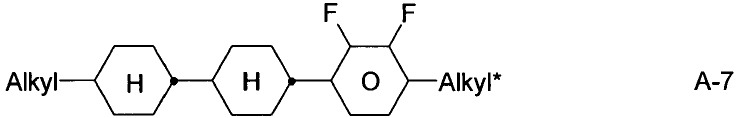 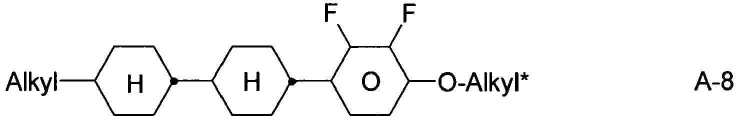 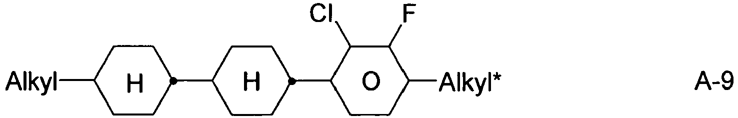 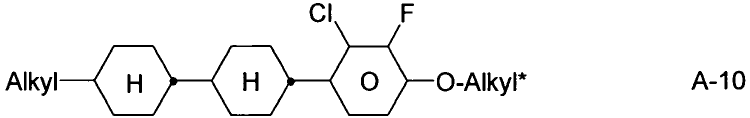 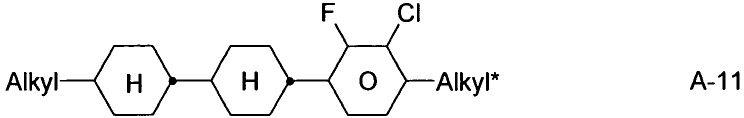 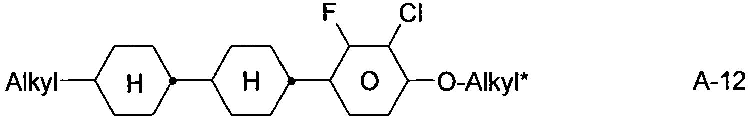 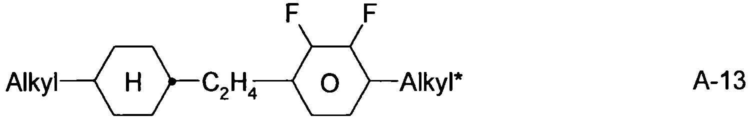 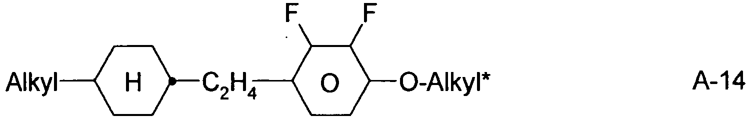 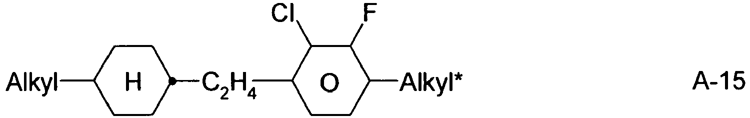 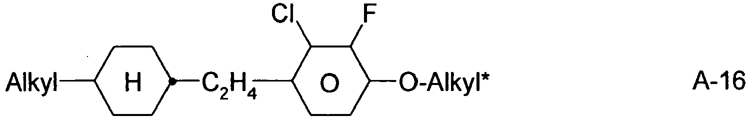 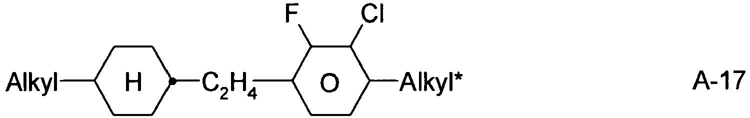 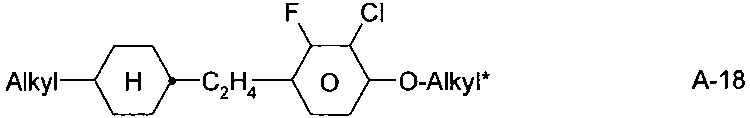 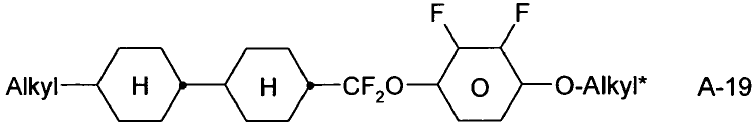 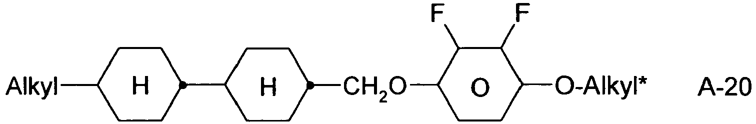 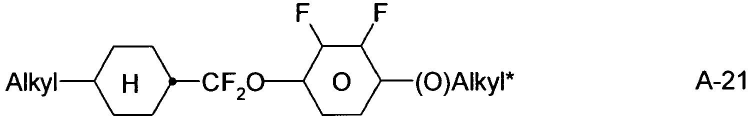 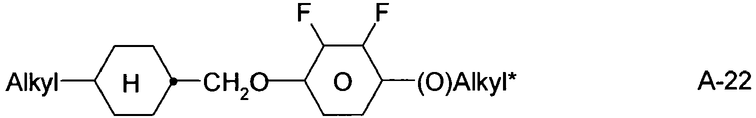 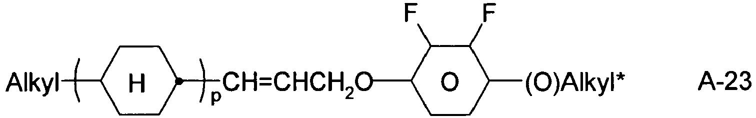 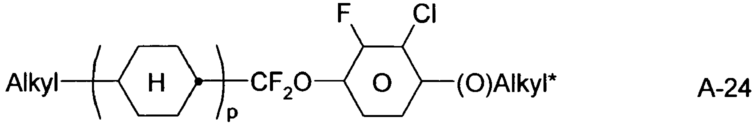 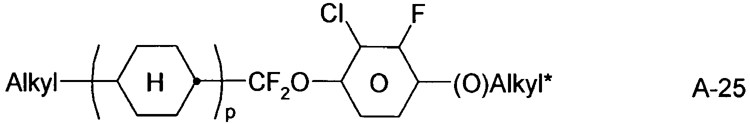 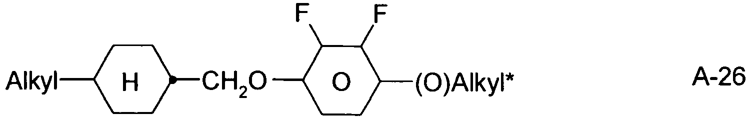 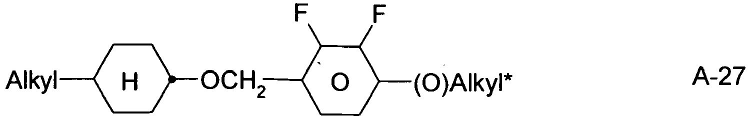 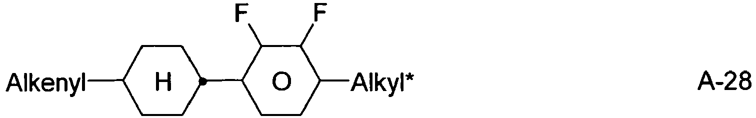 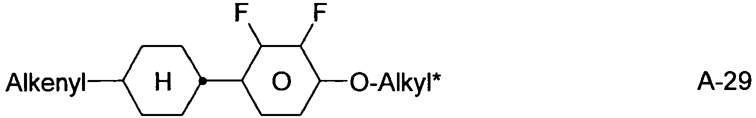 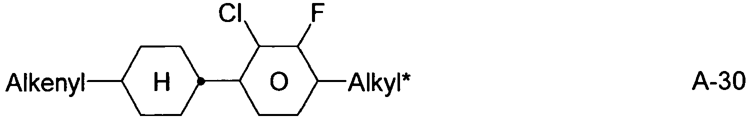 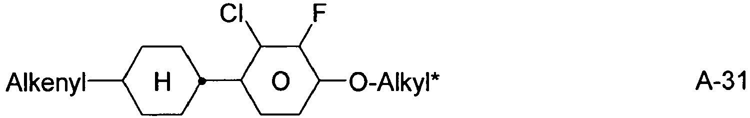 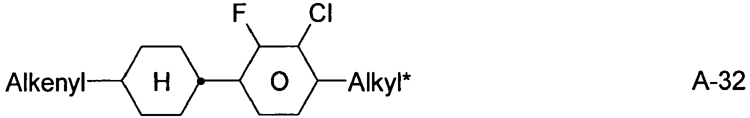 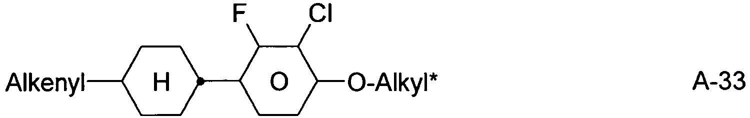 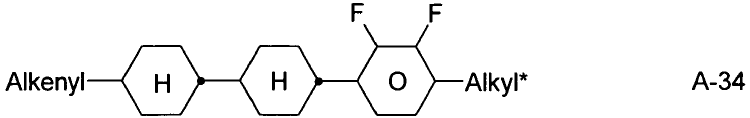 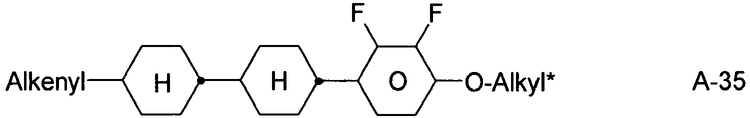 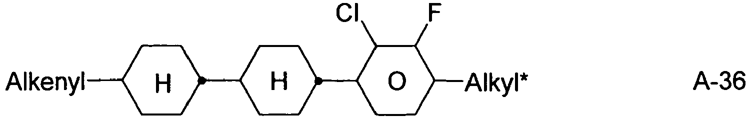 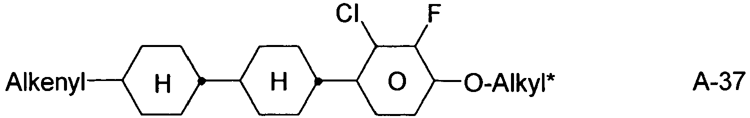 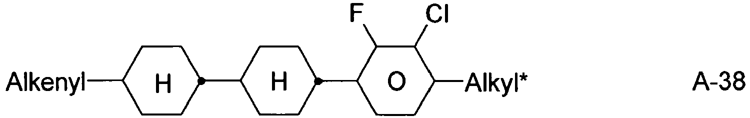 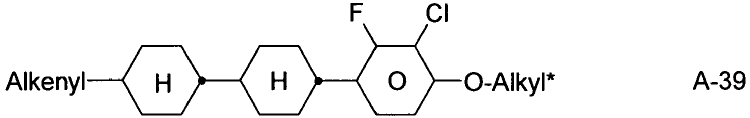 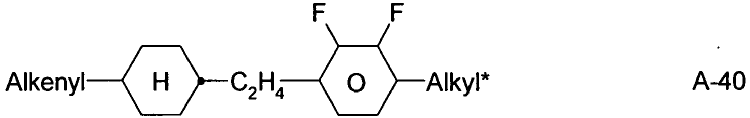 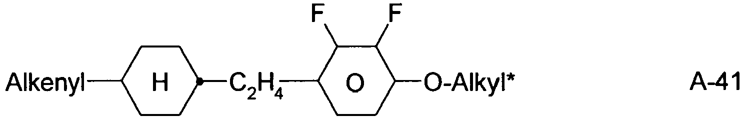 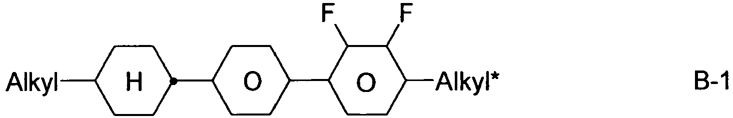 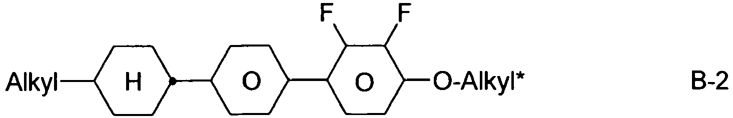 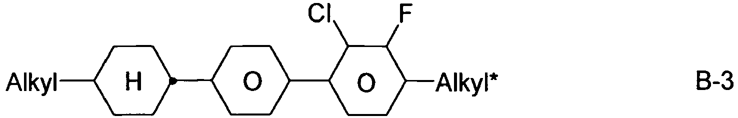 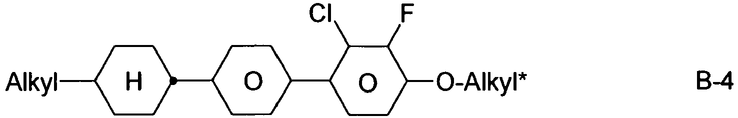 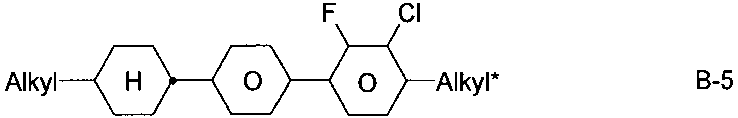 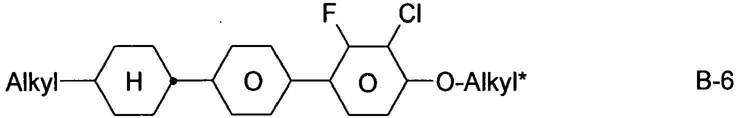 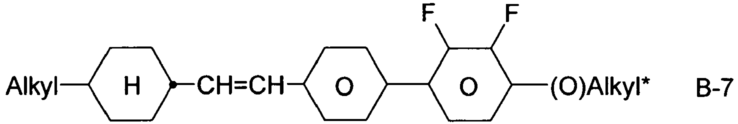 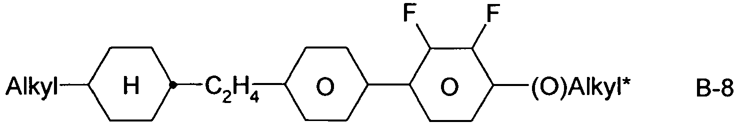 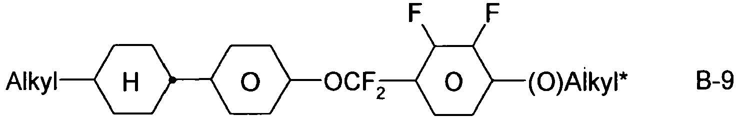 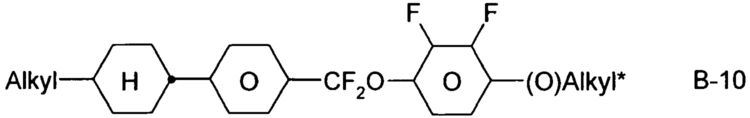 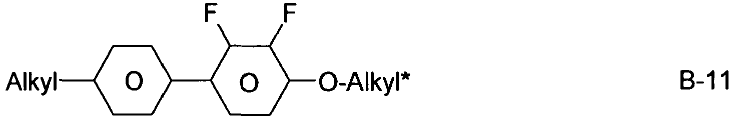 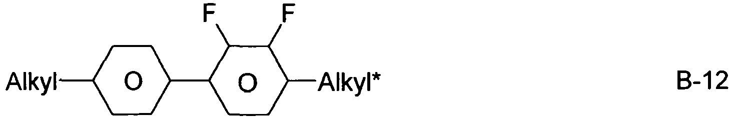 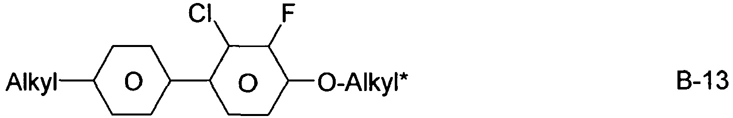 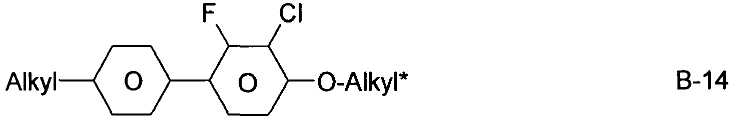 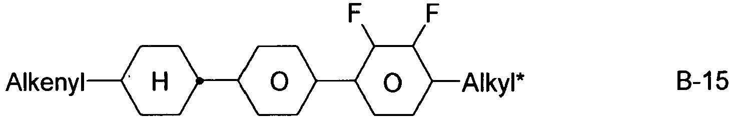 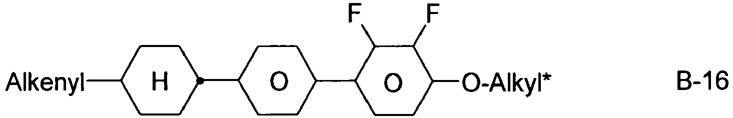 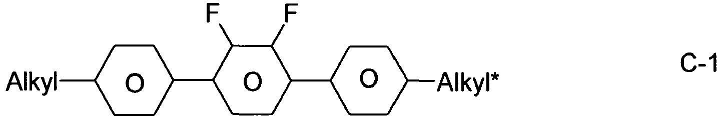 worin Alkyl und Alkyl* jeweils unabhängig voneinander einen geradkettigen Alkylrest mit 1-6 C-Atomen bedeuten.
   Besonders bevorzugte erfindungsgemäße Mischungen enthalten eine oder mehrere Verbindungen der Formeln A-2, A-8, A-14, A-29, A-35, B-2, B-11, B-16 und C-1.
   Vorzugsweise beträgt der Anteil an Verbindungen der Formeln A und/oder B im Gesamtgemisch mindestens 20 Gew.%.
   Besonders bevorzugte erfindungsgemäße Medien enthalten mindestens eine Verbindung der Formel C-1, vorzugsweise in Mengen von > 3 Gew.%, insbesondere > 5 Gew.% und besonders bevorzugt von 5-25 Gew.%.
b) FK-Medium, welches zusätzlich eine oder mehrere Verbindungen der folgenden Formel enthält: 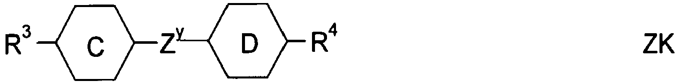 worin die einzelnen Reste folgende Bedeutung besitzen 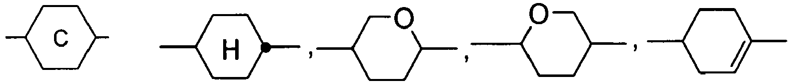 oder 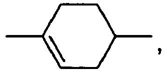 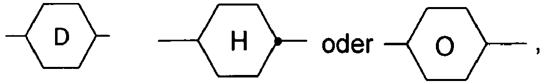
   - R³ und R⁴: jeweils unabhängig voneinander Alkyl mit 1 bis 12 C-Atomen, worin auch eine oder zwei nicht benachbarte CH₂-Gruppen durch -O-, -CH=CH-, -CO-, -O-CO- oder -CO-O- so ersetzt sein können, dass O-Atome nicht direkt miteinander verknüpft sind,
   - Z^{y}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, oder eine Einfachbindung, vorzugsweise eine Einfachbindung.

   Die Verbindungen der Formel ZK sind vorzugsweise ausgewählt aus der Gruppe bestehend aus folgenden Unterformeln: 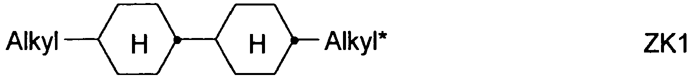 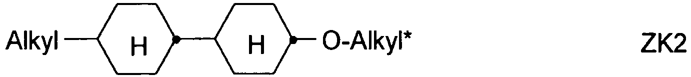 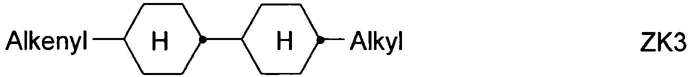 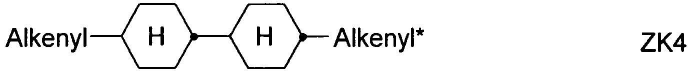 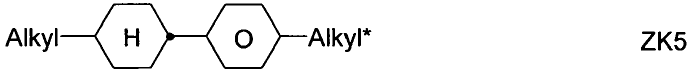 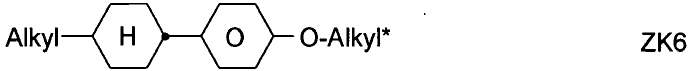 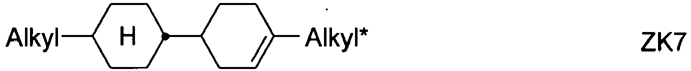 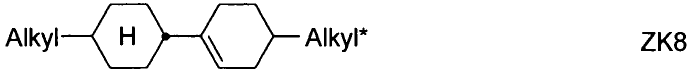 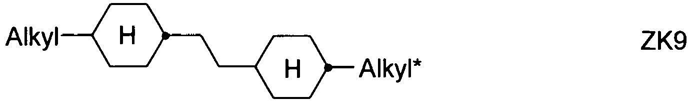 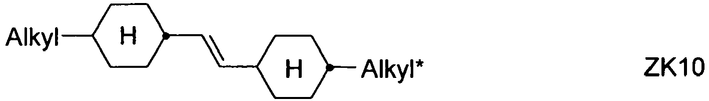 worin Alkyl und Alkyl* jeweils unabhängig voneinander einen geradkettigen Alkylrest mit 1-6 C-Atomen bedeuten, und Alkenyl und Alkenyl* einen geradkettigen Alkenylrest mit 2-6 C-Atomen bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
c) FK-Medium, welches zusätzlich eine oder mehrere Verbindungen der folgenden Formel enthält: 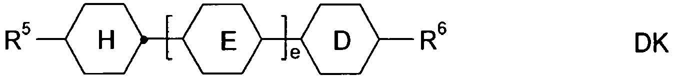 worin die einzelnen Reste bei jedem Auftreten gleich oder verschieden folgende Bedeutung haben:
   - R⁵ und R⁶: jeweils unabhängig voneinander eine der oben für R^{3/4} angegebenen Bedeutungen,

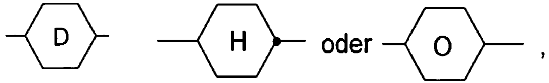

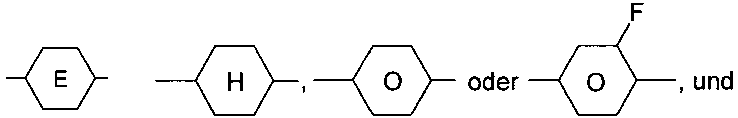

   - e: 1 oder 2.

   Die Verbindungen der Formel DK sind vorzugsweise ausgewählt aus der Gruppe bestehend aus folgenden Unterformeln: 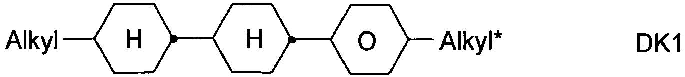 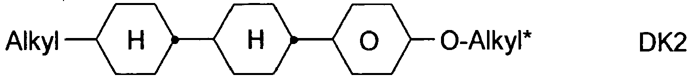 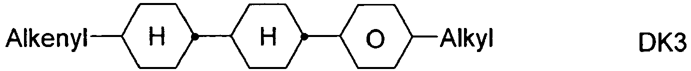 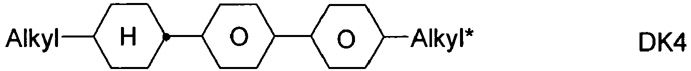 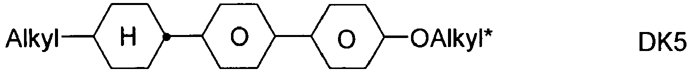 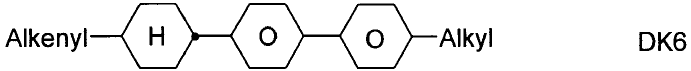 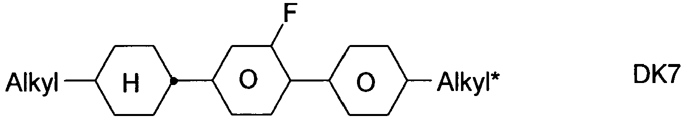 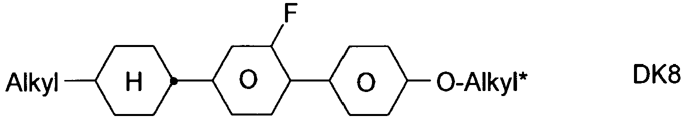 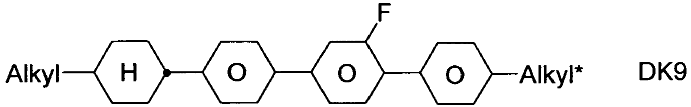 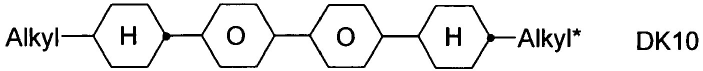 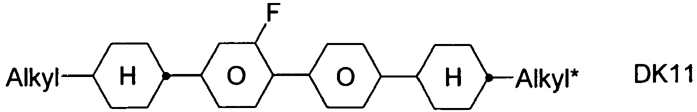 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
d) FK-Medium, welches zusätzlich eine oder mehrere Verbindungen der folgenden Formel enthält: 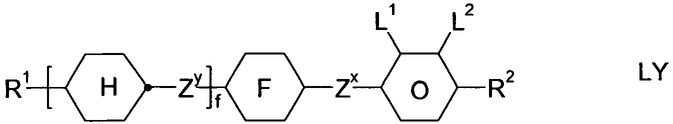 worin die einzelnen Reste folgende Bedeutung besitzen 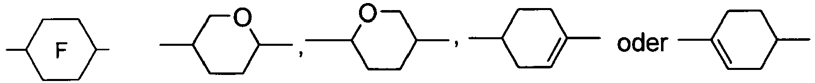
   - f: 0 oder 1,
   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CF=CF-, -CO-, -O(CO)- oder -(CO)O- so ersetzt sein können, dass O-Atome nicht direkt miteinander verknüpft sind,
   - Z^{x} und Z^{y}: jeweils unabhängig voneinander -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, oder eine Einfachbindung, vorzugsweise eine Einfachbindung,
   - L¹ und L²: jeweils unabhängig voneinander F, Cl, OCF₃, CF₃, CH₃, CH₂F, CHF₂.

   Vorzugsweise bedeuten beide Reste L¹ und L² F oder einer der Reste L¹ und L² F und der andere Cl.
   Die Verbindungen der Formel LY sind vorzugsweise ausgewählt aus der Gruppe bestehend aus folgenden Unterformeln 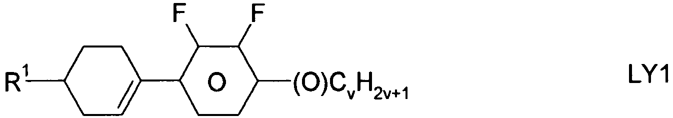 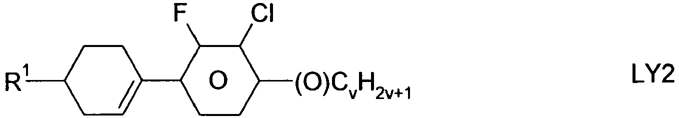 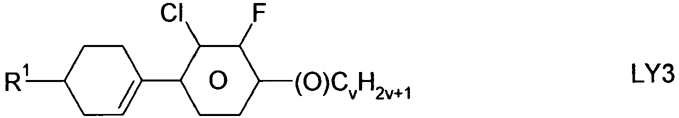 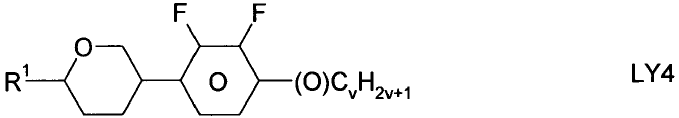 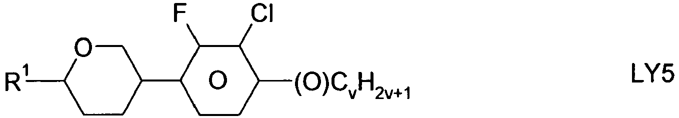 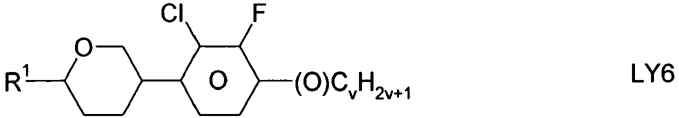 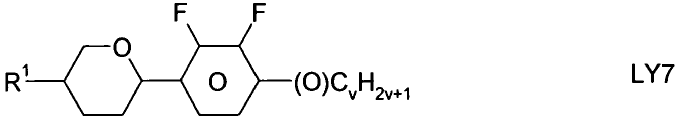 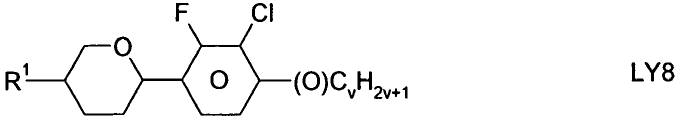 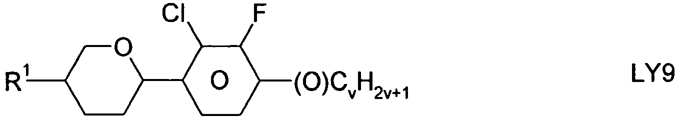 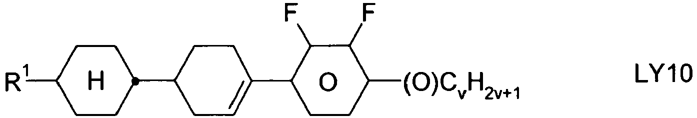 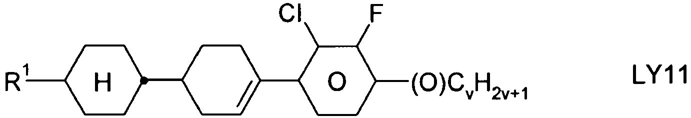 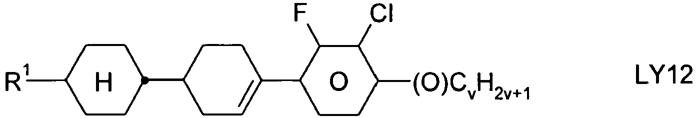 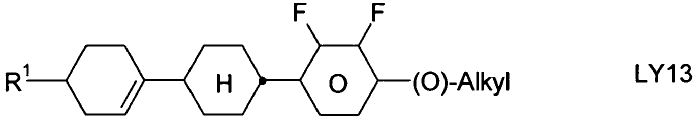 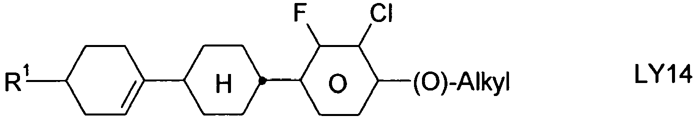 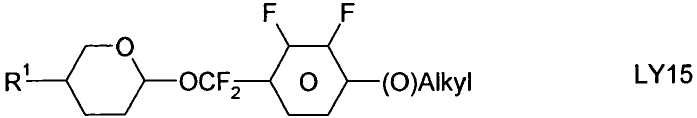 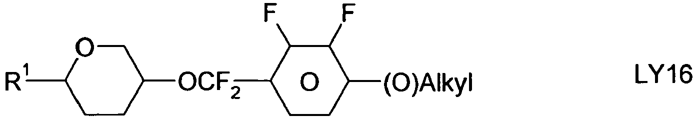 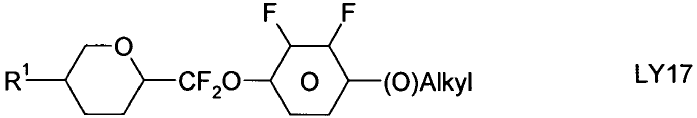 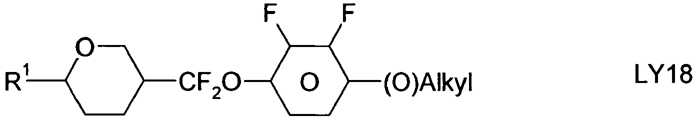 worin R¹ die oben angegebene Bedeutung hat, Alkyl einen geradkettigen Alkylrest mit 1-6 C-Atomen, (O) ein Sauerstoffatom oder eine Einfachbindung und v eine ganze Zahl von 1 bis 6 bedeuten. R¹ bedeutet vorzugsweise geradkettiges Alkyl mit 1 bis 6 C-Atomen oder geradkettiges Alkenyl mit 2 bis 6 C-Atomen, insbesondere CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
e) FK-Medium, welches zusätzlich eine oder mehrere Verbindungen ausgewählt aus der Gruppe bestehend aus folgenden Formeln enthält: 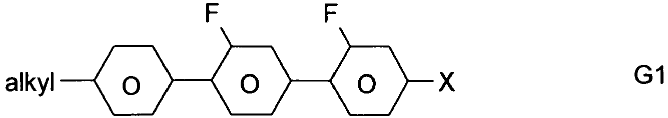 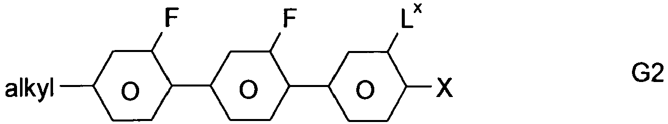 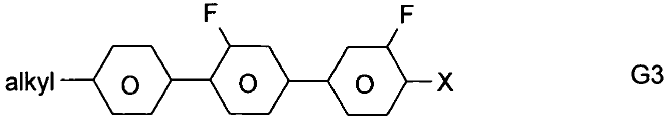 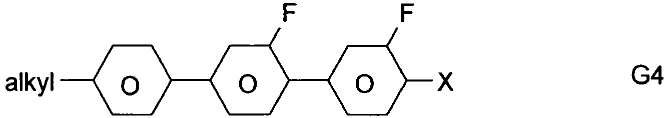 worin alkyl C₁₋₆-alkyl, L^{x} H oder F und X F, Cl, OCF₃, OCHF₂ oder OCH=CF₂ bedeutet. Besonders bevorzugt sind Verbindungen der Formel G1, worin X F bedeutet.
f) FK-Medium, welches zusätzlich eine oder mehrere Verbindungen ausgewählt aus der Gruppe bestehend aus folgenden Formeln enthält: 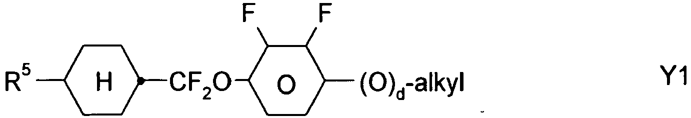 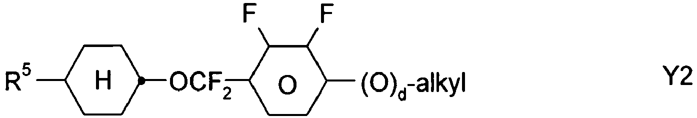 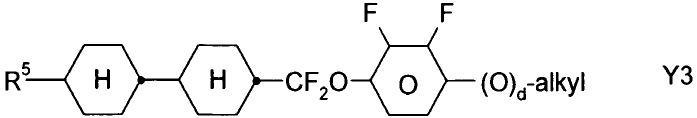 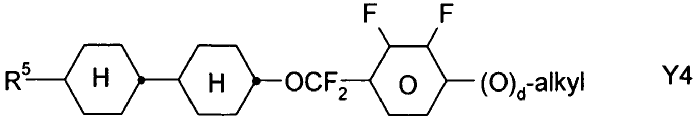 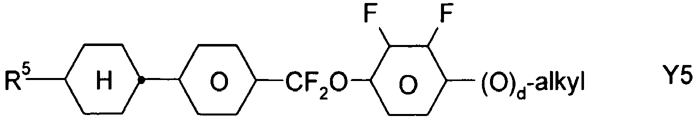 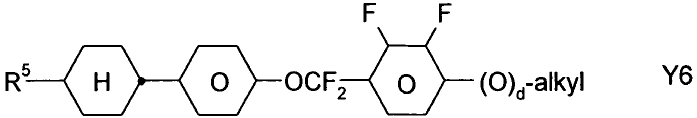 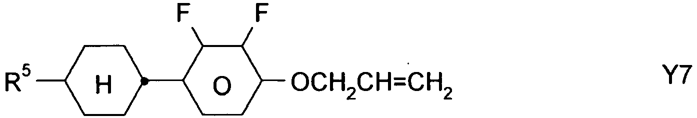 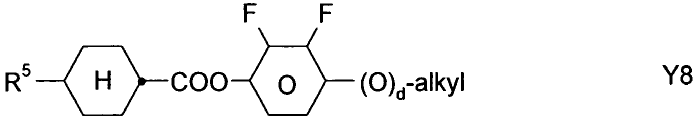 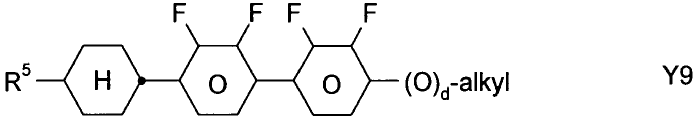 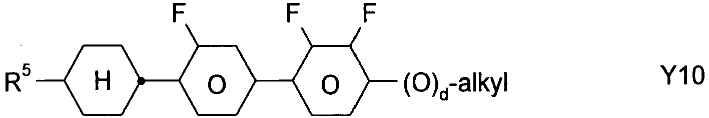 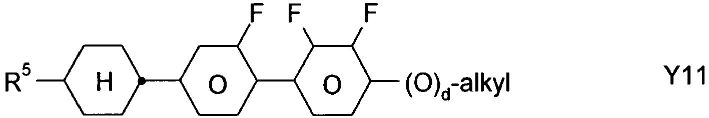 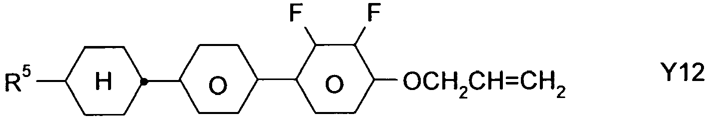 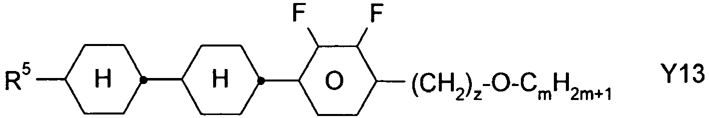 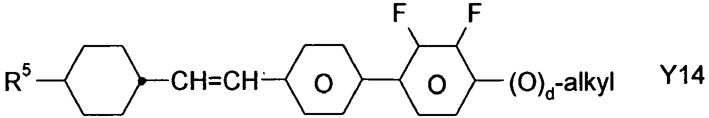 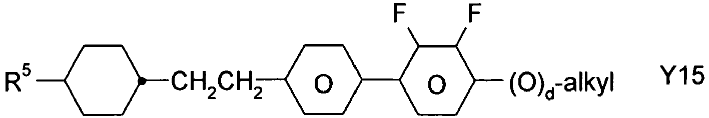 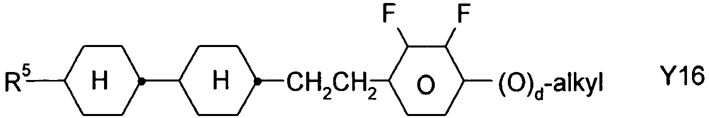 worin R⁵ eine der oben für R¹ angegebenen Bedeutungen besitzt, alkyl C₁₋₆-alkyl, d 0 oder 1, und z und m jeweils unabhängig voneinander eine ganze Zahl von 1 bis 6 bedeuten. R⁵ ist in diesen Verbindungen besonders bevorzugt C₁₋₆-alkyl oder -alkoxy oder C₂₋₆-alkenyl, d ist vorzugsweise 1. Vorzugsweise enthält das erfindungsgemäße FK-Medium eine oder mehrere Verbindungen der oben genannten Formeln in Mengen von ≥ 5 Gew.%.
g) FK-Medium, welches zusätzlich eine oder mehrere Biphenylverbindungen ausgewählt aus der Gruppe bestehend aus folgenden Formeln enthält: 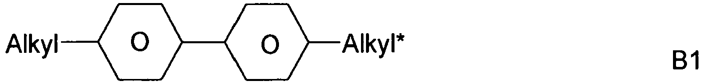 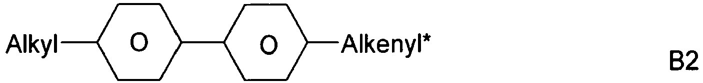 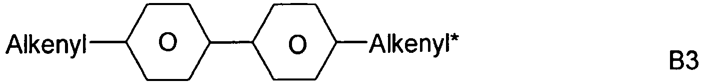 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Der Anteil der Biphenyle der Formeln B1 bis B3 in der FK-Mischung beträgt vorzugsweise mindestens 3 Gew.%, insbesondere ≥ 5 Gew.%.
   Die Verbindungen der Formel B2 sind besonders bevorzugt.
   Die Verbindungen der Formel B1 bis B3 sind vorzugsweise ausgewählt aus der Gruppe bestehend aus folgenden Unterformeln 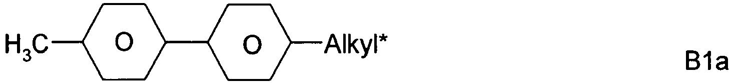 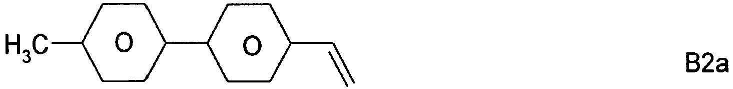 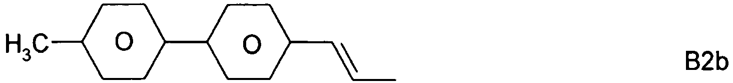 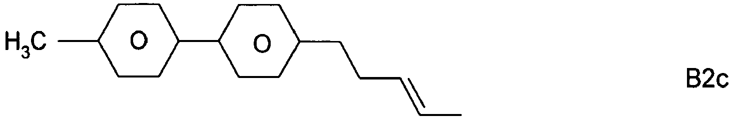 worin Alkyl* einen Alkylrest mit 1-6 C-Atomen bedeutet. Insbesondere bevorzugt enthält das erfindungsgemäße Medium eine oder mehrere Verbindungen der Formeln B1a und/oder B2c.
h) FK-Medium, welches zusätzlich eine oder mehrere Terphenylverbindungen der folgenden Formel enthält: 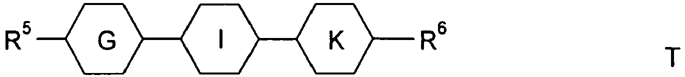 worin R⁵ und R⁶ jeweils unabhängig voneinander eine der oben für R¹ angegebenen Bedeutungen besitzen und 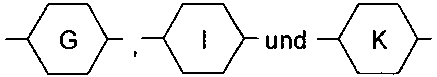 jeweils unabhängig voneinander 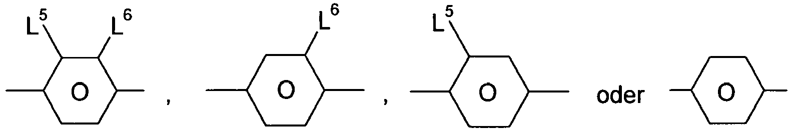 bedeuten, worin L⁵ F oder Cl, vorzugsweise F, und L⁶ F, Cl, OCF₃, CF₃, CH₃, CH₂F oder CHF₂, vorzugsweise F, bedeuten.
   Die Verbindungen der Formel T sind vorzugsweise ausgewählt aus der Gruppe bestehend aus folgenden Unterformeln 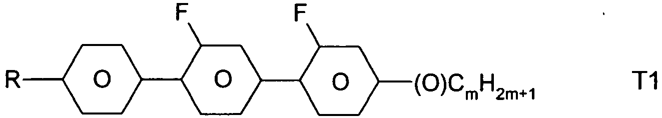 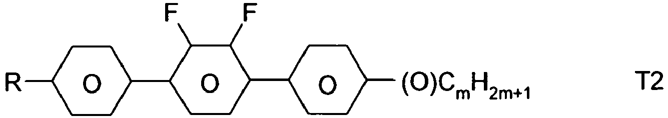 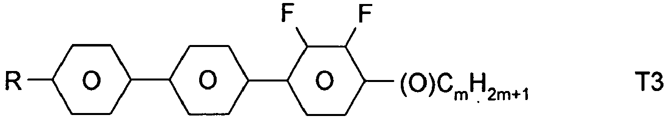 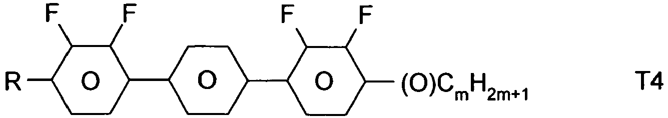 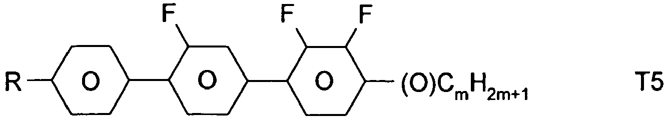 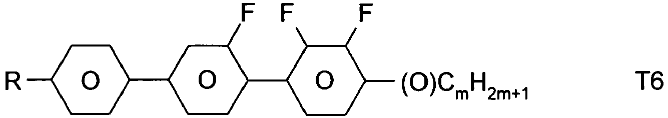 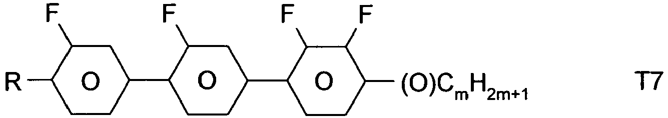 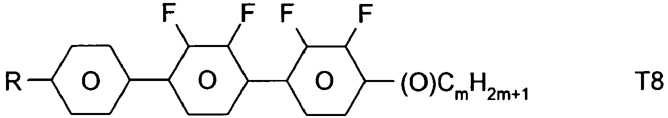 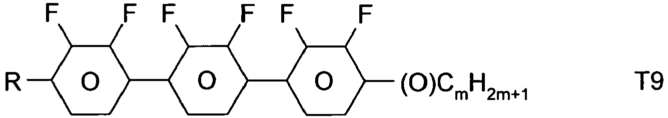 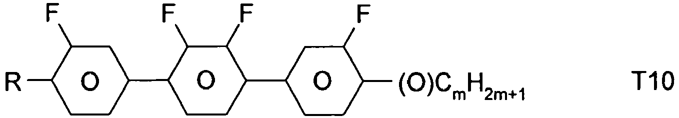 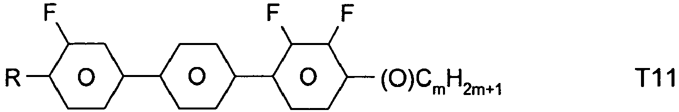 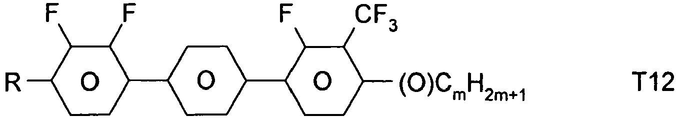 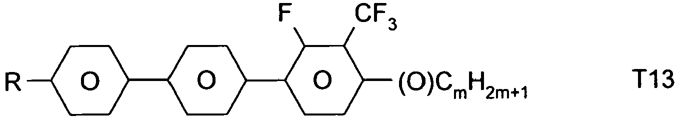 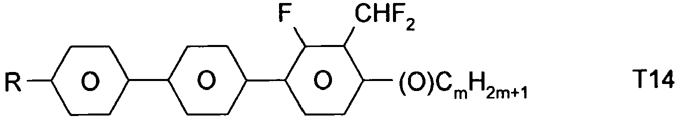 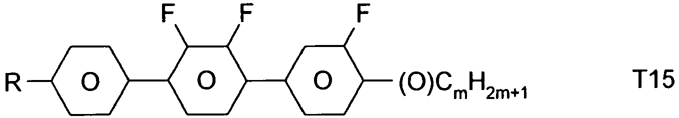 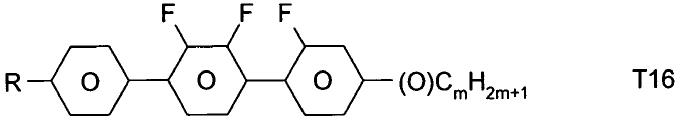 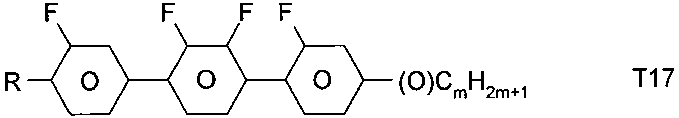 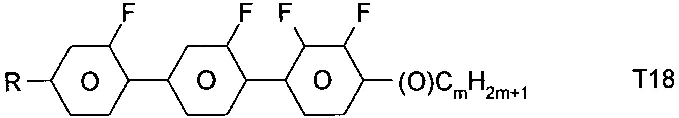 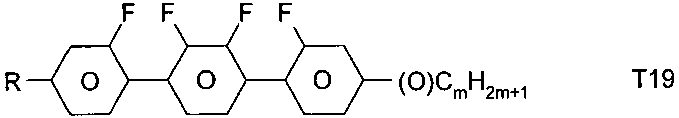 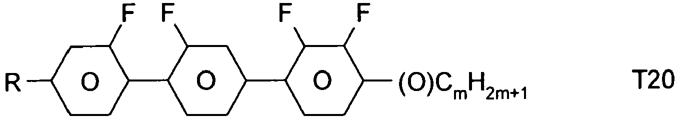 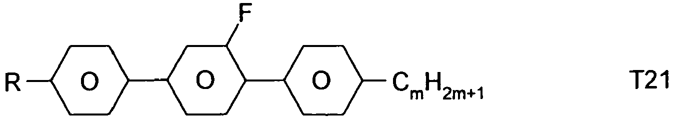 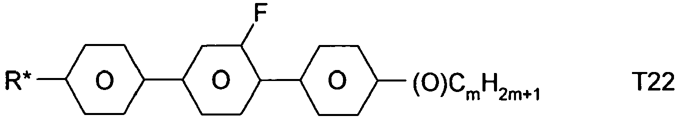 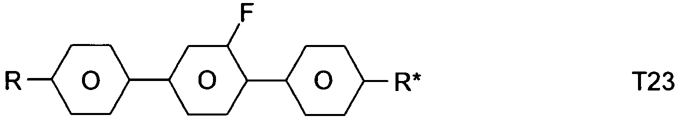 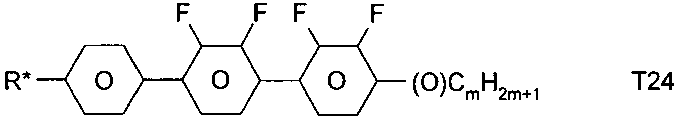 worin R einen geradkettigen Alkyl- oder Alkoxyrest mit 1-7 C-Atomen, R* einen geradkettigen Alkenylrest mit 2-7 C-Atomen, (O) ein Sauerstoffatom oder eine Einfachbindung, und m eine ganze Zahl von 1 bis 6 bedeutet. R* bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Vorzugsweise bedeutet R Methyl, Ethyl, Propyl, Butyl, Pentyl, Hexyl Methoxy, Ethoxy, Propoxy, Butoxy oder Pentoxy.
   Das erfindungsgemäße FK-Medium enthält die Terphenyle der Formeln T und deren bevorzugte Unterformeln vorzugsweise in einer Menge von 0,5-30 Gew.%, insbesondere von 1-20 Gew.%.
   Besonders bevorzugt sind Verbindungen der Formeln T1, T2, T3 und T21. In diesen Verbindungen bedeutet R vorzugsweise Alkyl, ferner Alkoxy jeweils mit 1-5 C-Atomen.
   Vorzugsweise werden die Terphenyle in erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen der Formel T, vorzugsweise ausgewählt aus der Gruppe der Verbindungen T1 bis T22.
i) FK-Medium, welches zusätzlich eine oder mehrere Verbindungen ausgewählt aus der Gruppe bestehend aus folgenden Formeln enthält: 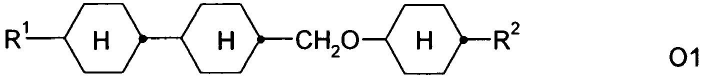 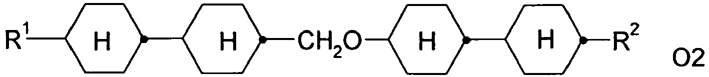 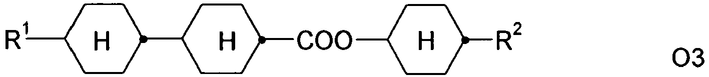 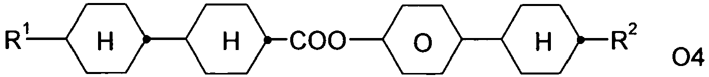 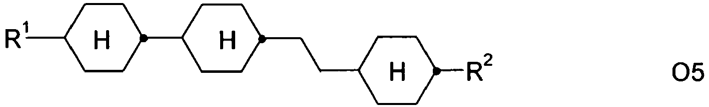 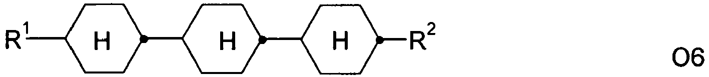 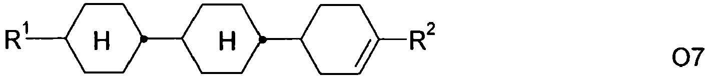 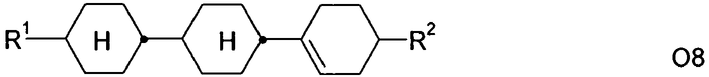 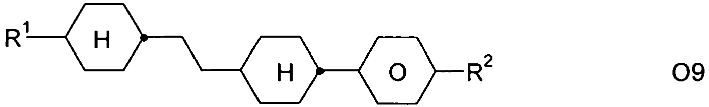 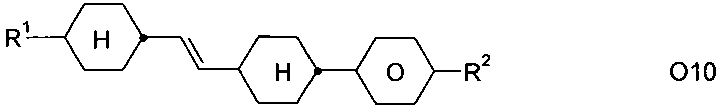 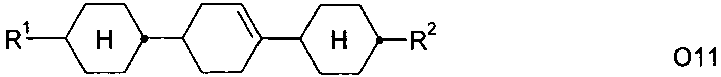 worin R¹ und R² die oben für Formel LY angegebenen Bedeutungen haben, und vorzugsweise jeweils unabhängig voneinander geradkettiges Alkyl mit 1 bis 6 C-Atomen oder geradkettiges Alkenyl mit 2 bis 6 C-Atomen bedeuten.
   Bevorzugte Medien enthalten eine oder mehrere Verbindungen ausgewählt aus den Formeln O1, 03 und 04.
k) FK-Medium, welches zusätzlich eine oder mehrere Verbindungen der folgenden Formel enthält: 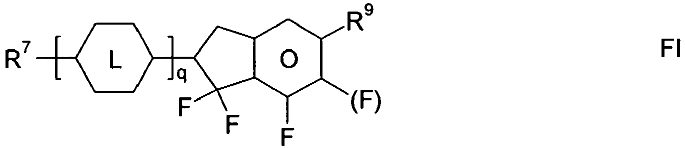 worin 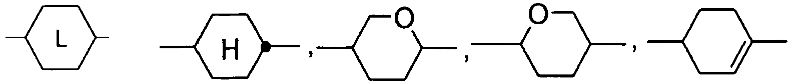 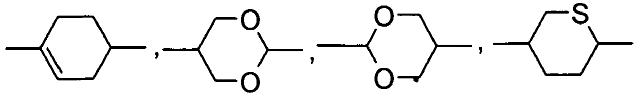 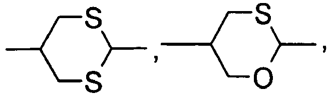
   R⁹ H, CH₃, C₂H₅ oder n-C₃H₇, (F) einen optionalen Fluor-substituenten und q 1, 2 oder 3 bedeutet, und R⁷ eine der für R¹ angegebenen Bedeutungen hat, vorzugsweise in Mengen von > 3 Gew.%, insbesondere ≥ 5 Gew.%, und ganz besonders bevorzugt von 5-30 Gew.%.
   Besonders bevorzugte Verbindungen der Formel FI sind ausgewählt aus der Gruppe bestehend aus folgenden Unterformeln: 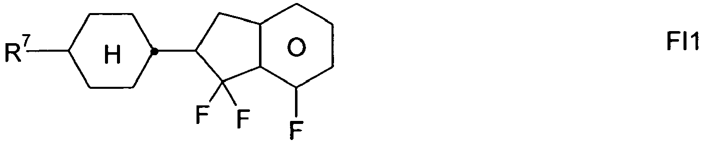 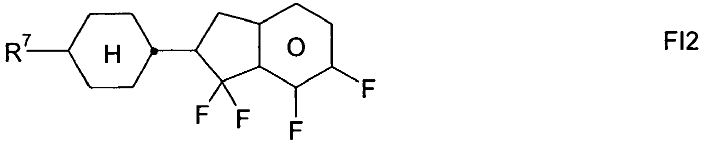 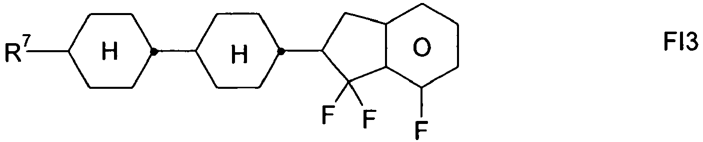 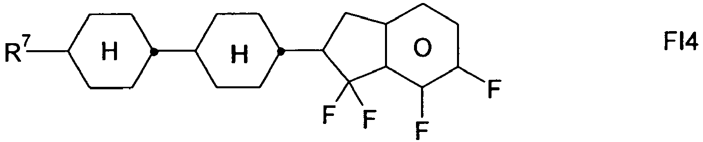 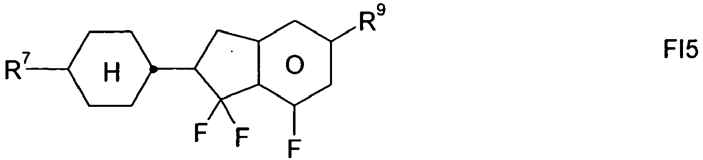 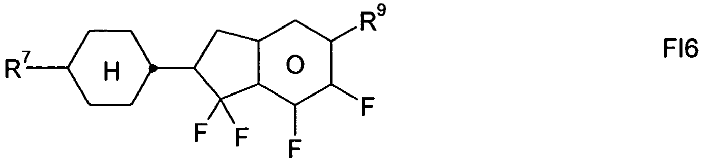 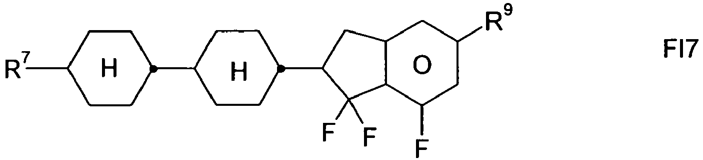 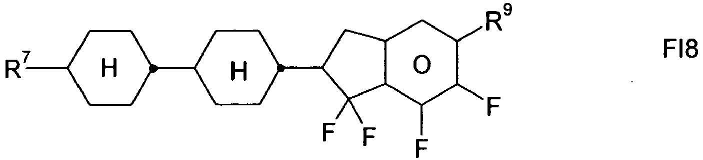 worin R⁷ vorzugsweise geradkettiges Alkyl bedeutet und R⁹ CH₃, C₂H₅ oder n-C₃H₇ bedeutet. Besonders bevorzugt sind die Verbindungen der Formel FI1, FI2 und FI3.
m) FK-Medium, welches zusätzlich eine oder mehrere Verbindungen ausgewählt aus der Gruppe bestehend aus folgenden Formeln enthält: 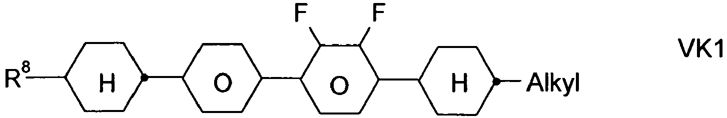 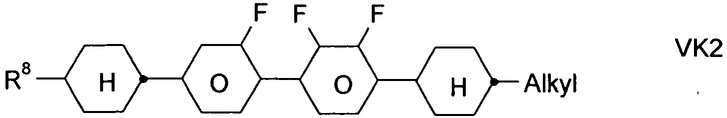 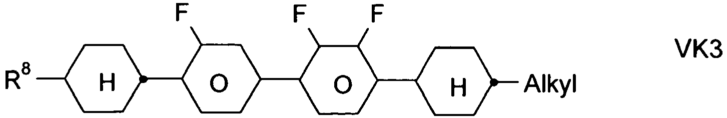 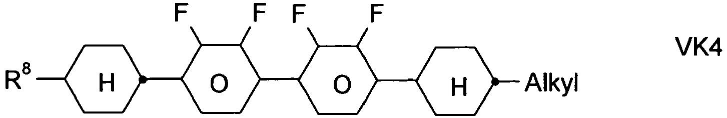 worin R⁸ die für R¹ für Formel LY angegebene Bedeutung hat und Alkyl einen geradkettigen Alkylrest mit 1-6 C-Atomen bedeutet.
n) FK-Medium, welches zusätzlich eine oder mehrere Verbindungen enthält, die eine Tetrahydronaphthyl- oder Naphthyl-Einheit aufweisen, wie z.B. die Verbindungen ausgewählt aus der Gruppe bestehend aus folgenden Formeln: 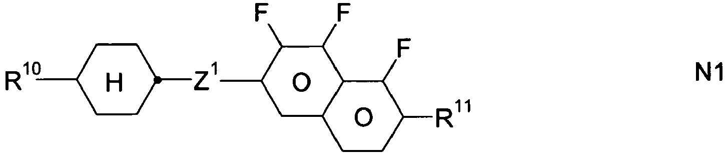 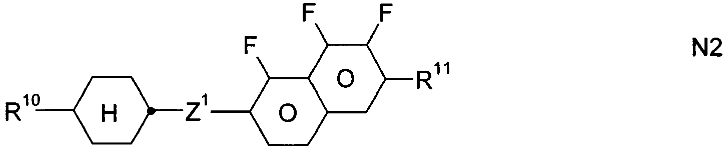 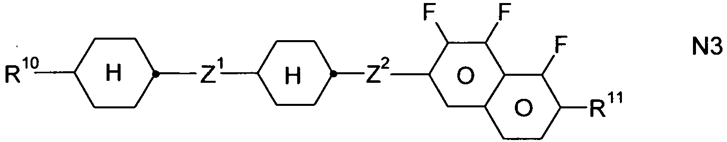 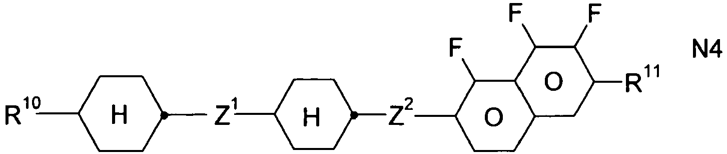 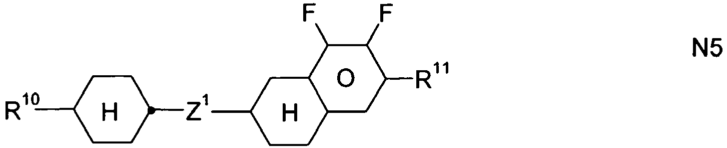 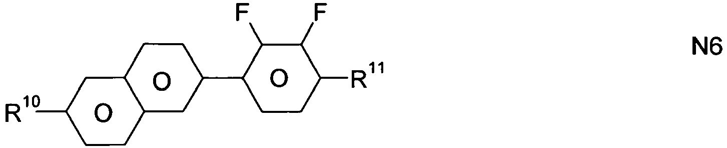 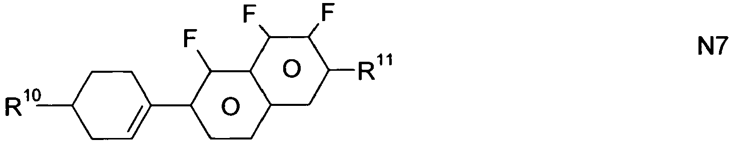 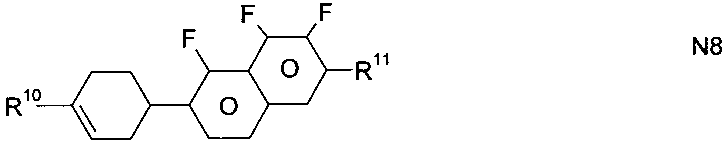 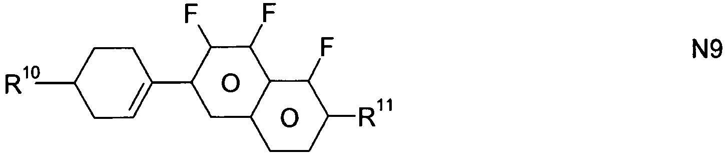 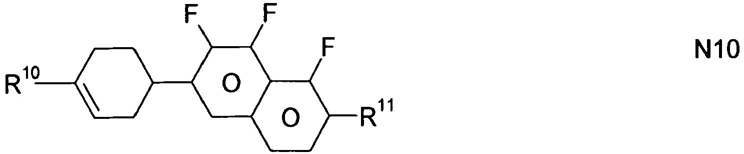 worin R¹⁰ und R¹¹ jeweils unabhängig voneinander eine der für R¹ für Formel LY angegebenen Bedeutungen haben, vorzugsweise geradkettiges Alkyl oder Alkoxy mit 1 bis 6 C-Atomen oder geradkettiges Alkenyl mit 2 bis 6 C-Atomen bedeuten, und Z¹ und Z² jeweils unabhängig voneinander -C₂H₄-, -CH=CH-, -(CH₂)₄-, -(CH₂)₃O-, -O(CH₂)₃-, -CH=CH-CH₂CH₂-, -CH₂CH₂CH=CH-, -CH₂O-, -OCH₂-, -CO-O-, -O-CO-, -C₂F₄-, -CF=CF-, -CF=CH-, -CH=CF-, -CH₂- oder eine Einfachbindung bedeuten.
o) FK-Medium, welches zusätzlich eine oder mehrere eine oder mehrere Difluordibenzochromane und/oder Chromane der folgenden Formeln enthält: 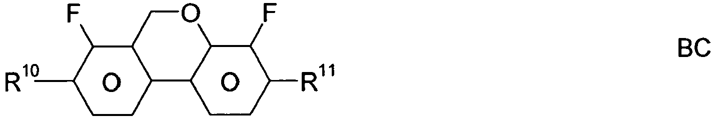 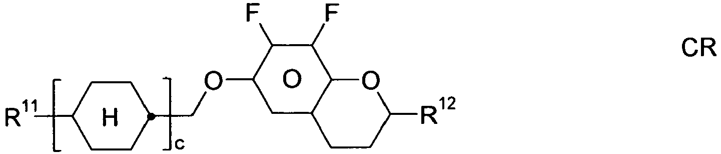 worin R¹⁰ und R¹⁰ jeweils unabhängig voneinander die oben für R¹ in Formel LY angegebene Bedeutung aufweisen, und c 0 oder 1 bedeutet, vorzugsweise in Mengen von 3 bis 20 Gew.%, insbesondere in Mengen von 3 bis 15 Gew.%.
   Besonders bevorzugte Verbindungen der Formeln BC und CR sind ausgewählt aus der Gruppe bestehend aus folgenden Unterformeln: 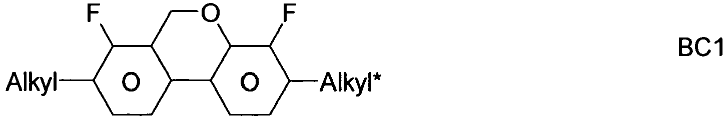 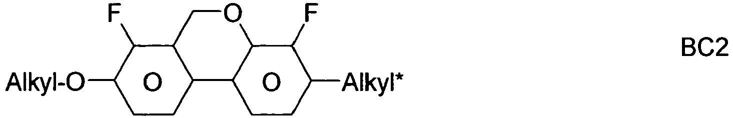 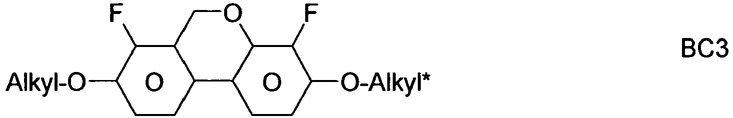 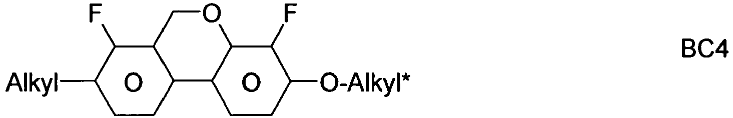 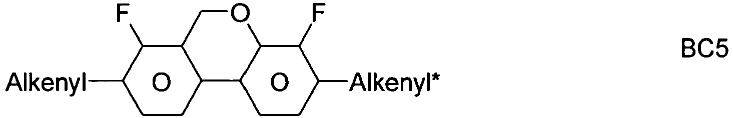 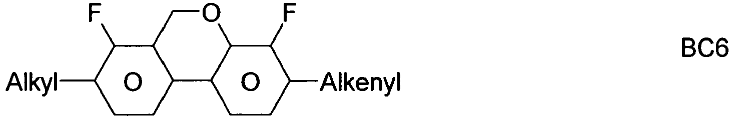 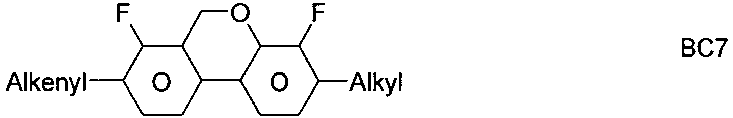 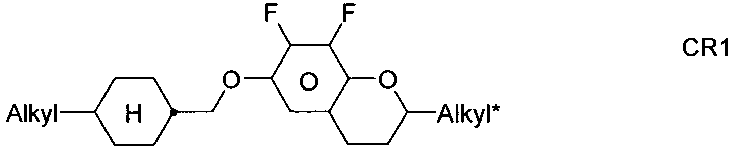 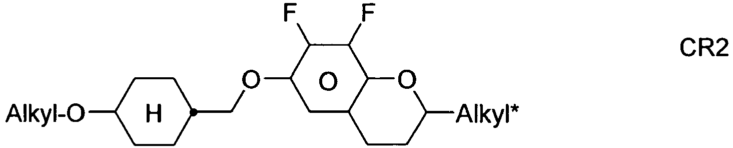 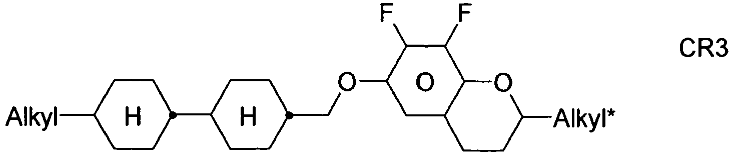 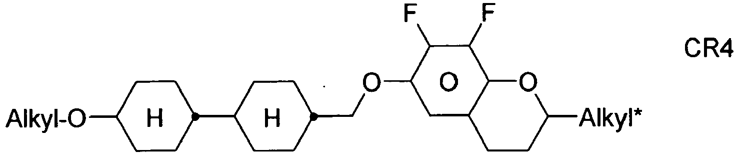 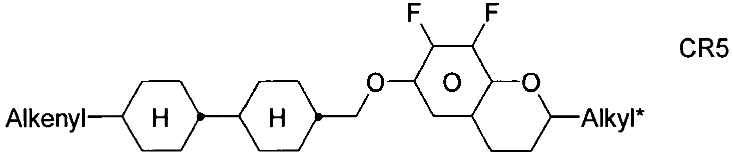 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Ganz besonders bevorzugt sind Mischungen enthaltend eine, zwei oder drei Verbindungen der Formel BC-2.
p) FK-Medium, welches zusätzlich eine oder mehrere fluorierte Phenanthrene und/oder Dibenzofurane der folgenden Formeln enthält: 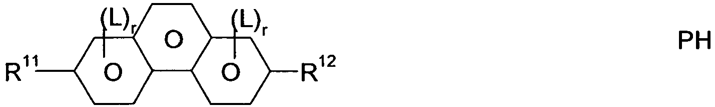 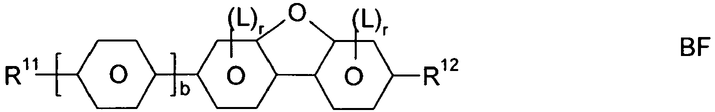 worin R¹¹ und R¹² jeweils unabhängig voneinander die oben für R¹ in Formel LY angegebenen Bedeutungen besitzen, b 0 oder 1, L F und r 1, 2 oder 3 bedeutet.
   Besonders bevorzugte Verbindungen der Formeln PH und BF sind ausgewählt aus der Gruppe bestehend aus folgenden Unterformeln: 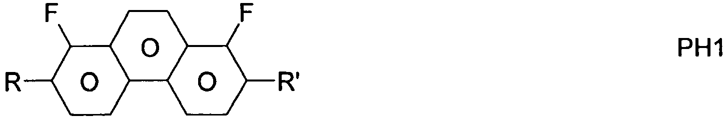 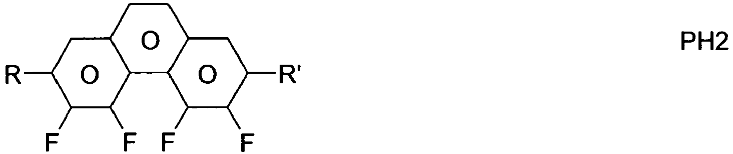 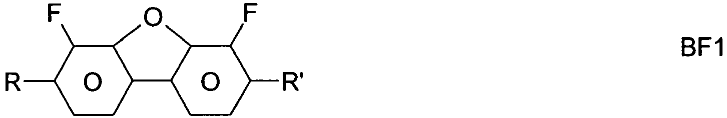 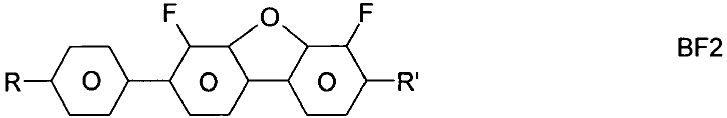 worin R und R' jeweils unabhängig voneinander einen geradkettigen Alkyl- oder Alkoxyrest mit 1-7 C-Atomen bedeuten.

Die erfindungsgemäße Flüssigkristallmischung ist mit einer dielektrischen Anisotropie (Δε) von ≤-1,5 dielektrisch negativ. Die Verbindungen der Formeln IIIA, IIIB, IIIC, LY1-LY18, Y1-Y16, T1-T24, FI, VK1-VK4, N1-N10, BC, CR, PH und BF eignen sich als dielektrisch negative Komponente. Bevorzugt sind die dielektrisch negativen Verbindungen ausgewählt aus den Formeln IIIA, IIIB und IIIC. Das FK-Medium weist vorzugsweise ein Δε von -1,5 bis -8,0, insbesondere von -2,5 bis -6,0 auf.

Die Werte der Doppelbrechung Δn in der Flüssigkristallmischung liegen in der Regel zwischen 0,07 und 0,16, vorzugsweise zwischen 0,08 und 0,12.

Die Rotationsviskosität γ₁ bei 20 °C vor der Polymerisation ist vorzugsweise ≤ 165 mPa·s, insbesondere ≤ 140 mPa·s.

Im Folgenden werden bevorzugte Ausführungsformen für das erfindungsgemäße flüssigkristalline Medium mit positiver dielektrischer Anisotropie angeführt:
- LC-Medium, welches zusätzlich eine oder mehrere Verbindungen der Formel II und/oder III enthält: 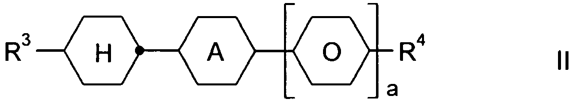 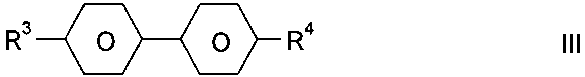 worin
   - Ring A: 1,4-Phenylen oder trans-1,4-Cyclohexylen bedeutet,
   - a: 0 oder 1 ist,
   - R³: jeweils unabhängig voneinander Alkyl mit 1 bis 9 C-Atomen oder Alkenyl mit 2 bis 9 C-Atomen bedeutet, vorzugsweise Alkenyl mit 2 bis 9 C-Atomen, und
   - R⁴: jeweils unabhängig voneinander einen unsubstituierten oder halogenierten Alkylrest mit 1 bis 12 C-Atomen, wobei auch eine oder zwei nicht benachbarte CH₂-Gruppen durch -O-, -CH=CH-, -CH=CF-, -(CO)-, -O(CO)- oder -(CO)O- so ersetzt sein können, dass O-Atome nicht direkt miteinander verknüpft sind, und vorzugsweise Alkyl mit 1 bis 12 C-Atomen oder Alkenyl mit 2 bis 9 C-Atomen bedeutet.

   Die Verbindungen der Formel II sind vorzugsweise ausgewählt aus der Gruppe bestehend aus folgenden Formeln: 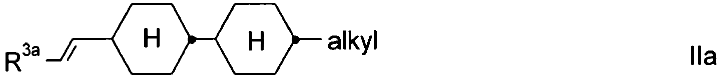 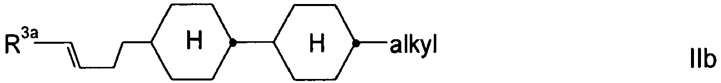 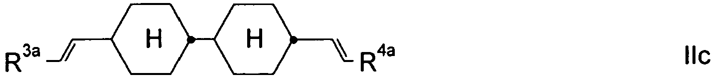 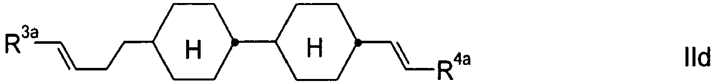 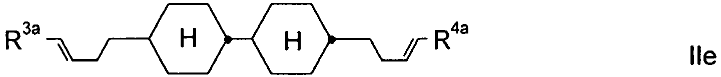 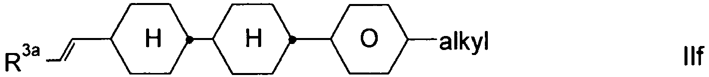 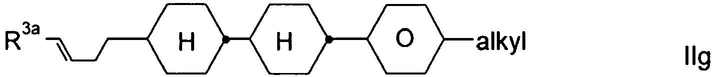 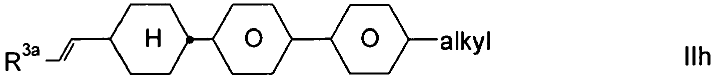 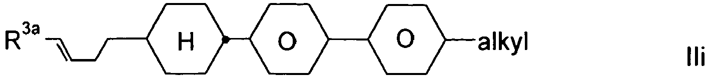 worin R^{3a} und R^{4a} jeweils unabhängig voneinander H, CH₃, C₂H₅ oder C₃H₇ bedeuten, und "alkyl" eine geradkettige Alkylgruppe mit 1 bis 8, vorzugsweise 1, 2, 3, 4 oder 5 C-Atomen bedeutet. Besonders bevorzugt sind Verbindungen der Formel IIa und IIf, insbesondere solche, worin R^{3a} H oder CH₃, vorzugsweise H, bedeutet, und Verbindungen der Formel IIc, insbesondere solche, worin R^{3a} und R^{4a} H, CH₃ oder C₂H₅ bedeuten.
   Die Verbindungen der Formel III sind vorzugsweise ausgewählt aus der Gruppe bestehend aus den folgenden Formeln: 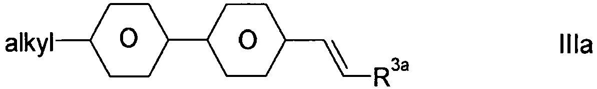 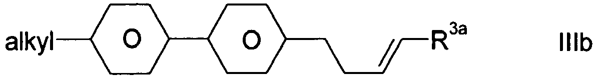 worin "alkyl" und R^{3a} die oben angegebenen Bedeutungen haben und R^{3a} vorzugsweise H oder CH₃ bedeutet. Besonders bevorzugt sind Verbindungen der Formel IIIb;
- LC-Medium, welches zusätzlich eine oder mehrere Verbindungen ausgewählt aus der Gruppe bestehend aus den folgenden Formeln enthält: 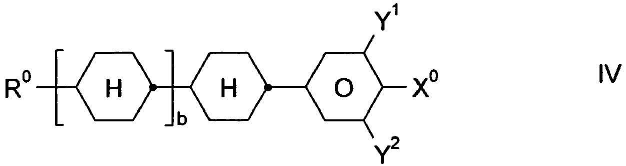 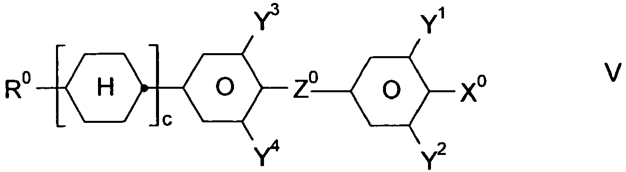 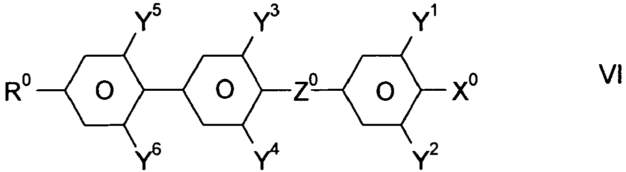 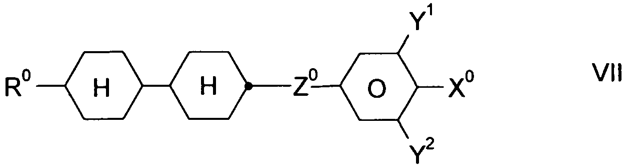 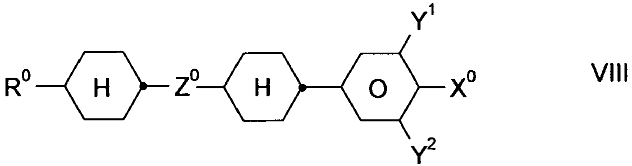 worin
   - R⁰: einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 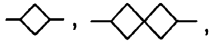 -O-, -(CO)O- oder -O(CO)- so ersetzt sein können, dass O-Atome nicht direkt miteinander verknüpft sind, und worin auch ein oder mehrere H-Atome durch Halogen ersetzt sein können,
   - X⁰: F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,

   - Y¹⁻⁶: jeweils unabhängig voneinander H oder F,
   - Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung, und
   b und c jeweils unabhängig voneinander 0 oder 1
   bedeuten.
   In den Verbindungen der Formel IV bis VIII bedeutet X⁰ vorzugsweise F oder OCF₃, ferner OCHF₂, CF₃, CF₂H, Cl, OCH=CF₂. R⁰ ist vorzugsweise geradkettiges Alkyl oder Alkenyl mit jeweils bis zu 6 C-Atomen.
   Die Verbindungen der Formel IV sind vorzugsweise ausgewählt aus der Gruppe bestehend aus den folgenden Formeln: 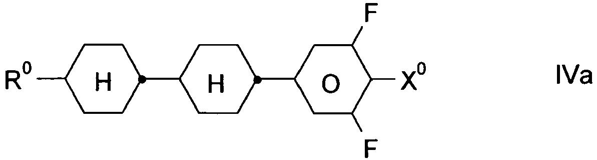 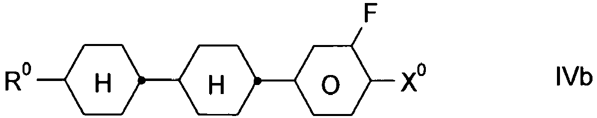 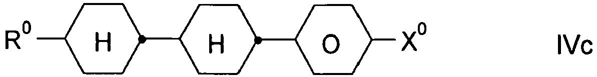 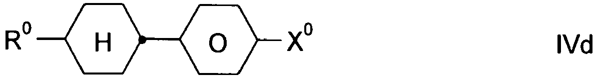 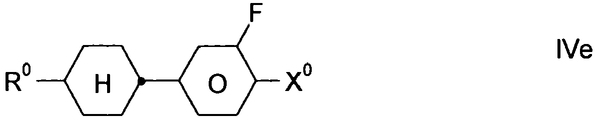 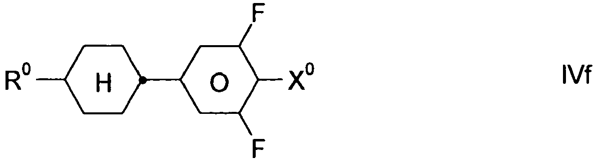 worin R⁰ und X⁰ die oben angegebenen Bedeutungen haben.
   Vorzugsweise bedeutet in Formel IV R⁰ Alkyl mit 1 bis 8 C-Atomen und X⁰ F, Cl, OCHF₂ oder OCF₃, ferner OCH=CF₂. In der Verbindung der Formel IVb bedeutet R⁰ vorzugsweise Alkyl oder Alkenyl. In der Verbindung der Formel IVd bedeutet X⁰ vorzugsweise Cl, ferner F.
   Die Verbindungen der Formel V sind vorzugsweise ausgewählt aus der Gruppe bestehend aus den folgenden Formeln: 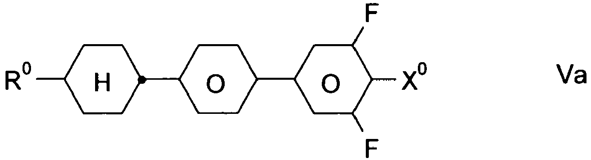 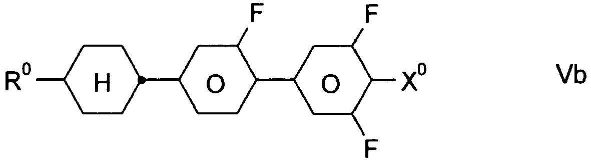 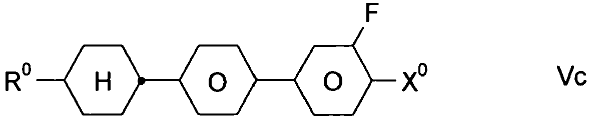 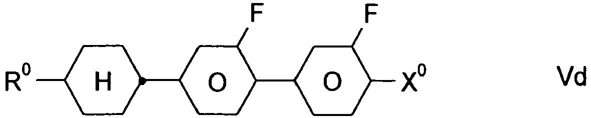 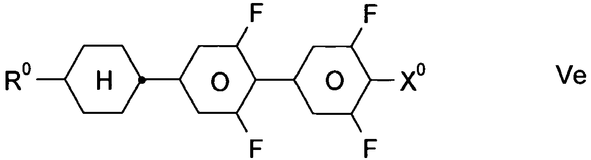 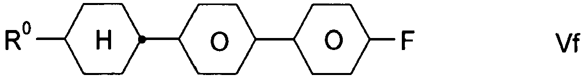 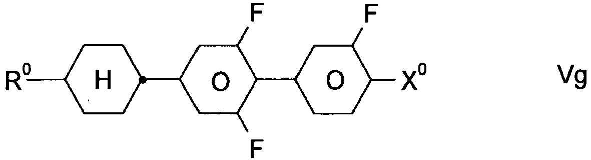 worin R⁰ und X⁰ die oben angegebenen Bedeutungen haben. Vorzugsweise bedeutet R⁰ in Formel V Alkyl mit 1 bis 8 C-Atomen und X⁰ F;
- LC-Medium, welches eine oder mehrere Verbindungen der Formel VI-1 enthält: 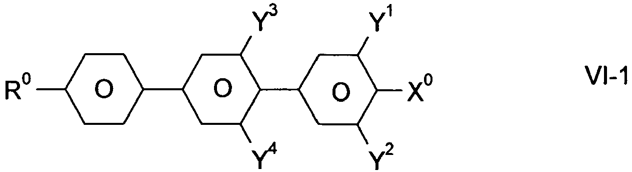 besonders bevorzugt solche ausgewählt aus der Gruppe bestehend aus den folgenden Formeln: 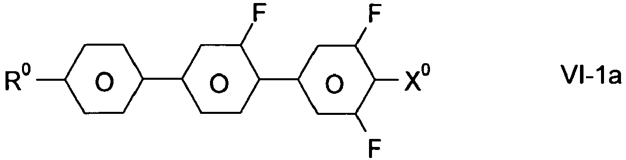 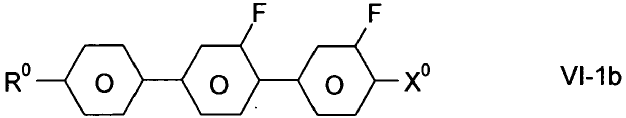 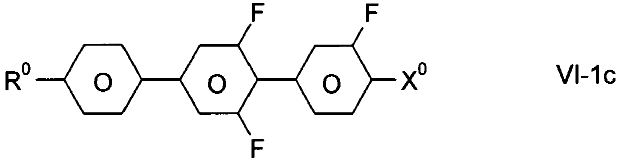 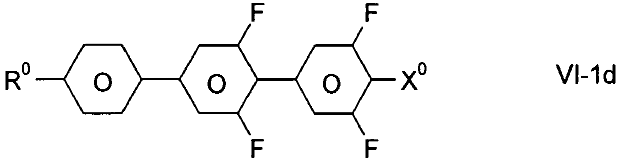 worin R⁰ und X⁰ die oben angegebenen Bedeutungen haben. Vorzugsweise bedeutet R⁰ in Formel VI Alkyl mit 1 bis 8 C-Atomen und X⁰ F, ferner OCF₃.
- LC-Medium, welches eine oder mehrere Verbindungen der Formel VI-2 enthält: 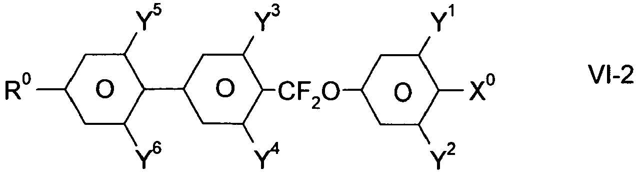 besonders bevorzugt solche ausgewählt aus der Gruppe bestehend aus den folgenden Formeln: 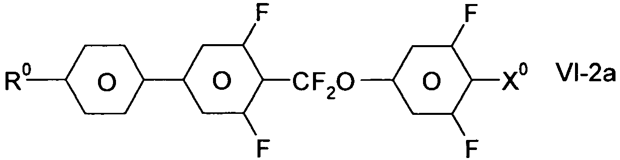 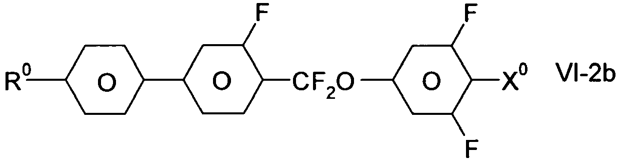 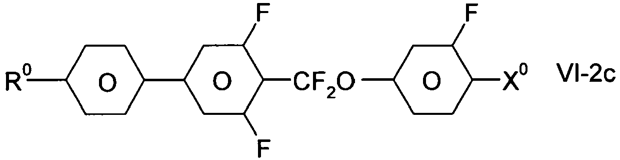 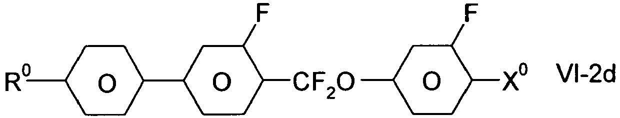 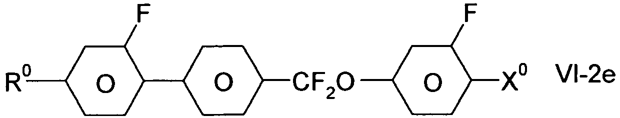 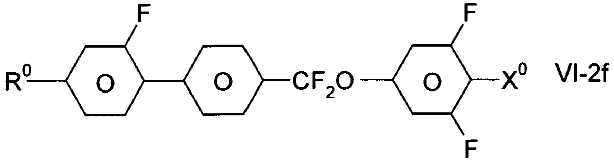 worin R⁰ und X⁰ die oben angegebenen Bedeutungen haben.
   Vorzugsweise bedeutet R⁰ in Formel VI Alkyl mit 1 bis 8 C-Atomen und X⁰ F;
- LC-Medium, welches vorzugsweise eine oder mehrere Verbindungen der Formel VII, worin Z⁰ -CF₂O-, -CH₂CH₂ oder -(CO)O- bedeutet, enthält, besonders bevorzugt solche ausgewählt aus der Gruppe bestehend aus den folgenden Formeln: 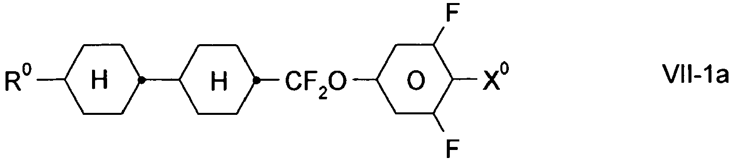 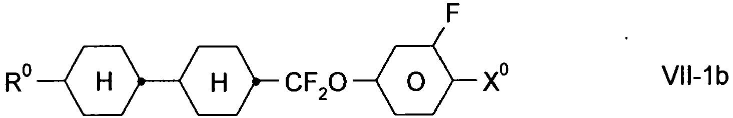 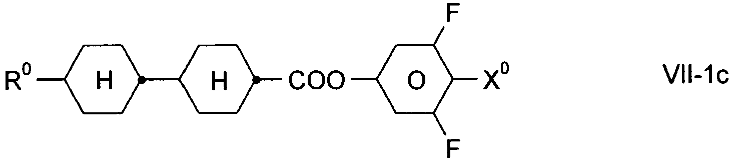 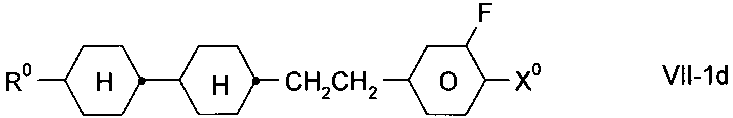 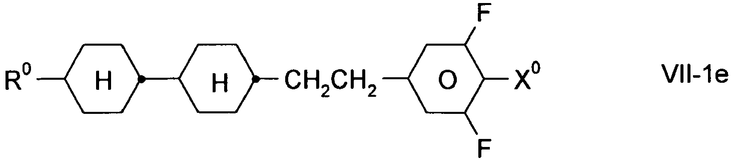 worin R⁰ und X⁰ die oben angegebenen Bedeutungen haben. Vorzugsweise bedeutet R⁰ in Formel VII Alkyl mit 1 bis 8 C-Atomen und X⁰ F, ferner OCF₃.
   Die Verbindungen der Formel VIII sind vorzugsweise ausgewählt aus der Gruppe bestehend aus den folgenden Formeln: 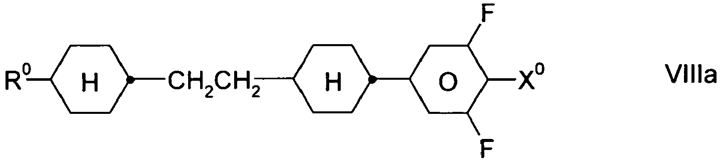 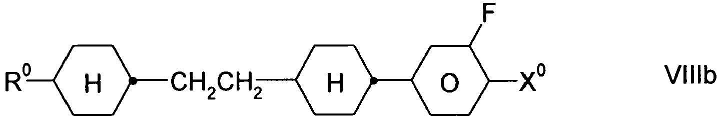 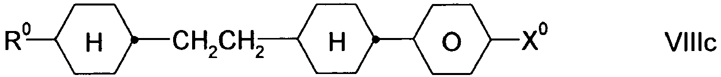 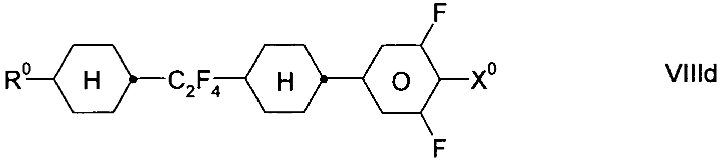 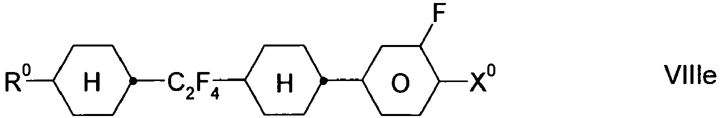 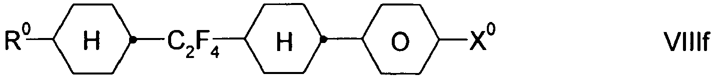 worin R⁰ und X⁰ die oben angegebenen Bedeutungen haben. Vorzugsweise bedeutet R⁰ einen geradkettigen Alkylrest mit 1 bis 8 C-Atomen. X⁰ bedeutet vorzugsweise F.
- LC-Medium, welches zusätzlich eine oder mehrere Verbindungen der folgenden Formel enthält: 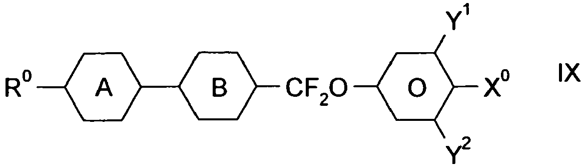 worin R⁰, X⁰, Y¹ und Y² die oben angegebene Bedeutung besitzen, und 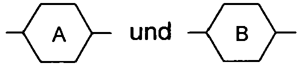 jeweils unabhängig voneinander 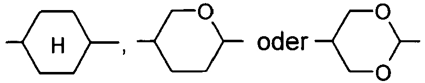 bedeuten, wobei die Ringe A und B nicht beide gleichzeitig Cyclohexylen bedeuten;
   Die Verbindungen der Formel IX sind vorzugsweise ausgewählt aus der Gruppe bestehend aus den folgenden Formeln: 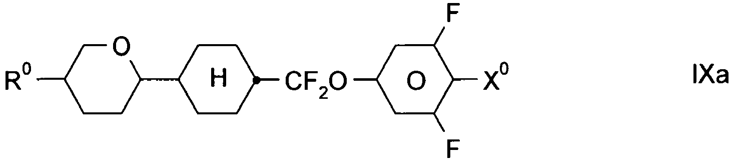 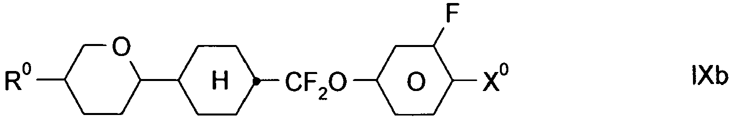 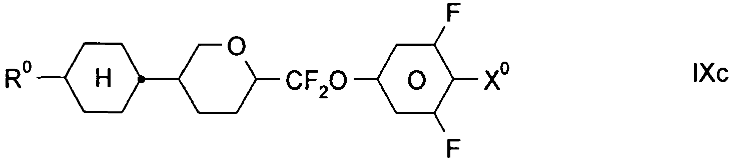 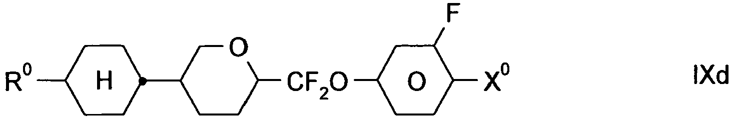 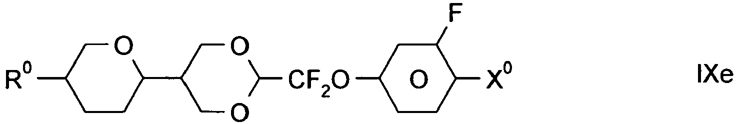 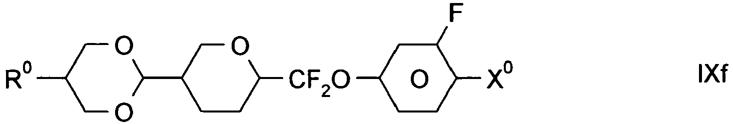 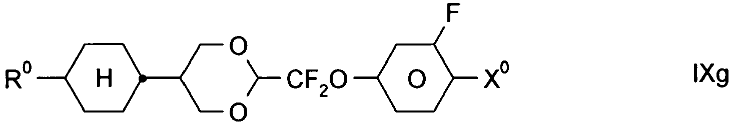 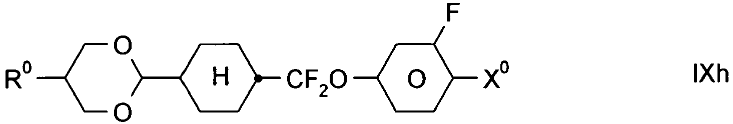 worin R⁰ und X⁰ die oben angegebenen Bedeutungen haben. Vorzugsweise bedeutet R⁰ Alkyl mit 1 bis 8 C-Atomen und X⁰ F. Besonders bevorzugt sind Verbindungen der Formel IXa;
- LC-Medium, welches zusätzlich eine oder mehrere Verbindungen ausgewählt aus der Gruppe bestehend aus den folgenden Formeln enthält: 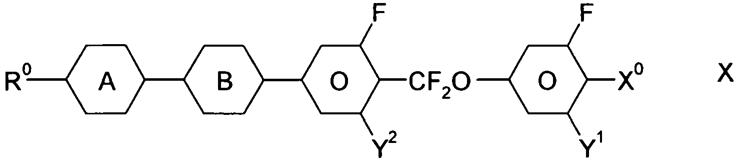 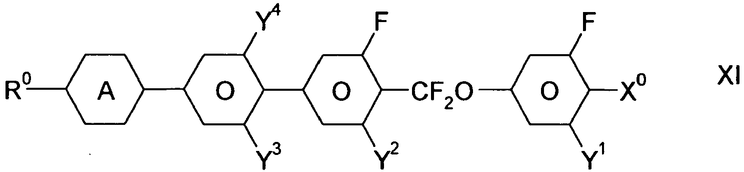 worin R⁰, X⁰ und Y¹⁻⁴ die oben angegebenen Bedeutungen besitzen, und 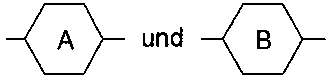 jeweils unabhängig voneinander 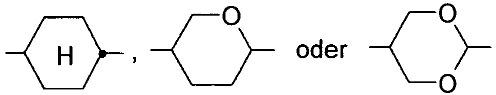 bedeuten;
   Die Verbindungen der Formeln X und XI sind vorzugsweise ausgewählt aus der Gruppe bestehend aus den folgenden Formeln: 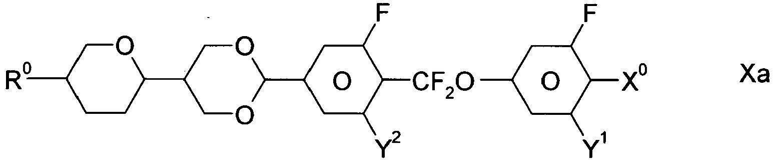 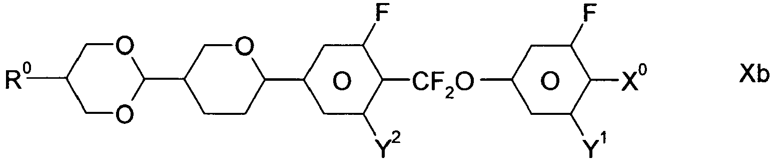 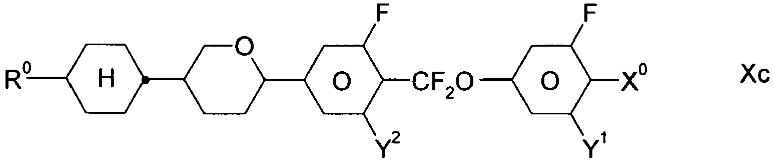 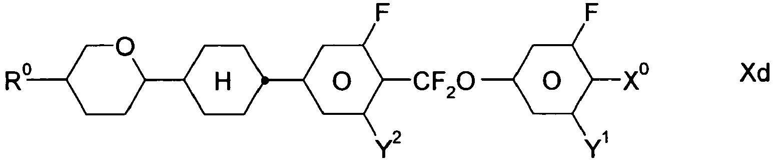 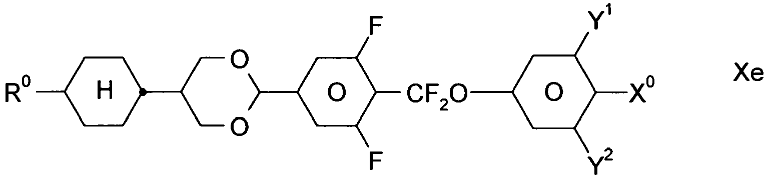 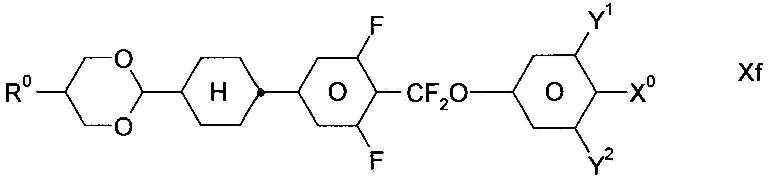 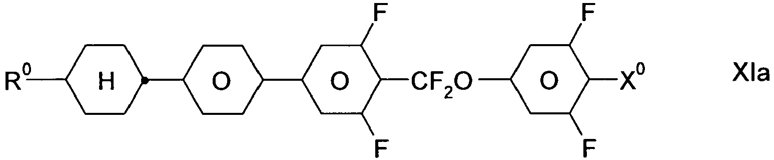 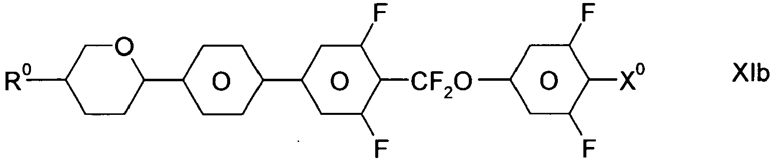 worin R⁰ und X⁰ die oben angegebenen Bedeutungen haben. Vorzugsweise bedeutet R⁰ Alkyl mit 1 bis 8 C-Atomen und/oder X⁰ F. Besonders bevorzugte Verbindungen sind solche, worin Y¹ F und Y² H oder F, vorzugsweise F, bedeuten;
- LC-Medium, welches zusätzlich eine oder mehrere Verbindungen der folgenden Formel XII enthält: 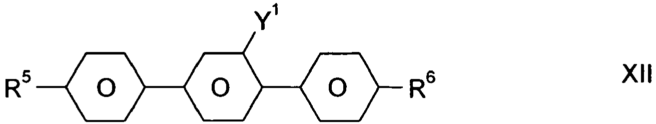 worin R⁵ und R⁶ jeweils unabhängig voneinander n-Alkyl, Alkoxy, Oxaalkyl, Fluoralkyl oder Alkenyl mit jeweils bis zu 9 C-Atomen bedeuten, und vorzugsweise jeweils unabhängig voneinander Alkyl mit 1 bis 7 C-Atomen oder Alkenyl mit 2 bis 7 C-Atomen bedeuten. Y¹ bedeutet H oder F.
   Bevorzugte Verbindungen der Formel XII sind solche ausgewählt aus der Gruppe bestehend aus den folgenden Formeln: 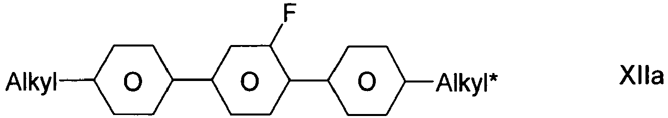 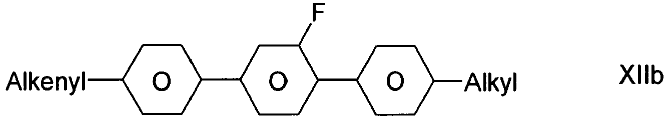 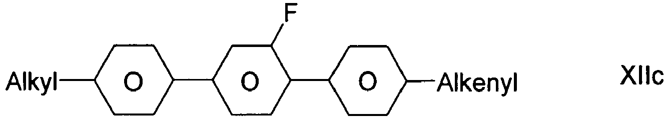 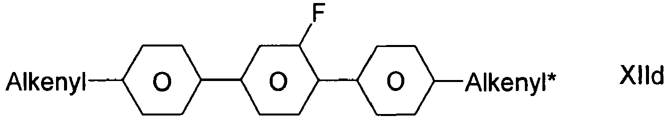 worin
   - Alkyl und Alkyl*: jeweils unabhängig voneinander einen geradkettigen Alkylrest mit 1 bis 6 C-Atomen, und
   - Alkenyl und Alkenyl*: jeweils unabhängig voneinander einen geradkettigen Alkenylrest mit 2 bis 6 C-Atomen
   bedeuten.
   Ganz besonders bevorzugt sind Verbindungen der folgenden Formel 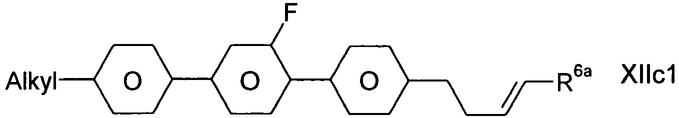 worin Alkyl die oben angegebene Bedeutung hat und R^{6a} H oder CH₃ bedeutet.
- LC-Medium, welches zusätzlich eine oder mehrere Verbindungen ausgewählt aus der Gruppe bestehend aus den folgenden Formeln enthält: 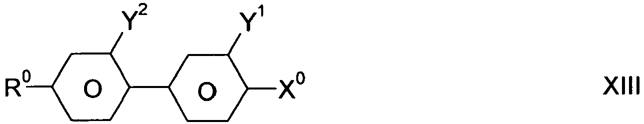 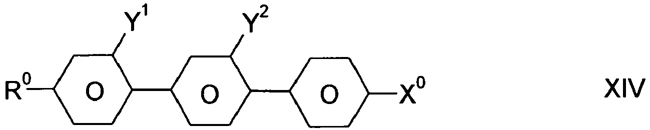 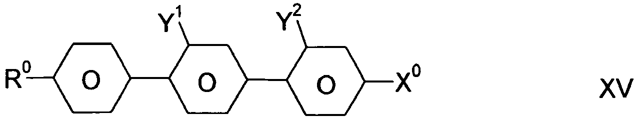 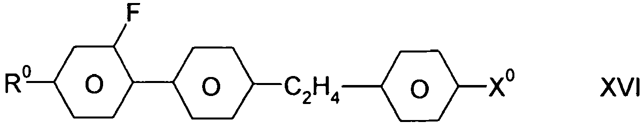 worin R⁰, X⁰, Y¹ und Y² die oben angegebenen Bedeutungen haben. Vorzugsweise bedeutet R⁰ Alkyl mit 1 bis 8 C-Atomen und X⁰ F oder Cl;
   Die Verbindungen der Formeln XIII und XIV sind vorzugsweise ausgewählt aus der Gruppe bestehend aus den folgenden Formeln: 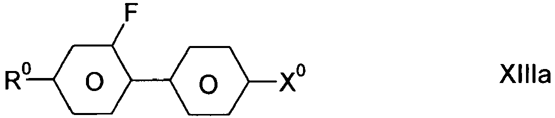 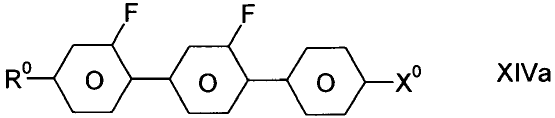 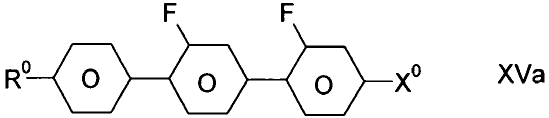 worin R⁰ und X⁰ die oben angegebenen Bedeutungen haben. Vorzugsweise bedeutet R⁰ Alkyl mit 1 bis 8 C-Atomen. In den Verbindungen der Formel XIII bedeutet X⁰ vorzugsweise F oder Cl.
   LC-Medium, welches zusätzlich eine oder mehrere Verbindungen der Formel D1 und/oder D2 enthält: 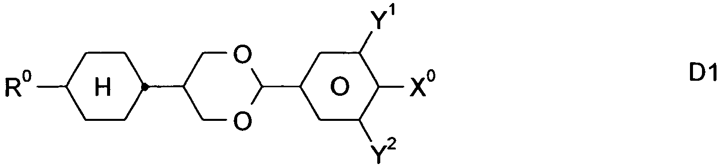 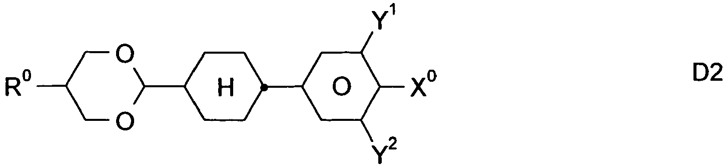 worin Y¹, Y², R⁰ und X⁰ die oben angegebene Bedeutung besitzen. Vorzugsweise bedeutet R⁰ Alkyl mit 1 bis 8 C-Atomen und X⁰ F. Besonders bevorzugt sind Verbindungen der folgenden Formeln: 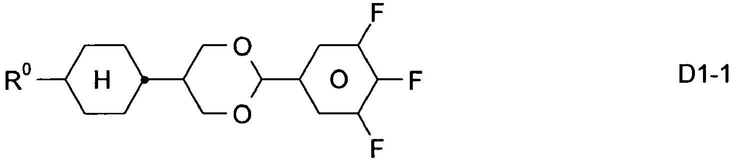 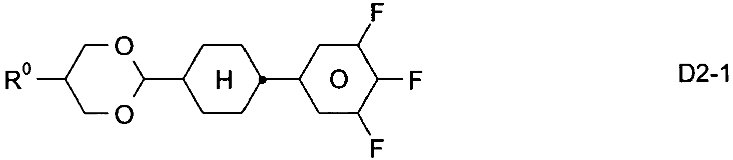 worin R⁰ die oben angegebenen Bedeutungen hat und vorzugsweise geradkettiges Alkyl mit 1 bis 6 C-Atomen, insbesondere C₂H₅, n-C₃H₇ oder n-C₅H₁₁ bedeutet.
   LC-Medium, welches zusätzlich eine oder mehrere Verbindungen der folgenden Formeln enthält: 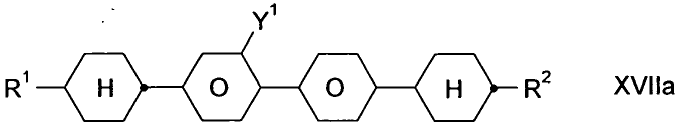 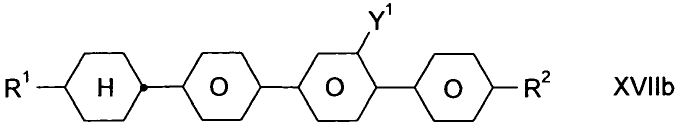 worin Y¹, R¹ und R² die oben angegebene Bedeutung besitzen. R¹ und R² bedeuten vorzugsweise jeweils unabhängig voneinander Alkyl mit 1 bis 8 C-Atomen. Y¹ bedeutet vorzugsweise F. Bevorzugte Medien enthalten 1 - 15 Gew.%, insbesondere 1 - 10 Gew.% dieser Verbindungen.
- LC-Medium, welches zusätzlich eine oder mehrere Verbindungen der folgenden Formel enthält: 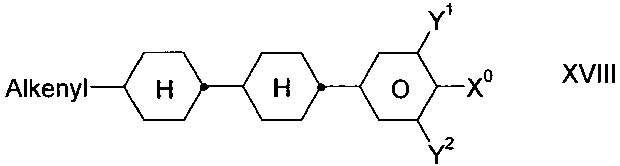 worin X⁰, Y¹ und Y² die oben angegebenen Bedeutungen besitzen und "Alkenyl" C₂₋₇-Alkenyl bedeutet. Besonders bevorzugt sind Verbindungen der folgenden Formel, 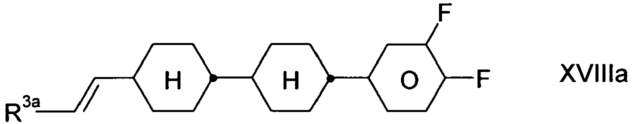 worin R^{3a} die oben angegebene Bedeutung hat und vorzugsweise H bedeutet;
- LC-Medium, welches zusätzlich eine oder mehrere Vierkern-Verbindungen ausgewählt aus der Gruppe bestehend aus den Formeln XIX bis XXV enthält: 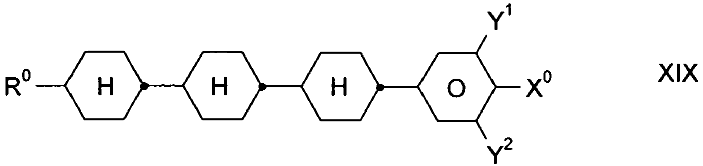 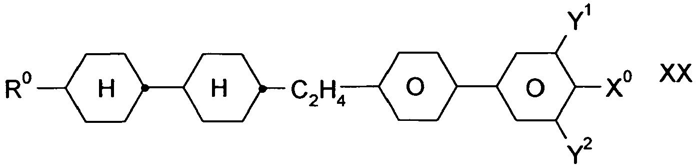 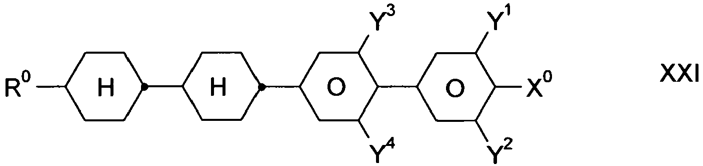 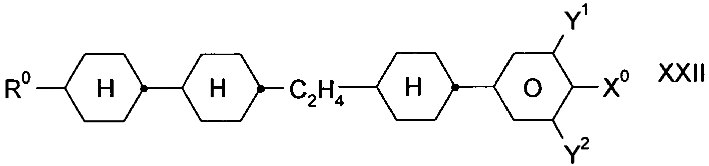 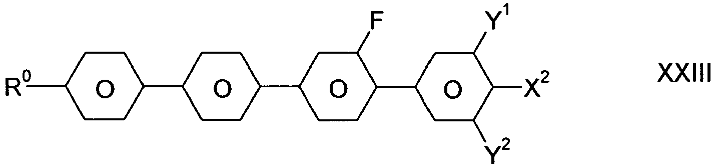 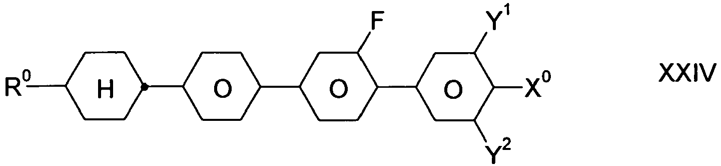 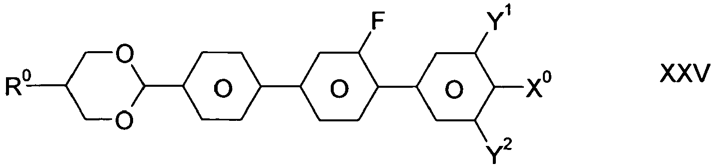 worin Y¹⁻⁴, R⁰ und X⁰ jeweils unabhängig voneinander eine der oben angegebenen Bedeutungen haben. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 8 C-Atomen.
- LC-Medium, welches zusätzlich eine oder mehrere Verbindungen der folgenden Formel enthält: 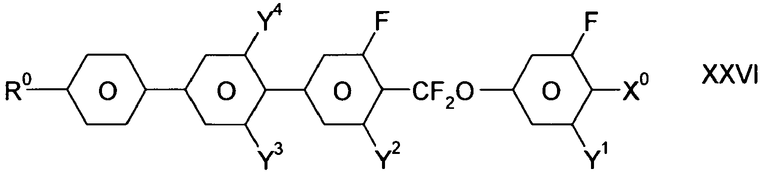 worin R⁰, X⁰ und Y¹⁻⁴ die oben angegebenen Bedeutungen besitzen.
   Besonders bevorzugt sind Verbindungen der folgenden Formel: 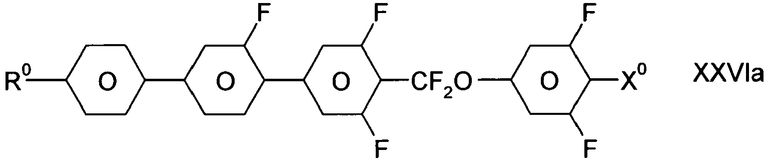 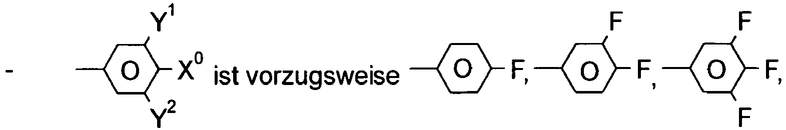 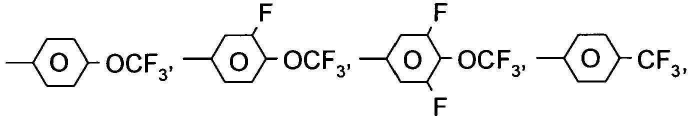 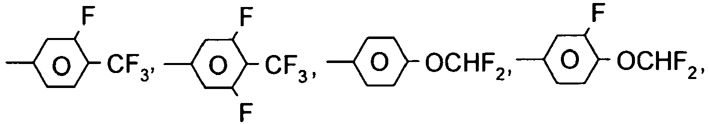 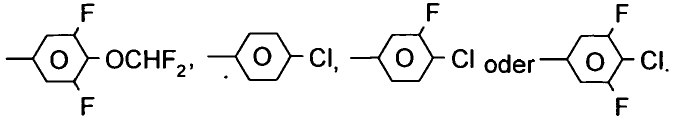
- R⁰ ist im Allgemeinen vorzugsweise geradkettiges Alkyl oder Alkenyl mit 2 bis 7 C-Atomen;
- X⁰ ist vorzugsweise F, ferner OCF₃, Cl oder CF₃;
- Das Medium enthält vorzugsweise eine oder mehrere Verbindungen ausgewählt aus der Gruppe der Verbindungen der Formel II;
- Das Medium enthält vorzugsweise eine oder mehrere Verbindungen ausgewählt aus der Gruppe der Verbindungen der Formeln VI-2, VII-1a, VII-1b, IX, X, XI und XXVI (CF₂O-verbrückte Verbindungen); der Gesamtgehalt an Verbindungen der Formeln VI-2, VII-1a, VII-1b, IX, X, XI und XXVI beträgt bevorzugt 35 Gew.-% oder mehr, besonders bevorzugt 40 Gew.-% oder mehr und ganz besonders bevorzugt 45 Gew.-% oder mehr.
- Der Anteil an Verbindungen der Formeln II-XXVII im Gesamtgemisch beträgt vorzugsweise 20 bis 99 Gew.%;
- Das Medium enthält vorzugsweise 25-80 Gew.%, besonders bevorzugt 30-70 Gew.% an Verbindungen der Formel II und/oder III;
- Das Medium enthält vorzugsweise 20-70 Gew.%, besonders bevorzugt 25-60 Gew.% an Verbindungen der Formel IIa;
- Das Medium enthält vorzugsweise 2-25 Gew.%, besonders bevorzugt 3-20 Gew.% ausgewählt aus der Gruppe der Verbindungen der VI-2;
- Das Medium enthält insgesamt 2-30 Gew.%, besonders bevorzugt 3-20 Gew.% an Verbindungen der Formeln XI und XXVII zusammen;
- Das Medium enthält vorzugsweise 1-20 Gew.%, besonders bevorzugt 2-15 Gew.% an Verbindungen der Formel XXIV;
- Das Medium enthält insgesamt 15-65 Gew.%, besonders bevorzugt 30-55 Gew.% ausgewählt aus den hochpolaren Verbindungen der Formeln VI-2, X, XI und XXV zusammen.

Die nematische Phase des dielektrisch negativen oder positiven FK-Mediums gemäß der Erfindung hat bevorzugt eine nematische Phasen in einem Temperaturbereich von 10 °C oder weniger bis 60 °C oder mehr, besonders bevorzugt von 0 oder weniger bis 70 °C oder mehr.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m, z und k sind ganze Zahlen und bedeuten vorzugsweise 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strich ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CnH₂ₙ₊₁ | Cl | H | H |
| nOF | OCₙH₂ₙ₊₁ | F | H | H |
| nF.F | CₙH₂ₙ₊₁ | F | F | H |
| nF.F.F | CnH₂ₙ₊₁ | F | F | F |
| nOCF₃ | CnH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

**Tabelle A**

| |
|---|
| 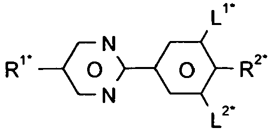 |
| **PYP** |
| 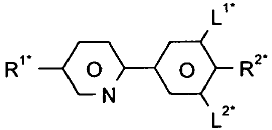 |
| **PYRP** |
| 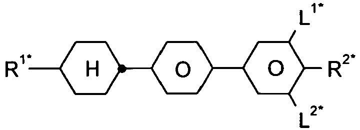 |
| **BCH** |
| 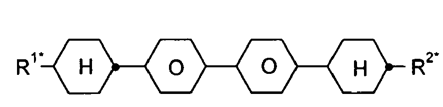 |
| **CBC** |
| 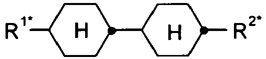 |
| **CCH** |
| 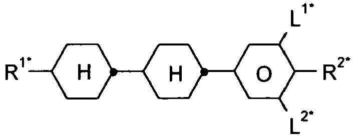 |
| **CCP** |
| 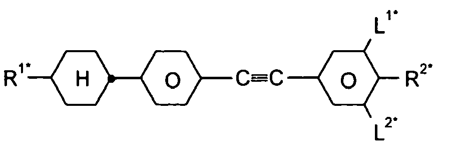 |
| **CPTP** |
| 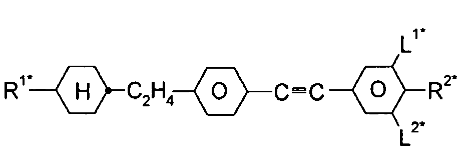 |
| **CEPTP** |
| 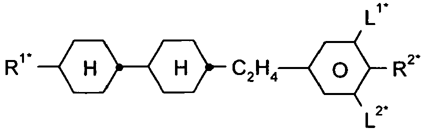 |
| **ECCP** |
| 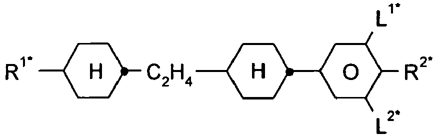 |
| **CECP** |
| 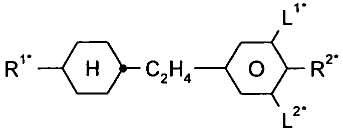 |
| **EPCH** |
| 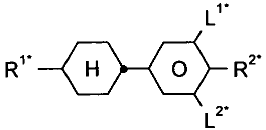 |
| **PCH** |
| 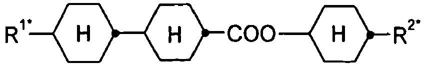 |
| **CH** |
| 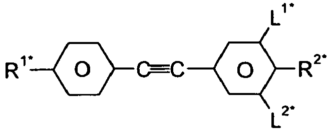 |
| **PTP** |
| 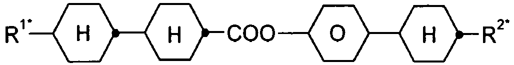 |
| **CCPC** |
| 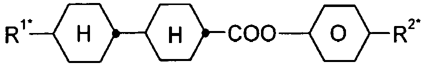 |
| **CP** |
| 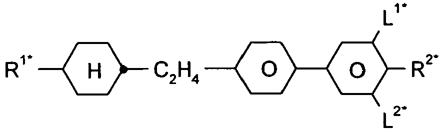 |
| **BECH** |
| 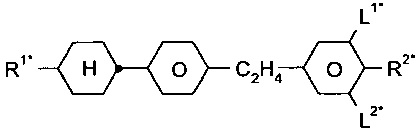 |
| **EBCH** |
| 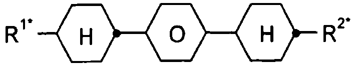 |
| **CPC** |
| 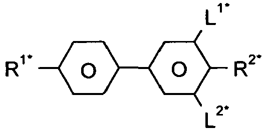 |
| **B** |
| 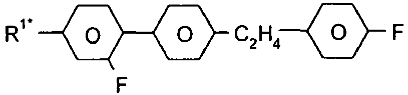 |
| **FET-nF** |
| 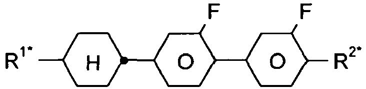 |
| **CGG** |
| 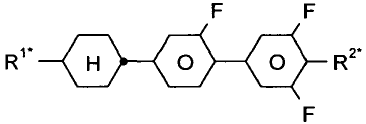 |
| **CGU** |
| 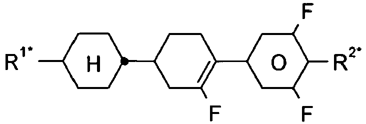 |
| **CFU** |

**Tabelle B**

| n, m, z bedeuten unabhängig voneinander vorzugsweise 1, 2, 3, 4, 5 oder 6. |
|---|
| 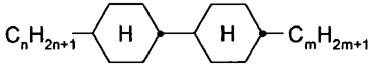 |
| CCH-nm |
| 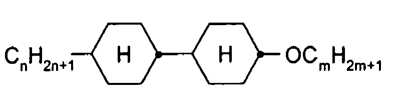 |
| CCH-nOm |
| 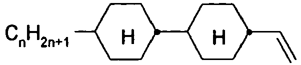 |
| CC-n-V |
| 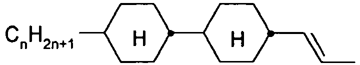 |
| CC-n-V1 |
| 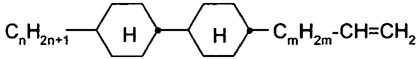 |
| CC-n-mV |
| 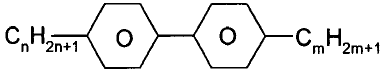 |
| PP-n-m |
| 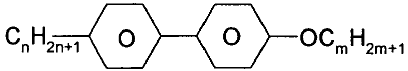 |
| PP-n-Om |
| 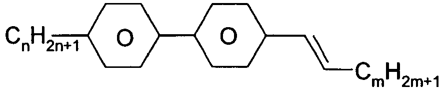 |
| PP-n-Vm |
| 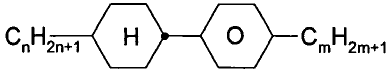 |
| PCH-nm |
| 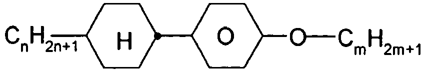 |
| PCH-nOm |
| 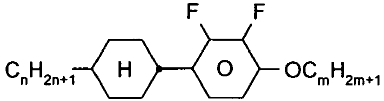 |
| CY-n-Om |
| 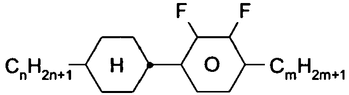 |
| CY-n-m |
| 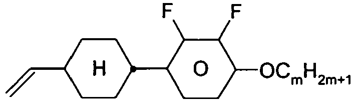 |
| CY-V-Om |
| 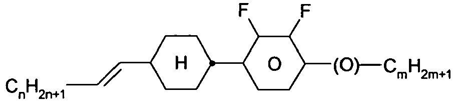 |
| CY-nV-(O)m |
| 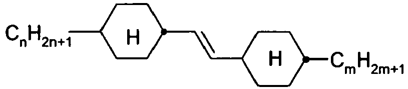 |
| CVC-n-m |
| 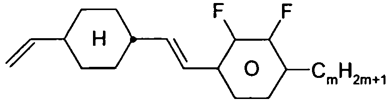 |
| CVY-V-m |
| 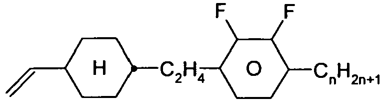 |
| CEY-V-m |
| 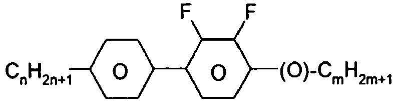 |
| PY-n-(O)m |
| 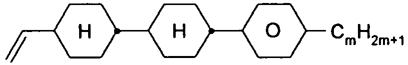 |
| CCP-V-m |
| 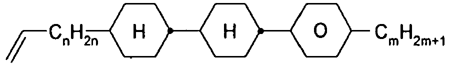 |
| CCP-Vn-m |
| 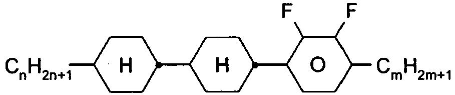 |
| CCY-n-m |
| 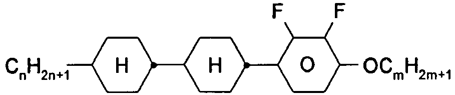 |
| CCY-n-Om |
| 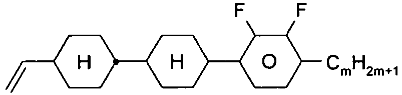 |
| CCY-V-m |
| 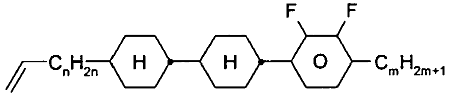 |
| CCY-Vn-m |
| 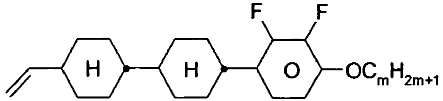 |
| CCY-V-Om |
| 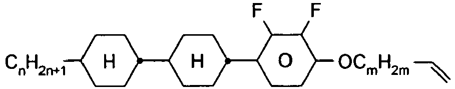 |
| CCY-n-OmV |
| 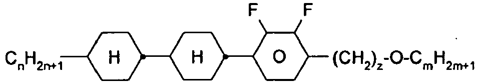 |
| CCY-n-zOm |
| 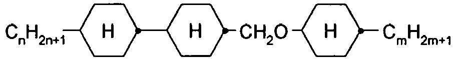 |
| CCOC-n-m |
| 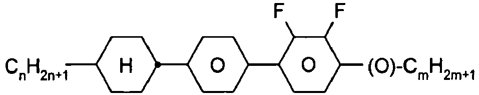 |
| CPY-n-(O)m |
| 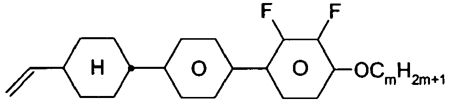 |
| CPY-V-Om |
| 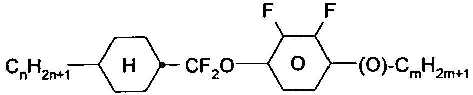 |
| CQY-n-(O)m |
| 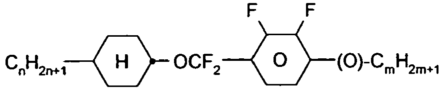 |
| CQIY-n-(O)m |
| 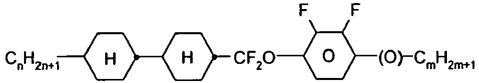 |
| CCQY-n-(O)m |
| 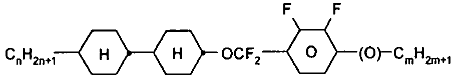 |
| CCQIY-n-(O)m |
| 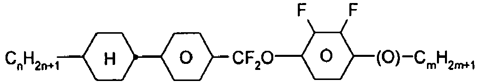 |
| CPQY-n-(O)m |
| 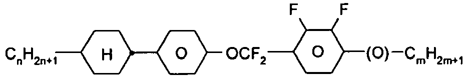 |
| CPQIY-n-Om |
| 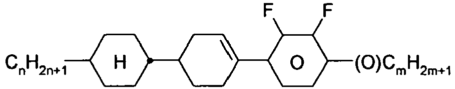 |
| CLY-n-(O)m |
| 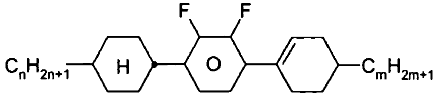 |
| CYLI-n-m |
| 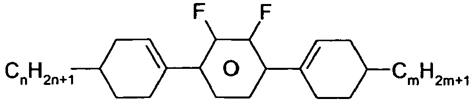 |
| LYLI-n-m |
| 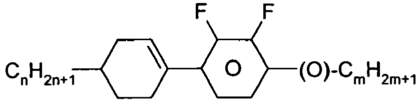 |
| LY-n-(O)m |
| 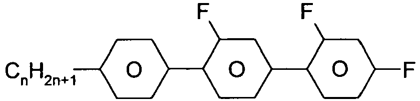 |
| PGIGI-n-F |
| 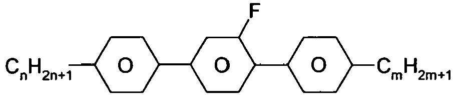 |
| PGP-n-m |
| 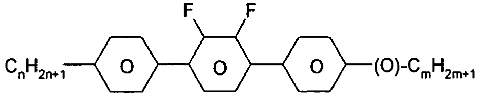 |
| PYP-n-(O)m |
| 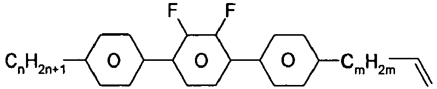 |
| PYP-n-mV |
| 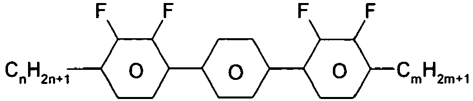 |
| YPY-n-m |
| 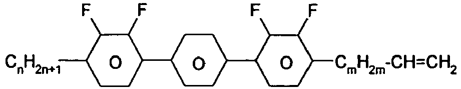 |
| YPY-n-mV |
| 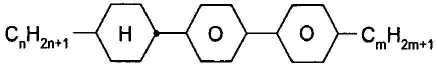 |
| BCH-nm |
| 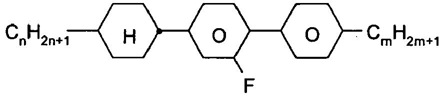 |
| BCH-nmF |
| 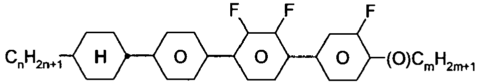 |
| CPYP-n-(O)m |
| 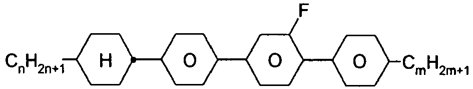 |
| CPGP-n-m |
| 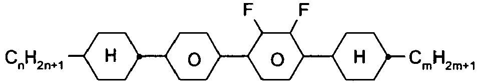 |
| CPYC-n-m |
| 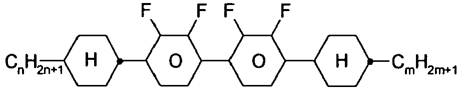 |
| CYYC-n-m |
| 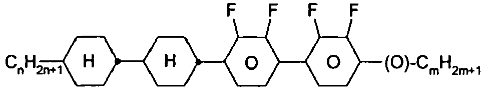 |
| CCYY-n-m |
| 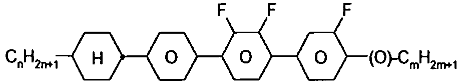 |
| CPYG-n-(O)m |
| 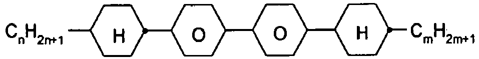 |
| CBC-nm |
| 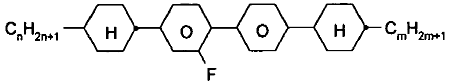 |
| CBC-nmF |
| 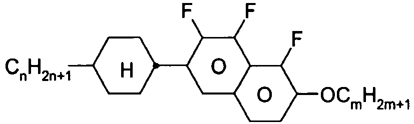 |
| CNap-n-Om |
| 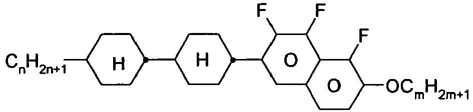 |
| CCNap-n-Om |
| 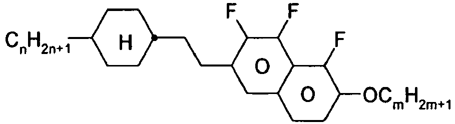 |
| CENap-n-Om |
| 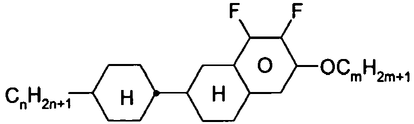 |
| CTNap-n-Om |
| 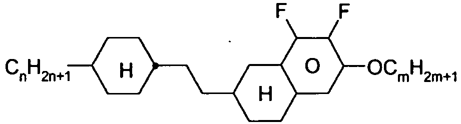 |
| CETNap-n-Om |
| 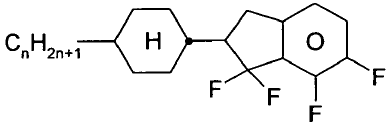 |
| CK-n-F |
| 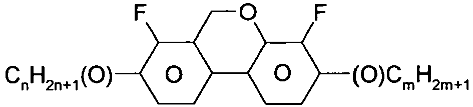 |
| DFDBC-n(O)-(O)m |
| 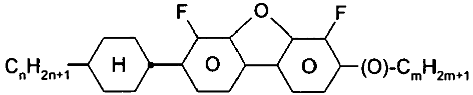 |
| C-DFDBF-n-(O)m |
| 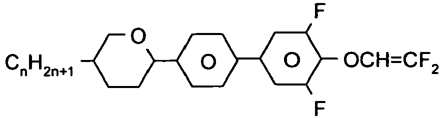 |
| **APU-n-OXF** |
| 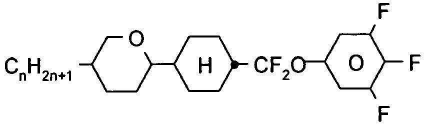 |
| **ACQU-n-F** |
| 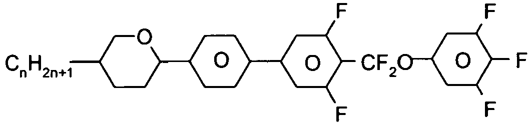 |
| **APUQU-n-F** |
| 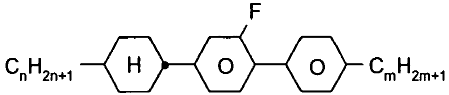 |
| **BCH-n.Fm** |
| 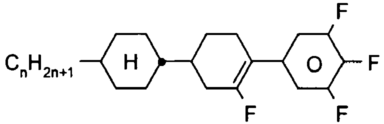 |
| **CFU-n-F** |
| 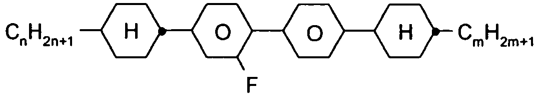 |
| **CBC-nmF** |
| 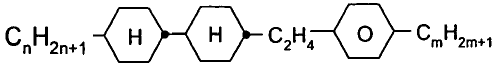 |
| **ECCP-nm** |
| 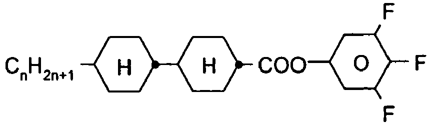 |
| **CCZU-n-F** |
| 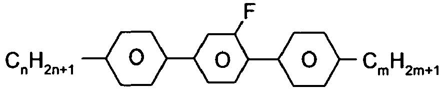 |
| **PGP-n-m** |
| 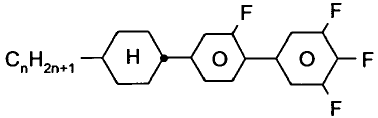 |
| **CGU-n-F** |
| 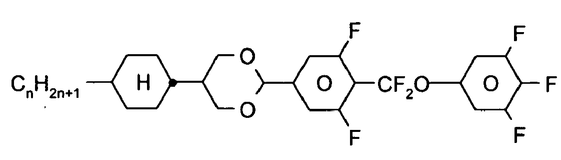 |
| **CDUQU-n-F** |
| 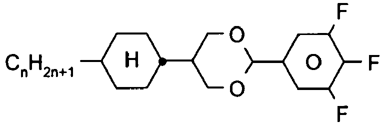 |
| **CDU-n-F** |
| 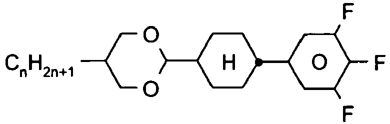 |
| **DCU-n-F** |
| 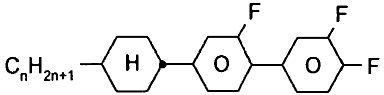 |
| **CGG-n-F** |
| 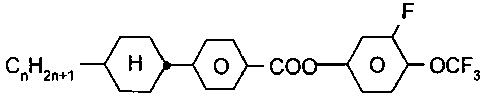 |
| **CPZG-n-OT** |
| 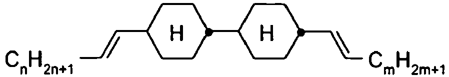 |
| **CC-nV-Vm** |
| 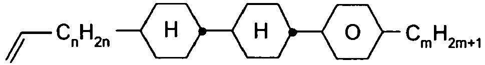 |
| **CCP-Vn-m** |
| 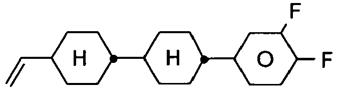 |
| **CCG-V-F** |
| 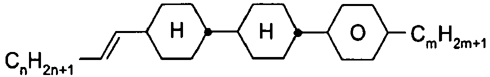 |
| **CCP-nV-m** |
| 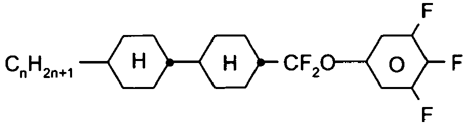 |
| **CCQU-n-F** |
| 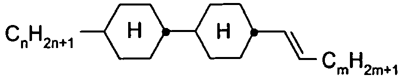 |
| **CC-n-Vm** |
| 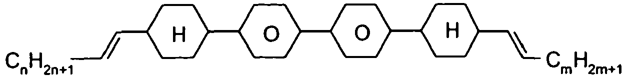 |
| **CPPC-nV-Vm** |
| 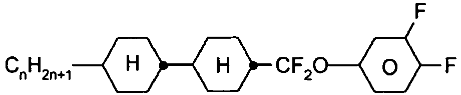 |
| **CCQG-n-F** |
| 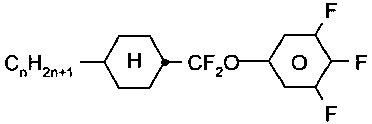 |
| **CQU-n-F** |
| 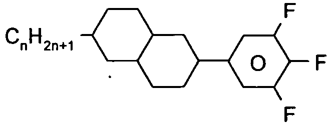 |
| **Dec-U-n-F** |
| 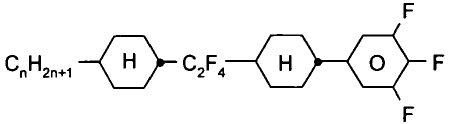 |
| **CWCU-n-F** |
| 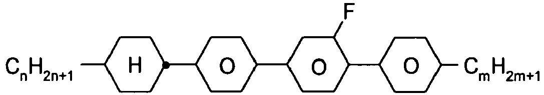 |
| **CPGP-n-m** |
| 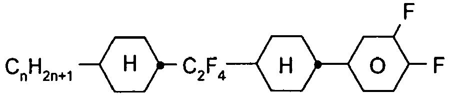 |
| **CWCG-n-F** |
| 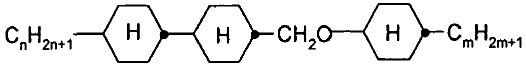 |
| **CCOC-n-m** |
| 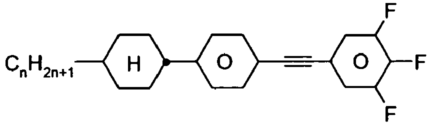 |
| **CPTU-n-F** |
| 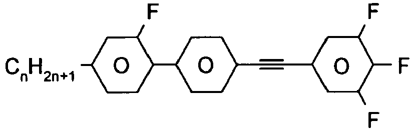 |
| **GPTU-n-F** |
| 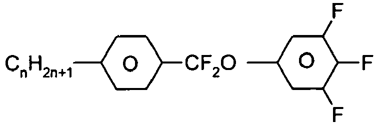 |
| **PQU-n-F** |
| 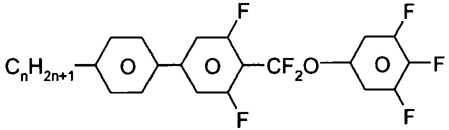 |
| **PUQU-n-F** |
| 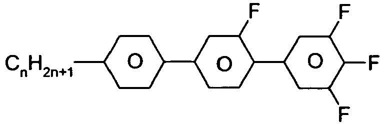 |
| **PGU-n-F** |
| 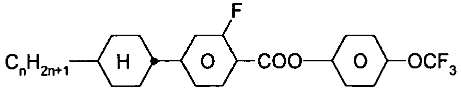 |
| **CGZP-n-OT** |
| 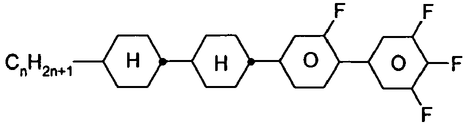 |
| **CCGU-n-F** |
| 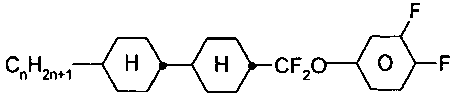 |
| **CCQG-n-F** |
| 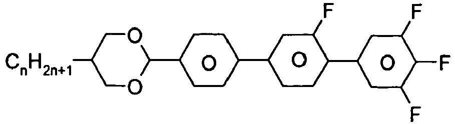 |
| **DPGU-n-F** |
| 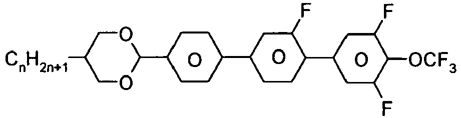 |
| **DPGU-n-OT** |
| 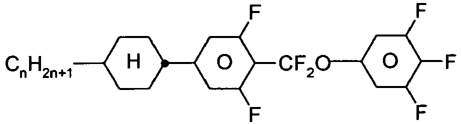 |
| **CUQU-n-F** |
| 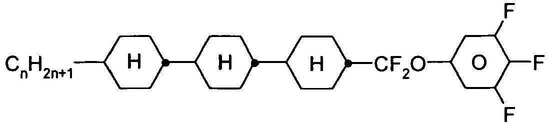 |
| **CCCQU-n-F** |
| 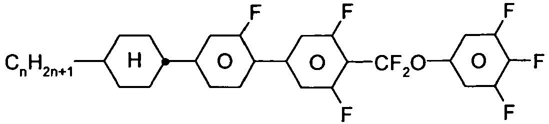 |
| **CGUQU-n-F** |
| 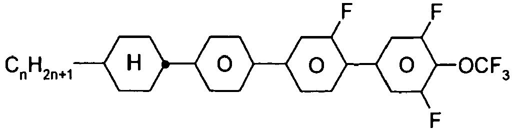 |
| **CPGU-n-OT** |
| 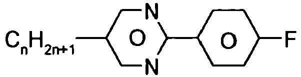 |
| **PYP-n-F** |
| 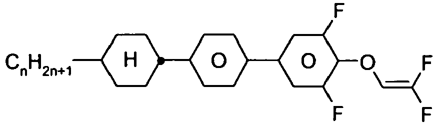 |
| **CPU-n-OXF** |
| 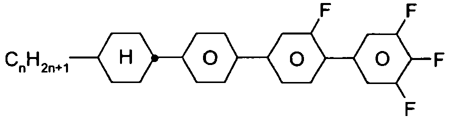 |
| **CPGU-n-F** |
| 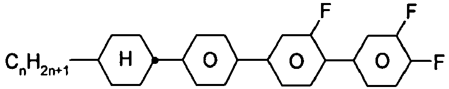 |
| **CPGG-n-F** |
| 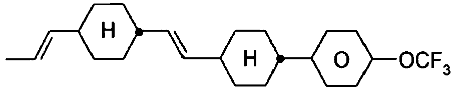 |
| **CVCP-1V-OT** |
| 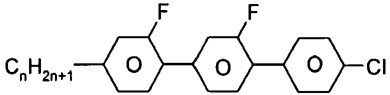 |
| **GGP-n-Cl** |
| 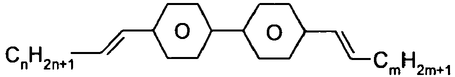 |
| **PP-nV-Vm** |
| 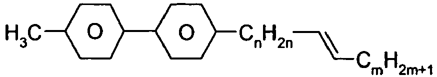 |
| **PP-1-nVm** |
| 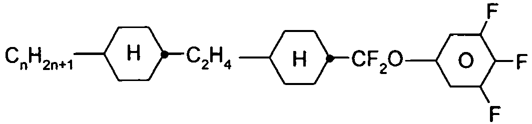 |
| **CWCQU-n-F** |
| 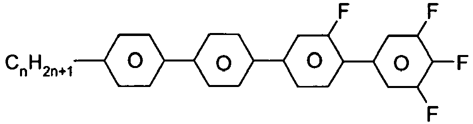 |
| **PPGU-n-F** |
| 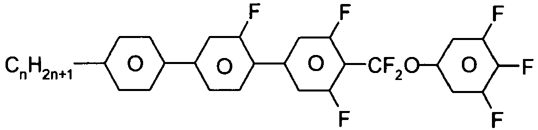 |
| **PGUQU-n-F** |
| 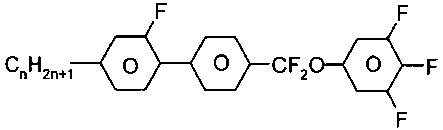 |
| **GPQU-n-F** |
| 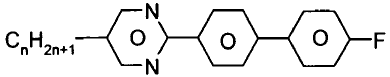 |
| **MPP-n-F** |
| 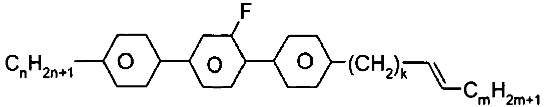 |
| **PGP-n-kVm** |
| 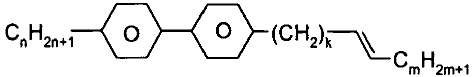 |
| **PP-n-kVm** |
| 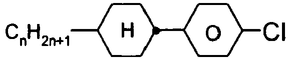 |
| **PCH-nCl** |
| 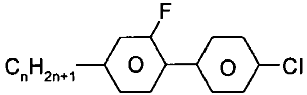 |
| **GP-n-Cl** |
| 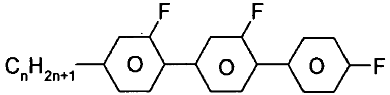 |
| **GGP-n-F** |
| 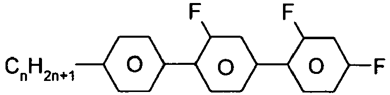 |
| **PGIGI-n-F** |
| 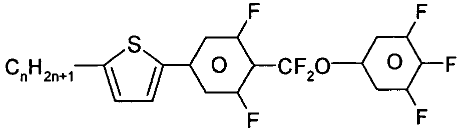 |
| **SUQU-n-F** |
| 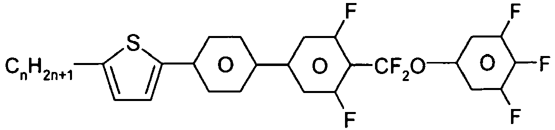 |
| **SPUQU-n-F** |

In einer bevorzugten Ausführungsform der vorliegenden Erfindung enthalten die erfindungsgemäßen LC-Medien eine oder mehrere Verbindungen ausgewählt aus der Gruppe bestehend aus Verbindungen der Tabelle A und B.

**Tabelle C .**

| |
|---|
| In der Tabelle C werden mögliche chirale Dotierstoffe angegeben, die den erfindungsgemäßen FK-Medien zugesetzt werden können. |
| 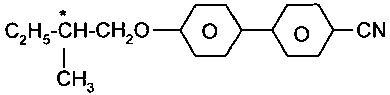 |
| **C 15** |
| 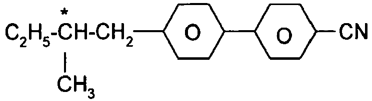 |
| **CB 15** |
| 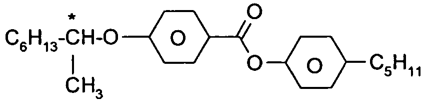 |
| **CM 21** |
| 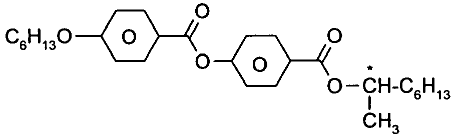 |
| **R/S-811** |
| 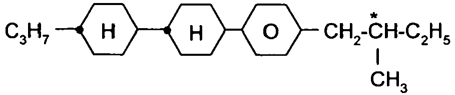 |
| **CM 44** |
| 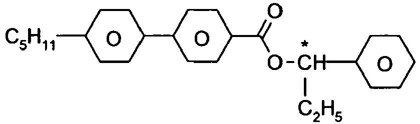 |
| **CM 45** |
| 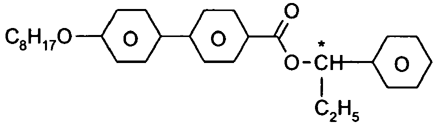 |
| **CM 47** |
| 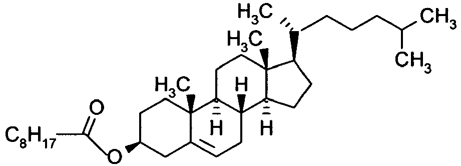 |
| **CN** |
| 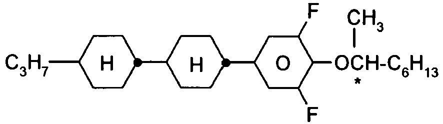 |
| **R/S-2011** |
| 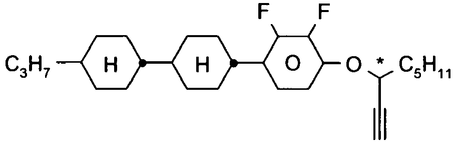 |
| **R/S-3011** |
| 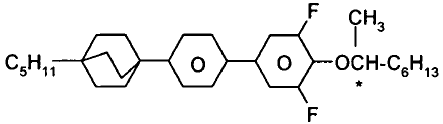 |
| **R/S-4011** |
| 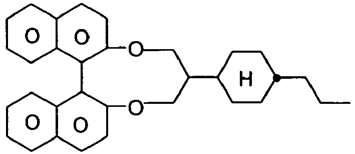 |
| **R/S-5011** |
| 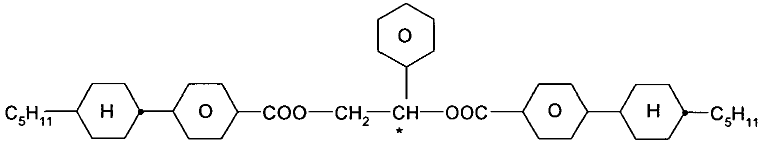 |
| **R/S-1011** |

Optional enthalten die FK-Medien 0 bis 10 Gew.%, insbesondere 0,01 bis 5 Gew.%, besonders bevorzugt 0,1 bis 3 Gew.% an Dotierstoffen, vorzugsweise ausgewählt aus der Gruppe bestehend aus Verbindungen der Tabelle C.

**Tabelle D**

| | |
|---|---|
| In der Tabelle D werden mögliche Stabilisatoren angegeben, die den erfindungsgemäßen FK-Medien zugesetzt werden können. (n bedeutet hier eine ganze Zahl von 1 bis 12, vorzugsweise 1, 2, 3, 4, 5, 6, 7 oder 8, endständige Methylgruppen sind nicht gezeigt). | |
| 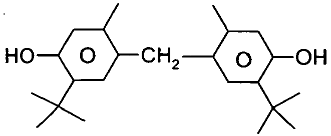 | 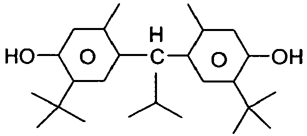 |
| 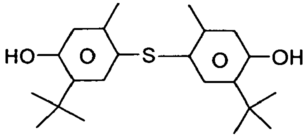 | 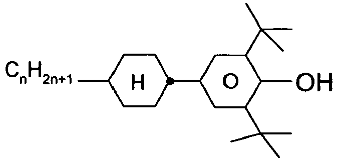 |
| 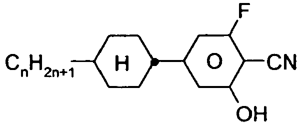 | 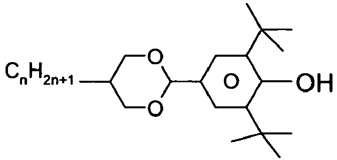 |
| 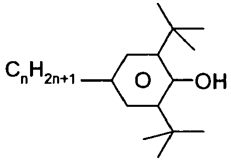 | 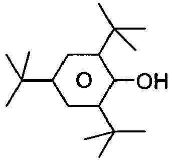 |
| 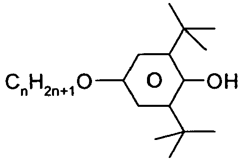 | 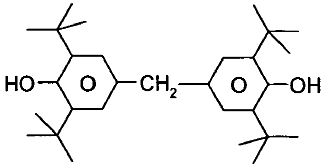 |
| 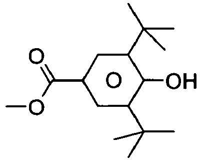 | 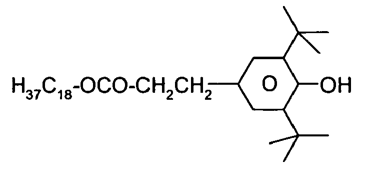 |
| 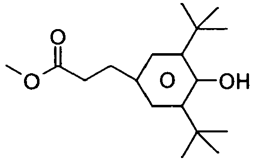 | 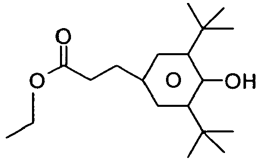 |
| 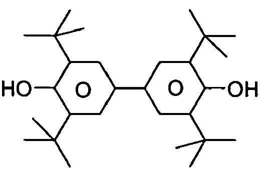 | 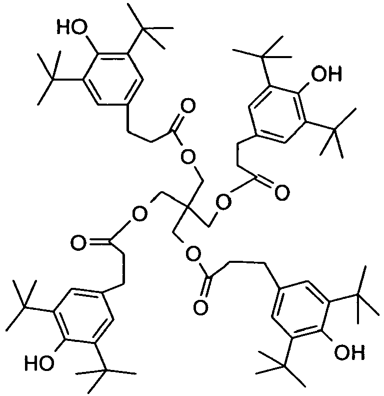 |
| 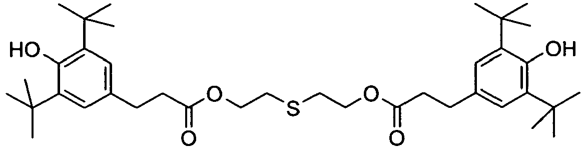 | |
| 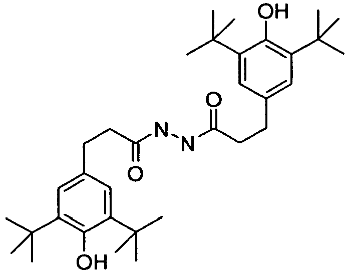 | 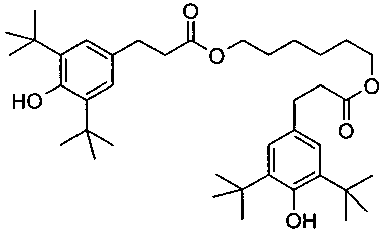 |
| 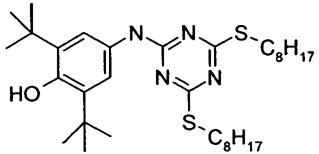 | 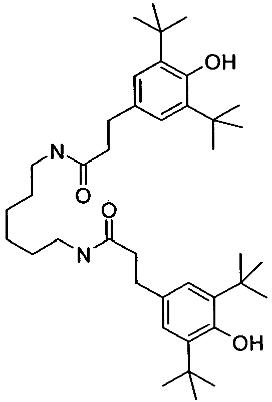 |
| 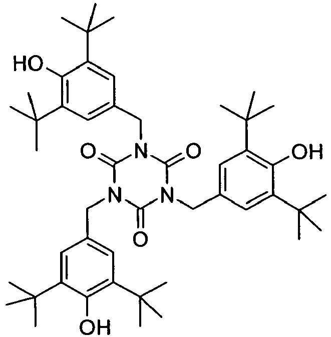 | 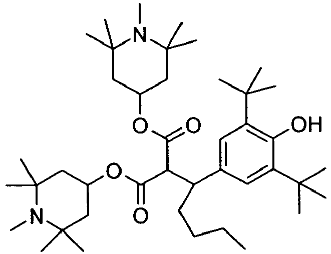 |
| 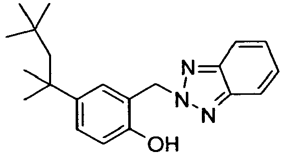 | 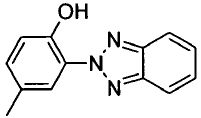 |
| 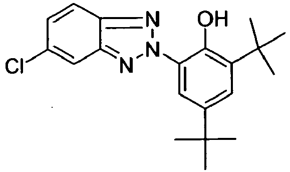 | 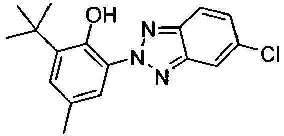 |
| 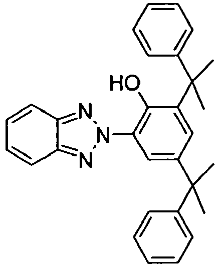 | 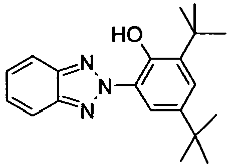 |
| 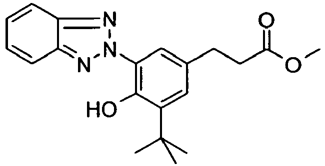 | 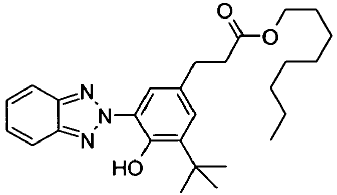 |
| 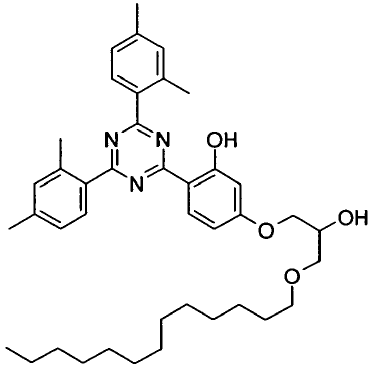 | 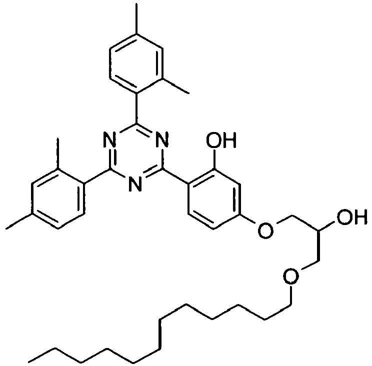 |
| 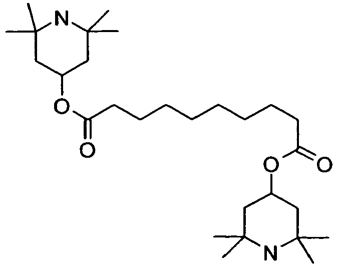 | 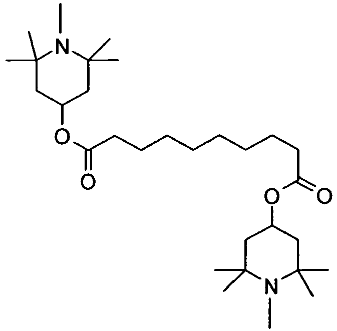 |

Vorzugsweise enthalten die FK-Medien 0 bis 10 Gew.%, insbesondere 1 ppm bis 5 Gew.%, besonders bevorzugt 1ppm bis 1 Gew.% an Stabilisatoren. Vorzugsweise enthalten die FK-Medien einen oder mehrere Stabilisatoren ausgewählt aus der Gruppe bestehend aus Verbindungen der Tabelle D.

**Tabelle E**

| In der Tabelle E sind Beispielverbindungen zusammengestellt, die in den FK-Medien gemäß der vorliegenden Erfindung vorzugsweise als polymerisierbare Verbindungen verwendet werden können. | |
|---|---|
| 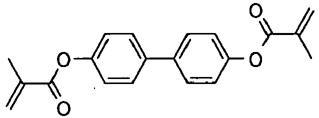 | 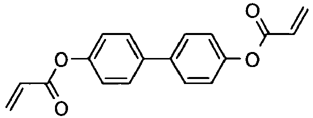 |
| **RM-1** | **RM-2** |
| 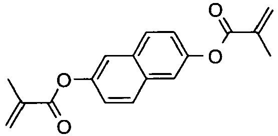 | 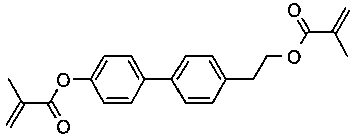 |
| **RM-3** | **RM-4** |
| 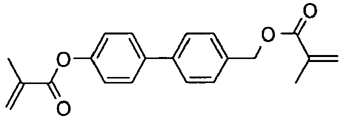 | 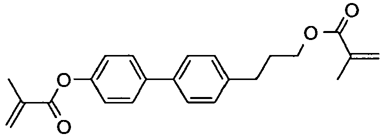 |
| **RM-5** | **RM-6** |
| 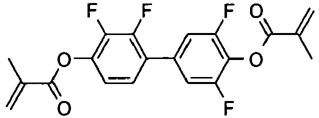 | 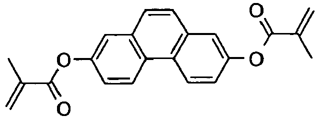 |
| **RM-7** | **RM-8** |
| 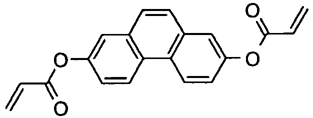 | 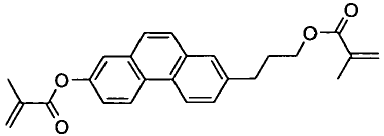 |
| **RM-9** | **RM-10** |
| 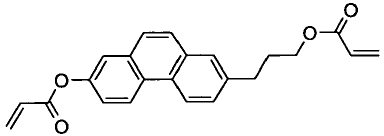 | 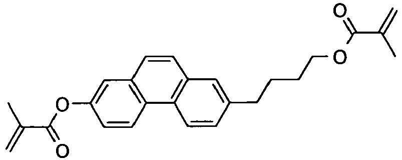 |
| **RM-11** | **RM-12** |
| 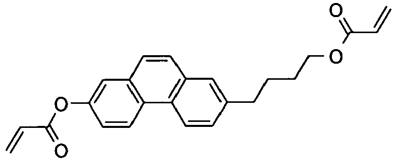 | |
| | **RM-13** |
| 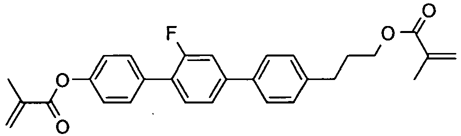 | |
| | **RM-14** |
| 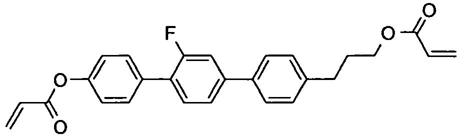 | |
| **RM-15** | |
| 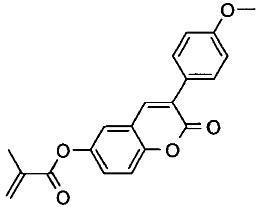 | 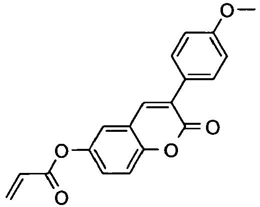 |
| **RM-16** | **RM-17** |
| 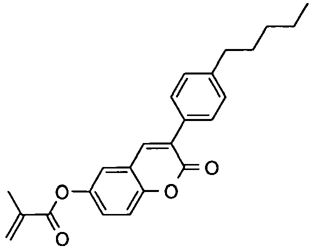 | 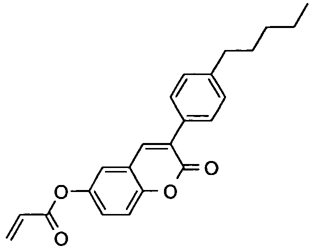 |
| **RM-18** | **RM-19** |
| 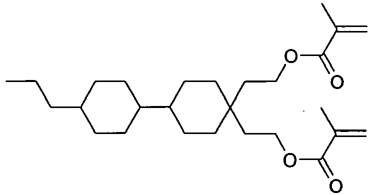 | 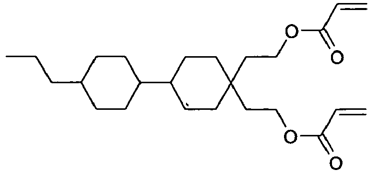 |
| **RM-20** | **RM-21** |
| 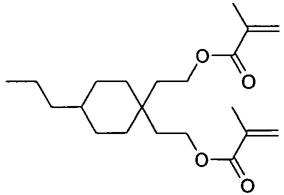 | **RM-22** |
| 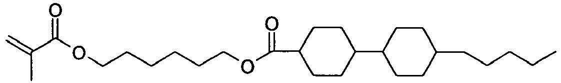 | **RM-23** |
| 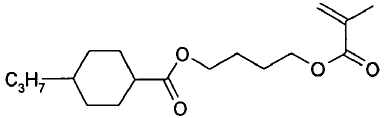 | **RM-24** |

In einer bevorzugten Ausführungsform der vorliegenden Erfindung enthalten die mesogenen Medien eine oder mehrere Verbindungen ausgewählt aus der Gruppe der Verbindungen der Tabelle E.

In der vorliegenden Anmeldung bedeutet der Begriff "Verbindungen", auch geschrieben als "Verbindung(en)", sofern nicht explizit anders angegeben, sowohl eine als auch mehrere Verbindungen. Umgekehrt schließt der Begriff "Verbindung" generell auch mehrere Verbindungen ein, sofern dies laut Definition möglich und nicht anders angegeben ist. Gleiches gilt für die Begriffe FK-Medien und FK-Medium. Der Begriff "Komponente" umfasst jeweils eine oder mehrere Stoffe, Verbindungen und/oder Teilchen.

Außerdem werden folgende Abkürzungen und Symbole verwendet:
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Permittivität senkrecht zum Direktor bei 20°C und 1 kHz,
- ε∥: dielektrische Permittivität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN].

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder
flüssigkristallinen Komponenten, ohne Lösungsmittel.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C, Δn wird bei 589 nm und Δε bei 1 kHz bestimmt, sofern nicht jeweils explizit anders angegeben.

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei optional gleichzeitig eine Spannung an die Anzeige angelegt wird (üblicherweise 5 bis 30 V Wechselstrom, 1 kHz). In den Beispielen wird, falls nicht anders angegeben, eine Quecksilberdampflampe mit 100 mW/cm² verwendet, die Intensität wird mit einem Standard-UV-Meter (Fabrikat Ushio UNI meter) gemessen, der mit einem Bandpassfilter bei 320 nm oder 340nm ausgerüstet ist.

Die folgenden Beispiele erläutern die vorliegende Erfindung, ohne sie in irgendeiner Weise beschränken zu sollen. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Weitere Kombinationen der Ausführungsformen und Varianten der Erfindung gemäß der Beschreibung ergeben sich auch aus den Ansprüchen.

### Beispiele

Die eingesetzten Verbindungen, soweit nicht kommerziell erhältlich, werden nach Standard-Laborvorschriften synthetisiert. Die FK-Medien stammen von der Merck KGaA, Deutschland.

Die verwendeten selbstorientierenden, langkettigen Alkohole und Amine sind kommerziell erhältlich und werden ggf. vor der Verwendung gereinigt.

Folgende selbstorientierende Verbindungen werden in erfindungsgemäßen FK-Medien verwendet:

| Verbindung Nr. | Strukturformel | Kettenlänge |
|---|---|---|
| 1 | 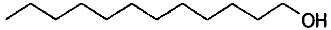 | C₁₂ |
| 2 (nur zum Vergleich) | 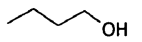 | C₄ |
| 3 | 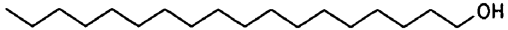 | C₁₈ |
| 4 (nur zum Vergleich) | 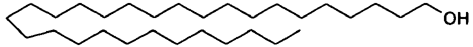 | C₃₀ |
| 5 | 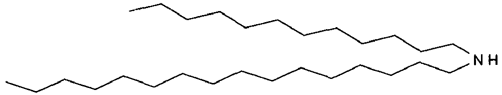 | C₁₆/C₁₂ |
| 6 | 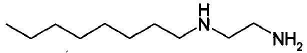 | c₈ |
| 7 | 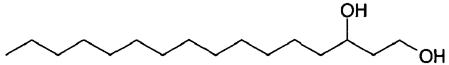 | C₁₄ |
| 8 | 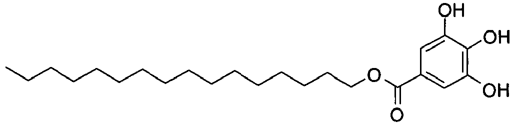 | C₁₆ |
| 9 | 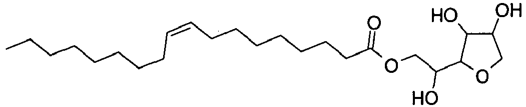 | C₁₇ |

### Mischungsbeispiele

Zur Herstellung der angegebenen FK-Medien werden die folgenden flüssigkristallinen Mischungen bestehend aus niedermolekularen Komponenten in den angegebenen prozentualen Gewichtsanteilen verwendet.

**Tabelle 1: Nematisches FK-Medium M1 (Δε < 0)**

| | | | |
|---|---|---|---|
| CY-3-O4 | 14 % | Kp. | + 80 °C |
| CCY-3-O2 | 9 % | Δn | 0,090 |
| CCY-3-O3 | 9 % | Δε | -3,3 |
| CPY-2-O2 | 10 % | ε_{∥} | 3,4 |
| CPY-3-O2 | 10 % | K₃/K₁ | 0,97 |
| CCY-3-1 | 8 % | | |
| CCH-34 | 9 % | | |
| CCH-35 | 6 % | | |
| PCH-53 | 10 % | | |
| CCH-301 | 6 % | | |
| CCH-303 | 9 % | | |

**Tabelle 2: Nematisches FK-Medium M2 (Δε > 0)**

| | | | |
|---|---|---|---|
| CC-4-V | 10 % | Kp. | + 77 °C |
| CC-5-V | 13.5 % | Δn | 0.113 |
| PGU-3-F | 6.5 % | Δε | 19.2 |
| ACQU-2-F | 10 % | ε_{∥} | 23.8 |
| ACQU-3-F | 12 % | K₃/K₁ | 0.97 |
| PUQU-3-F | 11 % | | |
| CCP-V-1 | 12 % | | |
| APUQU-2-F | 6 % | | |
| APUQU-3-F | 7 % | | |
| PGUQU-3-F | 8 % | | |
| CPGU-3-OT | 4 % | | |

### Vergleichsmischungsbeispiel 1 (a/b), ohne Polymerstabilisierung

Zu einem nematischen FK-Medium **M1** des VA-Typs (Δε < 0) gemäß Tabelle 1 wird die Verbindung Nr. 1 (2,0 Gew.%) zugesetzt und homogenisiert.

Verwendung in Testzellen ohne Vororientierungsschicht ('alignment layer'):
a) Die entstandene Mischung wird in eine mono-Domain-Testzelle gefüllt (ohne Polyimid-Orientierungsschicht, Schichtdicke d ≈ 4,0 µm, Glass-Substrat, beidseitige ITO-Beschichtung, ohne Passivierungsschicht). Das FK-Medium weist eine spontane homöotrope (vertikale) Orientierung zu den Substratoberflächen auf. Diese Orientierung bleibt bis 70 °C stabil. Im temperaturstabilen Bereich lässt sich die VA-Zelle zwischen gekreuzten Polarisatoren durch Anlegen einer Spannung zwischen 0 und 30 V reversibel schalten.
b) Die entstandene Mischung wird in eine zwei-Domain-Testzelle gefüllt (ohne Polyimid-Orientierungsschicht, Schichtdicke d ≈ 4,0 µm, Glass-Substrat, beidseitige strukturierte ITO-Beschichtung (10µm slit width), ohne Passivierungsschicht). Das FK-Medium weist eine spontane homöotrope (vertikale) Orientierung zu den Substratoberflächen auf. Diese Orientierung bleibt bis 40 °C stabil. Im temperaturstabilen Bereich lässt sich die VA-Zelle zwischen gekreuzten Polarisatoren durch Anlegen einer Spannung zwischen 0 und 30 V reversibel schalten.

### Vergleichsmischungsbeispiel 2, ohne Polymerstabilisierung

Zu einem nematischen FK-Medium **M2** des VA-IPS-Typs (Δε > 0) gemäß Tabelle 2 wird die Verbindung Nr. 1 (2,0 Gew.%) zugesetzt und homogenisiert.

Verwendung in Testzellen ohne Vororientierungsschicht ('alignment layer'): Die entstandene Mischung wird in eine mono-Domain-Testzelle gefüllt (ohne Polyimid-Orientierungsschicht, Schichtdicke d ≈ 4,0 µm, Glass-Substrat, beidseitige ITO-Beschichtung, ohne Passivierungsschicht). Das FK-Medium weist eine spontane homöotrope (vertikale) Orientierung zu den Substratoberflächen auf.

### Vergleichsmischungsbeispiele 3-10 (a/b), ohne Polymerstabilisierung

Die Verbindungen Nr. 2-9 werden analog Mischungsbeispiel 1 zu einem nematischen FK-Medium **M1** (Δε < 0) gemäß Tabelle 1 zugesetzt und homogenisiert. Die Gewichtsanteile der Verbindungen im Medium sind in der Tabelle 3 angegeben. Das erhaltene FK-Medium wird jeweils in eine mono-Domain (a) und in eine zwei-Domain-Testzelle (b) ohne Vororientierungsschicht gefüllt. Die erhaltene Orientierung (homöotrope (vertikale) oder planar) zu den Substratoberflächen ist in Tabelle 3 angegeben. Im temperaturstabilen Bereich lassen sich die VA-Zelle (homöotrope Orientierung) zwischen gekreuzten Polarisatoren durch Anlegen einer Spannung zwischen 0 und 30 V reversibel schalten.

**Tabelle 3: Gewichtsanteile für Dotierung in M1 und Orientierung der erhaltenen FK-Mischung bei 20°C und 70°C.**

| | | | a) Mono-Domain-Zelle | | b) Zwei-Domain-Zelle | |
|---|---|---|---|---|---|---|
| Vergleichsmi schungsbeispiel | Verbindung Nr. | Gewichtsanteil | Orientierung bei 20 °C | Orientierung bei 70 °C | Orientierung bei 20 °C | Orientierung bei 70 °C |
| 3 | 2 | 2,0 % | planar | planar | planar | planar |
| 4 | 3 | 0,6 % | homöotrop | homöotrop | planar | planar |
| 5 | 4 | 2,0 % | homöotrop | - | planar | planar |
| 6 | 5 | 1,0 % | homöotrop | homöotrop | homöotrop | homöotrop |
| 7 | 6 | 0,5 % | homöotrop | planar | homöotrop | planar |
| 8 | 7 | 0,3 % | homöotrop | homöotrop | homöotrop | |
| 9 | 8 | 0,3 % | homöotrop | homöotrop | homöotrop | homöotrop |
| 10 | 9 | 2,0 % | homöotrop | homöotrop | homöotrop | homöotrop |

Die Zellen mit homöotroper Orientierung lassen sich reversibel schalten.

### Vergleichsmischungsbeispiele 11-18

Die Verbindungen Nr. 2-9 werden analog Mischungsbeispiel 2 zu einem nematischen FK-Medium **M2** (Δε > 0) gemäß Tabelle 1 zugesetzt und homogenisiert. Die Gewichtsanteile der Verbindungen im Medium sind in der Tabelle 4 angegeben. Das erhaltene FK-Medium wird in eine mono-Domain-Testzelle ohne Vororientierungsschicht gefüllt. Die erhaltene Orientierung (homöotrope (vertikale) oder planar) zu den Substratoberflächen ist in Tabelle 4 angegeben.

**Tabelle 4: Gewichtsanteile für Dotierung in M2 und Orientierung der erhaltenen FK-Mischung bei 20°C. Mono-domain Testzelle.**

| Vergleichsmischu ngsbeispiel | Verbindung Nr. | Gewichtsanteil | Orientierung bei 20 °C |
|---|---|---|---|
| 11 | 2 | 2,0 % | planar |
| 12 | 3 | 0,6 % | homöotrop |
| 13 | 4 | 2,0 % | planar |
| 14 | 5 | 1,0 % | homöotrop |
| 15 | 6 | 0,5 % | homöotrop |
| 16 | 7 | 0,3 % | homöotrop |
| 17 | 8 | 0,3 % | homöotrop |
| 18 | 9 | 2,0 % | homöotrop |

### Mischungsbeispiele 19-21 (Polymerstabilisierung von Vergleichsmischungsbeispiel 1, 4 und 6)

Zu einem nematischen FK-Medium **M1** (Δε < 0) gemäß Tabelle 1 werden eine polymerisierbare Verbindung **(RM-1,** 0,5 Gew.%) und eine selbstorientierende Verbindung gemäß Tabellen 5.a und 5.b zugesetzt und homogenisiert.

Verwendung in Testzellen ohne Vororientierungsschicht ('alignment layer'):
a) Die entstandene Mischung (Tabelle 5a) wird in eine **mono-Domain-Testzelle** gefüllt (ohne Polyimid-Orientierungsschicht, Schichtdicke d ≈ 4,0 µm, Glass-Substrat, beidseitige ITO-Beschichtung, ohne Passivierungsschicht). Das FK-Medium weist eine spontane homöotrope (vertikale) Orientierung zu den Substratoberflächen auf. Unter Anlegen einer Spannung größer als die optische Schwellenspannung wird die Zelle 15 min mit UV-Licht der Intensität 100 mW/cm² bei 40°C bestrahlt. Dadurch erfolgt Polymerisation der monomeren, polymerisierbaren Verbindung. Die homöotrope Orientierung wird damit zusätzlich stabilisiert und ein 'pre-tilt' wird eingestellt. Die erhaltene PSA-VA-Zelle lässt sich bis 70 °C unter Anlegen einer Spannung zwischen 0 und 30 V reversibel schalten. Die Schaltzeiten sind, im Vergleich zu den nicht polymerisierten Beispielen, verkürzt.

**Tabelle 5.a: Gewichtsanteile für Polymerstabilisierung in M1 und Orientierung der erhaltenen FK-Mischung bei 20°C und 70°C, vor und nach Temperaturbelastungstest bei 120°C. Mono-Domain-Zellen (a).**

| | | | vor Belastung | | nach Belastung (Anzahl Tage bei 120°C) | |
|---|---|---|---|---|---|---|
| Mischungsbeispiel | Verbindung Beispiel Nr. (Gewichts.) | RM-1, Gewichtsanteil | Orientierung bei 20 °C | Orientierung bei 70 °C | Orientierung bei 20 °C | Orientierung bei 70 °C |
| Vgl.-1 | 1 (2,0%) | 0% | homöotrop | homöotrop | homöotrop (7 Tage) | planar (7 Tage) |
| Vgl.-4. | 3 (0,6%) | 0% | homöotrop | homöotrop | planar (1 Tag) | planar (1 Tag) |
| Vgl.-6 | 5 (1,0%) | 0% | homöotrop | homöotrop | planar (1 Tag) | planar (1 Tag) |
| 19 | 1 (2,0%) | 0,5 % | homöotrop | homöotrop | homöotrop (7 Tage) | homöotrop (7 Tage) |
| 20 | 3 (0,6%) | 0,5% | homöotrop | homöotrop | homöotrop (1 Tag) | homöotrop (1 Tag) |
| 21 | 5 (1,0%) | 0,5% | homöotrop | homöotrop | homöotrop (1 Tag) | homöotrop (1 Tag) |

Die Zellen mit homöotroper Orientierung lassen sich reversibel schalten.
b) Die entstandene Mischung (Tabelle 5b) wird in eine **zwei-Domain-**Testzelle gefüllt (ohne Polyimid-Orientierungsschicht, Schichtdicke d ≈ 4,0 µm, Glass-Substrat, beidseitige strukturierte ITO-Beschichtung (10µm slit width), ohne Passivierungsschicht). Das FK-Medium weist eine spontane homöotrope (vertikale) Orientierung zu den Substratoberflächen auf. Unter Anlegen einer Spannung größer als die optische Schwellenspannung wird die Zelle 15 min mit UV-Licht der Intensität 100 mW/cm² bei 40°C bestrahlt. Dadurch erfolgt Polymerisation der monomeren, polymerisierbaren Verbindung. Die homöotrope Orientierung wird damit zusätzlich stabilisiert und ein 'pre-tilt' wird eingestellt. Die erhaltene PSA-VA-Zelle lässt sich bis 70 °C unter Anlegen einer Spannung zwischen 0 und 30 V reversibel schalten. Die Schaltzeiten sind, im Vergleich zu den nicht polymerisierten Beispielen, verkürzt.

### Temperaturbelastungstest von Mischungsbeispiel 19 - 21

Die FK-Medien Vgl.-1, Vgl.-6, sowie die Medien der Mischungsbeispiele 19 - 21 werden in mono- und zwei-Domain-Testzellen gefüllt. Die polymerisierbaren Verbindungen werden wie angegeben polymerisiert. Alle Zellen sind bei 120 °C für die angegebene Zahl von Tagen dem Wärmebelastungstest ausgesetzt (Tabelle 5.a und 5.b). Die elektrooptischen Kurven werden vor und nach der Temperaturbelastung untersucht. Während nach Belastung ohne Polymerstabilisierung wesentliche Unterschiede in den Schaltkurven bis zum kompletten Verlust der selbst-induzierten homöotropen Orientierung beobachtet werden, bleiben die Eigenschaften der polymerstabilisierten Zellen zwischen 20°C und 70°C praktisch unverändert.

**Tabelle 5.b: Gewichtsanteile für Polymerstabilisierung in M1 und Orientierung der erhaltenen FK-Mischung bei 20°C und 70°C, vor und nach Temperatur Belastung beim 120°C. Zwei-Domain-Zellen (b).**

| | | | vor Belastung | | nach Belastung (Anzahl Tage bei 120°C) | |
|---|---|---|---|---|---|---|
| Mischungsbeispiel | Verbindung Beispiel Nr. (Gewichts.) | RM-1, Gewichtsanteil | Orientierung bei 20 °C | Orientierung bei 70 °C | Orientierung bei 20 °C | Orientierung bei 70 °C |
| Vgl.- 1 | 1 (2,0%) | 0% | homöotrop | planar | planar (1 Tag) | planar (1 Tag) |
| Vgl.-6 | 5 (1,0%) | 0% | homöotrop | homöotrop | homöotrop (6 Tage) | planar (6 Tage) |
| 19 | 1 (2,0%) | 0,5% | homöotrop | homöotrop | homöotrop (1 Tag) | homöotrop (1 Tag) |
| 21 | 5 (1,0%) | 0,5% | homöotrop | homöotrop | homöotrop (6 Tage) | homöotrop (6 Tage) |

Die Zellen mit homöotroper Orientierung lassen sich reversibel schalten.

## Patentansprüche

1. FK-Medium enthaltend eine niedermolekulare flüssigkristalline Komponente, eine oder mehrere organische Verbindungen, wobei die organische Verbindung mindestens eine polare Ankergruppe, umfassend polare Strukturelemente mit Atomen ausgewählt aus N, O, S, und P, die eine nicht-kovalente Wechselwirkung mit der Substratoberfläche aus Glas oder Metalloxiden eingeht, und mindestens einen langkettigen unpolaren Rest mit mindestens 8 C-Atomen aufweist, sowie eine polymerisierbare oder eine polymerisierte Komponente, wobei die polymerisierte Komponente erhältlich ist durch Polymerisation einer polymerisierbaren Komponente,

2. FK-Medium nach Anspruch 1 , **dadurch gekennzeichnet, dass** der langkettige unpolare Rest einen aliphatischen Kohlenwasserstoffrest umfasst, der optional ungesättigt oder mit F und/oder Cl halogeniert ist und worin eine oder mehrere nicht benachbarte und nicht endständige CH₂-Gruppen durch -O-, -(CO)-oder eine Estergruppe ersetzt sein können, und worin eine CH₂-Gruppe durch eine Cycloalkylengruppe mit 3 bis 8 C-Atomen ersetzt sein kann.

3. FK-Medium nach einem oder mehreren der Ansprüche 1 oder 2, **dadurch gekennzeichnet, dass** die polare Ankergruppe der organischen Verbindung mindestens eine OH-Struktur oder ein N-Atom in einer primären oder sekundären oder tertiären Amingruppe umfasst.

4. FK-Medium nach einem oder mehreren der Ansprüche 1 bis 3, **dadurch gekennzeichnet, dass** die organische Verbindung eine Verbindung der Formel (I)
(R¹)ₙ-R² (I)
umfasst, worin
R¹ geradkettiges oder verzweigtes Alkyl mit 8 bis 20 C-Atomen, worin auch eine oder mehrere nicht benachbarte CH₂-Gruppen durch -CH=CH-, -CF=CH-, -CH=CF- oder -C=C-ersetzt sein können, worin eine CH₂-Gruppe durch eine Cycloalkylengruppe mit 3 bis 8 C-Atomen und worin auch ein oder mehrere H-Atome durch F oder Cl, ersetzt sein können,
R² die polare Ankergruppe, und
n 1 oder 2
bedeutet.

5. FK-Medium nach Anspruch 4, **dadurch gekennzeichnet, dass** für die Verbindungen der Formel I die Gruppe R² eine Gruppe der Teilformel (A1)
-Sp-[X²-Z³-]ₖX¹ (A1)
umfasst,
worin
Sp eine Abstandsgruppe oder eine Einfachbindung,
X¹ eine Gruppe -NH₂, -NHR¹¹ -NR¹¹₂, -OR¹¹, -OH, -(CO)OH oder eine Gruppe der Formeln 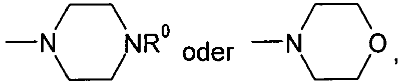
R⁰ H oder Alkyl mit 1 bis 12 C-Atomen,
X² -NH-, -NR¹¹-, -O- oder eine Einfachbindung,
Z³ jeweils unabhängig voneinander eine Alkylengruppe mit 1-15 C-Atomen, carbocyclische Ringe mit 5 oder 6 C-Atomen, oder Kombinationen aus einem oder mehreren Ringen und Alkylengruppen, worin jeweils Wasserstoff durch -OH, -OR¹¹, -(CO)OH, -NH₂, -NHR¹¹, -NR¹¹₂, oder Halogen (bevorzugt F, Cl) ersetzt sein kann,
R¹¹ einen halogenierten oder unsubstituierten Alkylrest mit 1 bis 15 C-Atomen, wobei in diesem Rest auch eine oder mehrere CH₂-Gruppen jeweils unabhängig voneinander durch -C≡C-, -CH=CH-, -(CO)O-, -O(CO)-, -(CO)- oder -O- so ersetzt sein können, dass O-Atome nicht direkt miteinander verknüpft sind, und wobei zwei Reste R¹¹ miteinander zu einem Ring verknüpft sein können, oder H, und
k 0, 1, 2 oder 3
bedeuten.

6. FK-Medium nach Anspruch 4 oder 5, **dadurch gekennzeichnet, dass** die organische Verbindung eine Verbindung der Formel I:
R¹-R² (I)
umfasst, worin
R¹ wie nach Anspruch 5 definiert ist, und
R² unabhängig voneinander geradkettiges, verzweigtes oder cyclisches Alkyl mit 1 bis 25 C-Atomen, worin optional eine oder mehrere nicht benachbarte CH₂-Gruppen durch, -NR⁰-,-O-, -S-, -CO-, -CO-O-, -O-CO-, -O-CO-O- so ersetzt sind, dass N-, O- und/oder S-Atome nicht direkt miteinander verknüpft sind, und worin optional ein oder mehrere tertiäre Kohlenstoffatome (CH-Gruppen) durch N ersetzt sind, und worin optional ein oder mehrere H-Atome durch F oder Cl, ersetzt sind, mit der Maßgabe, dass der Rest R² ein oder mehrere Heteroatome ausgewählt aus N, S und/oder O umfasst,
bedeutet.

7. FK-Medium nach einem oder mehreren der Ansprüche 1 bis 6 **dadurch gekennzeichnet, dass** für die Verbindung der Formel I
R¹ eine Alkylgruppe mit 8 bis 20 C-Atomen bedeutet.

8. FK-Medium nach einem oder mehreren der Ansprüche 1 bis 7, **dadurch gekennzeichnet, dass** es die organische Verbindung mit mindestens einer Ankergruppe in einer Konzentration von weniger als 10 Gew.-% enthält.

9. FK-Medium nach einem oder mehreren der Ansprüche 1 bis 8, **dadurch gekennzeichnet, dass** es eine oder mehrere polymerisierbare Verbindungen der Formel M oder eine polymerisierte Komponente, die eine oder mehrere Verbindungen der Formel M in polymerisierter Form enthält, umfasst:
P^{a}-(Sp^{a})ₛ₁-A²-(Z¹-A¹)ₙ-(Sp^{b})ₛ₂-P^{b} M
worin die einzelnen Reste folgende Bedeutung besitzen:
P^{a}, P^{b} jeweils unabhängig voneinander eine polymerisierbare Gruppe,
Sp^{a}, Sp^{b} bei jedem Auftreten gleich oder verschieden eine Abstandsgruppe,
s1, s2 jeweils unabhängig voneinander 0 oder 1,
A¹, A² jeweils unabhängig voneinander einen Rest ausgewählt aus folgenden Gruppen
a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O-und/oder -S- ersetzt sein können und worin auch ein oder mehrere H-Atome durch F ersetzt sein können,
b) der Gruppe bestehend aus 1,4-Phenylen und 1,3-Phenylen, worin auch eine oder zwei CH-Gruppen durch N ersetzt sein können und worin auch ein oder mehrere H-Atome durch L ersetzt sein können,
c) der Gruppe bestehend aus Tetrahydropyran-2,5-diyl, 1,3-Dioxan-2,5-diyl, Tetrahydrofuran-2,5-diyl, Cyclobut-1,3-diyl, Piperidin-1,4-diyl, Thiophen-2,5-diyl und Selenophen-2,5-diyl, welche auch ein oder mehrfach durch L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 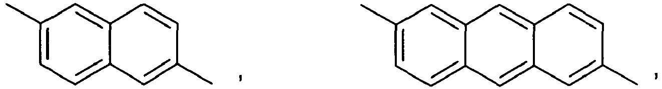 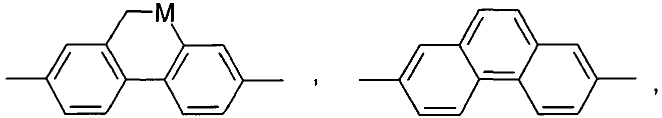 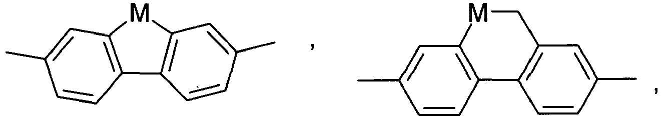 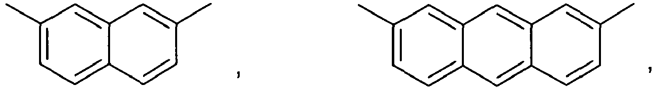 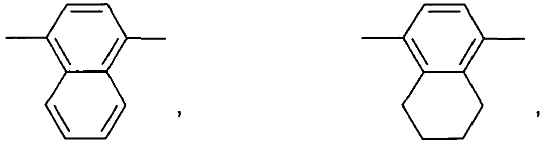 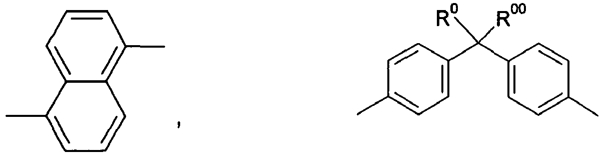 wobei in diesen Resten auch ein oder mehrere H- Atome durch L ersetzt sein können, und/oder eine oder mehrere Doppelbindungen durch Einfachbindungen ersetzt sein können, und/oder ein oder mehrere CH-Gruppen durch N ersetzt sein können,
n 0, 1, 2 oder 3,
Z¹ jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{y}R^{z})-, -CH₂CF₂-, -CF₂CF₂-, oder eine Einfachbindung,
L bei jedem Auftreten gleich oder verschieden F, Cl, CN, SCN, SF₅ oder geradkettiges oder verzweigtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
R⁰, R⁰⁰ jeweils unabhängig voneinander H, F oder geradkettiges oder verzweigtes Alkyl mit 1 bis 12 C-Atomen, worin auch ein oder mehrere H-Atome durch F ersetzt sein können,
M -O-, -S-, -CH₂-, -CHY¹ oder -CY¹Y²-, und
Y¹ und Y² jeweils unabhängig voneinander eine der oben für R⁰ angegebenen Bedeutungen, Cl oder CN.

10. FK-Medium nach einem oder mehreren der Ansprüche 1 bis 9, **dadurch gekennzeichnet, dass** die Verbindung der Formel I als weitere Funktionalisierung neben der polaren Ankergruppe eine oder mehrere polymerisierbare Gruppen aufweist.

11. FK-Anzeige enthaltend eine FK-Zelle mit zwei Substraten und mindestens zwei Elektroden, wobei mindestens ein Substrat lichtdurchlässig ist, sowie einer zwischen den Substraten befindlichen Schicht eines FK-Mediums nach einem oder mehreren der Ansprüche 1 bis 10,
wobei die organische Verbindung oder die Verbindung der Formel I geeignet ist, eine homöotrope Ausrichtung des FK-Mediums gegenüber den Substratoberflächen herbeizuführen.

12. FK-Anzeige nach Anspruch 11, **dadurch gekennzeichnet, dass** die Substrate keine Orientierungsschichten zur homöotropen Ausrichtung aufweisen.

13. FK-Anzeige nach Anspruch 11, **dadurch gekennzeichnet, dass** die Substrate ein- oder beidseitig Orientierungsschichten aufweisen.

14. FK-Anzeige nach einem oder mehreren der Ansprüche 11 bis 13 **dadurch gekennzeichnet, dass** es sich um eine VA-Anzeige mit einem FK-Medium mit negativer dielektrischer Anisotropie und auf gegenüberliegenden Substraten angeordneten Elektroden handelt.

15. FK-Anzeige nach einem oder mehreren der Ansprüche 11 bis 14 **dadurch gekennzeichnet, dass** es sich um eine VA-IPS-Anzeige mit einem FK-Medium mit positiver dielektrischer Anisotropie und mindestens auf einem Substrat angeordneten Interdigital-Elektroden handelt.

16. Verfahren zu Herstellung eines FK-Mediums, **dadurch gekennzeichnet, dass** man eine oder mehrere organische Verbindungen mit mindestens einer polaren Ankergruppe und mindestens einem langkettigen unpolaren Rest mit mindestens 8 C-Atomen mit einer niedermolekularen flüssigkristallinen Komponente mischt, optional eine oder mehrere polymerisierbare Verbindungen zugibt, optional Additive zugibt und optional polymerisiert.

17. Verwendung von organischen Verbindungen mit mindestens einer polaren Ankergruppe und mindestens einem langkettigen unpolaren Rest mit mindestens 8 C-Atomen nach einem oder mehreren der vorangehenden Ansprüche als Additiv für FK-Medien zur Herbeiführung einer homöotropen Orientierung gegenüber einer das FK-Medium begrenzenden Oberfläche.

18. Verfahren zu Herstellung einer FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, umfassend die Verfahrensschritte:
- Befüllen der Zelle mit einem FK-Medium nach einem der Ansprüche 1 bis 10, das eine homöotrope Ausrichtung gegenüber den Substratoberflächen annimmt, und optional
- Polymerisieren der polymerisierbaren Komponente, optional unter Anlegen einer Spannung an die Zelle oder unter der Wirkung eines elektrischen Feldes.

## Claims

1. LC medium comprising a low-molecular-weight liquid-crystalline component, one or more organic compounds, where the organic compound contains at least one polar anchor group including polar structural elements containing atoms selected from N, O, S and P which undergoes a non-covalent interaction with the glass or metal-oxide substrate surface, and at least one long-chain non-polar radical having at least 8 C atoms,
and a polymerisable or polymerised component, where the polymerised component is obtainable by polymerisation of a polymerisable component.

2. LC medium according to Claim 1, **characterised in that** the long-chain non-polar radical includes an aliphatic hydrocarbon radical, which is optionally unsaturated or halogenated by F and/or Cl and in which one or more non-adjacent and non-terminal CH₂ groups may be replaced by -O-, -(CO)- or an ester group and in which one CH₂ group may be replaced by a cycloalkylene group having 3 to 8 C atoms.

3. LC medium according to one or more of Claims 1 and 2, **characterised in that** the polar anchor group of the organic compound includes at least one OH structure or an N atom in a primary or secondary or tertiary amine group.

4. LC medium according to one or more of Claims 1 to 3, **characterised in that** the organic compound includes a compound of the formula (I)
(R¹)ₙ-R² (I)
in which
R¹ denotes straight-chain or branched alkyl having 8 to 20 C atoms, in which, in addition, one or more non-adjacent CH₂ groups may be replaced by -CH=CH-, -CF=CH-, -CH=CF- or -C=C-, in which one CH₂ group may be replaced by a cyclo-alkylene group having 3 to 8 C atoms and in which, in addition, one or more H atoms may be replaced by F or Cl,
R² denotes the polar anchor group, and
n denotes 1 or 2.

5. LC medium according to Claim 4, **characterised in that**, for the compounds of the formula I, the group R² includes a group of the sub-formula (A1)
-Sp-[X²-Z³-]ₖX¹ (A1)
in which
Sp denotes a spacer group or a single bond,
X¹ denotes a group -NH₂, -NHR¹¹, -NR¹¹₂, -OR¹¹, -OH, -(CO)OH or a group of the formula 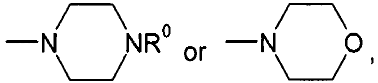
R⁰ denotes H or alkyl having 1 to 12 C atoms,
X² denotes -NH-, -NR¹¹-, -O- or a single bond,
Z³ in each case, independently of one another, denotes an alkylene group having 1-15 C atoms, carbocyclic rings having 5 or 6 C atoms, or combinations of one or more rings and alkylene groups, in each of which hydrogen may be replaced by -OH, -OR¹¹, -(CO)OH, -NH₂, -NHR¹¹, -NR¹¹₂ or halogen (preferably F, Cl),
R¹¹ denotes a halogenated or unsubstituted alkyl radical having 1 to 15 C atoms, where, in addition, one or more CH₂ groups in this radical may each be replaced, independently of one another, by -C≡C-, -CH=CH-, -(CO)O-, -O(CO)-, -(CO)- or -O-in such a way that O atoms are not linked directly to one another, and where two radicals R¹¹ may be linked to one another to form a ring, or H, and
k denotes 0, 1, 2 or 3.

6. LC medium according to Claim 4 or 5, **characterised in that** the organic compound includes a compound of the formula I:
R¹-R² (I)
in which
R¹ is as defined in accordance with Claim 5, and
R², independently of one another, denotes straight-chain, branched or cyclic alkyl having 1 to 25 C atoms, in which one or more non-adjacent CH₂ groups are optionally replaced by-NR⁰-, -O-, -S-, -CO-, -CO-O-, -O-CO-, -O-CO-O- in such a way that N, O and/or S atoms are not linked directly to one another and in which one or more tertiary carbon atoms (CH groups) are optionally replaced by N and in which one or more H atoms are optionally replaced by F or Cl, with the proviso that the radical R² includes one or more heteroatoms selected from N, S and/or O.

7. LC medium according to one or more of Claims 1 to 6, **characterised in that**, for the compound of the formula I,
R¹ denotes an alkyl group having 8 to 20 C atoms.

8. LC medium according to one or more of Claims 1 to 7, **characterised in that** it comprises the organic compound containing at least one anchor group in a concentration of less than 10% by weight.

9. LC medium according to one or more of Claims 1 to 8, **characterised in that** it comprises one or more polymerisable compounds of the formula M or a polymerised component which comprises one or more compounds of the formula M in polymerised form:
P^{a}-(Sp^{a})ₛ₁-A²-(Z¹-A¹)ₙ-(Sp^{b})ₛ₂-P^{b} M
in which the individual radicals have the following meanings:
P^{a}, P^{b} each, independently of one another, denote a polymerisable group,
Sp^{a}, Sp^{b} on each occurrence, identically or differently, denote a spacer group,
s1, s2 each, independently of one another, denote 0 or 1,
A¹, A² each, independently of one another, denote a radical selected from the following groups:
a) the group consisting of trans-1,4-cyclohexylene, 1,4-cyclo-hexenylene and 4,4'-bicyclohexylene, in which, in addition, one or more non-adjacent CH₂ groups may be replaced by -O- and/or -S- and in which, in addition, one or more H atoms may be replaced by F,
b) the group consisting of 1,4-phenylene and 1,3-phenylene, in which, in addition, one or two CH groups may be replaced by N and in which, in addition, one or more H atoms may be replaced by L,
c) the group consisting of tetrahydropyran-2,5-diyl, 1,3-diox-ane-2,5-diyl, tetrahydrofuran-2,5-diyl, cyclobutane-1,3-diyl, piperidine-1,4-diyl, thiophene-2,5-diyl and selenophene-2,5-diyl, each of which may also be mono- or polysubstituted by L,
d) the group consisting of saturated, partially unsaturated or fully unsaturated, and optionally substituted, polycyclic radicals having 5 to 20 cyclic C atoms, one or more of which may, in addition, be replaced by heteroatoms, preferably selected from the group consisting of bicyclo[1.1.1]pentane-1,3-diyl, bicyclo[2.2.2]octane-1,4-diyl, spiro[3.3]heptane-2,6-diyl, 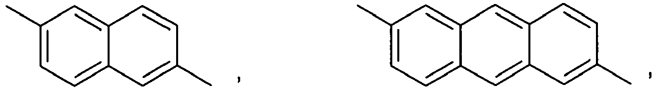 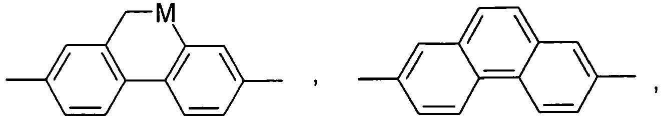 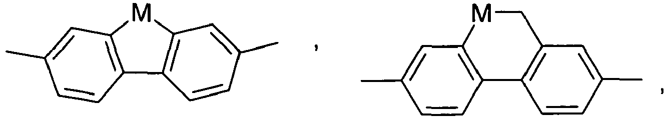 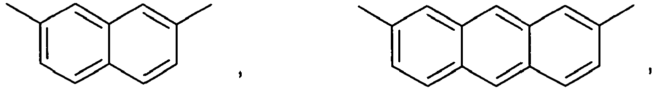 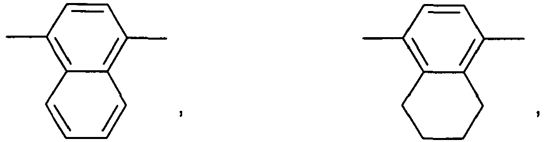 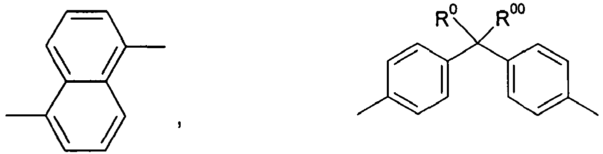 where, in addition, one or more H atoms in these radicals may be replaced by L, and/or one or more double bonds may be replaced by single bonds, and/or one or more CH groups may be replaced by N,
n denotes 0, 1, 2 or 3,
Z¹ in each case, independently of one another, denotes -CO-O-, -O-CO-, -CH₂O-, -OCH₂-, -CF₂O-, -OCF₂-, or -(CH₂)ₙ-, where n is 2, 3 or 4, -O-, -CO-, -C(R^{y}R^{z})-, -CH₂CF₂-, -CF₂CF₂- or a single bond,
L on each occurrence, identically or differently, denotes F, Cl, CN, SCN, SF₅ or straight-chain or branched, in each case optionally fluorinated, alkyl, alkoxy, alkylcarbonyl, alkoxy-carbonyl, alkylcarbonyloxy or alkoxycarbonyloxy having 1 to 12 C atoms,
R⁰, R⁰⁰ each, independently of one another, denote H, F or straight-chain or branched alkyl having 1 to 12 C atoms, in which, in addition, one or more H atoms may be replaced by F,
M denotes -O-, -S-, -CH₂-, -CHY¹- or -CY¹Y²-, and
Y¹ and Y² each, independently of one another, have one of the meanings indicated above for R⁰ or denote Cl or CN.

10. LC medium according to one or more of Claims 1 to 9, **characterised in that** the compound of the formula I contains one or more polymerisable groups as further functionalisation besides the polar anchor group.

11. LC display comprising an LC cell having two substrates and at least two electrodes, where at least one substrate is transparent to light, and a layer of an LC medium according to one or more of Claims 1 to 10 located between the substrates,
where the organic compound or the compound of the formula I is suitable for effecting a homeotropic alignment of the LC medium with respect to the substrate surfaces.

12. LC display according to Claim 11, **characterised in that** the substrates have no alignment layers for homeotropic alignment.

13. LC display according to Claim 11, **characterised in that** the substrates have alignment layers on one or both sides.

14. LC display according to one or more of Claims 11 to 13, **characterised in that** it is a VA display containing an LC medium having negative dielectric anisotropy and electrodes arranged on opposite substrates.

15. LC display according to one or more of Claims 11 to 14, **characterised in that** it is a VA-IPS display containing an LC medium having positive dielectric anisotropy and interdigital electrodes arranged on at least one substrate.

16. Process for the preparation of an LC medium, **characterised in that** one or more organic compounds containing at least one polar anchor group and at least one long-chain non-polar radical having at least 8 C atoms are mixed with a low-molecular-weight liquid-crystalline component, one or more polymerisable compounds are optionally added, and additives are optionally added and optionally polymerised.

17. Use of organic compounds containing at least one polar anchor group and at least one long-chain non-polar radical having at least 8 C atoms according to one or more of the preceding claims as additive for LC media for effecting a homeotropic alignment with respect to a surface delimiting the LC medium.

18. Process for the production of an LC display comprising an LC cell having two substrates and at least two electrodes, where at least one substrate is transparent to light and at least one substrate has one or two electrodes, comprising the process steps of:
- filling of the cell with an LC medium according to one of Claims 1 to 10 which adopts a homeotropic alignment with respect to the substrate surfaces, and optionally
- polymerisation of the polymerisable component, optionally with application of a voltage to the cell or under the action of an electric field.

## Revendications

1. Milieu LC comprenant un composant cristallin liquide de poids moléculaire faible, un ou plusieurs composé(s) organique(s), dans lequel le composé organique contient au moins un groupe d'ancrage polaire incluant des éléments structurels polaires contenant des atomes choisis parmi N, O, S et P, lequel subit une interaction non covalente avec la surface de substrat en verre ou en oxyde métallique, et au moins un radical non polaire en chaîne longue comportant au moins 8 atomes de C*,
et un composant polymérisable ou polymérisé, où le composant polymérisé peut être obtenu par polymérisation d'un composant polymérisable.

2. Milieu LC selon la revendication 1, **caractérisé en ce que** le radical non polaire en chaîne longue inclut un radical hydrocarbone aliphatique, lequel est en option non saturé ou halogéné par F et/ou Cl et dans lequel un ou plusieurs groupe(s) CH₂ non adjacents et non terminal/terminaux peut/peuvent être remplacé(s) par -O-, -(CO)- ou un groupe ester et dans lequel un seul groupe CH₂ peut être remplacé par un groupe cycloalkylène comportant 3 à 8 atomes de C.

3. Milieu LC selon une ou plusieurs des revendications 1 et 2, **caractérisé en ce que** le groupe d'ancrage polaire du composé organique inclut au moins une structure OH ou un atome de N dans un groupe amine primaire ou secondaire ou tertiaire.

4. Milieu LC selon une ou plusieurs des revendications 1 à 3, **caractérisé en ce que** le composé organique inclut un composé de la formule (I) :
(R¹)ₙ-R² (I)
dans laquelle :
R¹ représente alkyle en chaîne droite ou ramifié comportant 8 à 20 atomes de C, où, en outre, un ou plusieurs groupe(s) CH₂ non adjacents peut/peuvent être remplacé(s) par -CH=CH-, -CF=CH-, -CH=CF- ou -C=C-, dans lequel un seul groupe CH₂ peut être remplacé par un groupe cycloalkylène comportant 3 à 8 atomes de C et où, en outre, un ou plusieurs atome(s) de H peut/peuvent être remplacé(s) par F ou Cl,
R² représente le groupe d'ancrage polaire, et
n représente 1 ou 2.

5. Milieu LC selon la revendication 4, **caractérisé en ce que**, pour les composés de la formule I, le groupe R² inclut un groupe de la sous-formule (A1) :
-Sp-[X²-Z³-]ₖX¹ (A1)
dans laquelle :
Sp représente un groupe d'espaceur ou une liaison simple,
X¹ représente un groupe -NH₂, -NHR¹¹, -NR¹¹₂, -OR¹¹, -OH, -(CO)OH ou un groupe de la formule : 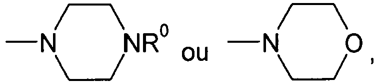
R⁰ représente H ou alkyle comportant 1 à 12 atome(s) de C,
X² représente -NH-, -NR¹¹-, -O- ou une liaison simple,
Z³ représente, dans chaque cas, indépendamment les uns des autres, un groupe alkylène comportant 1-15 atome(s) de C, des cycles carbocycliques comportant 5 ou 6 atomes de C, ou des combinaisons d'un ou de plusieurs cycle(s) et de groupes alkylène, et dans chacun d'eux, hydrogène peut être remplacé par -OH, -OR¹¹, -(CO)OH, -NH₂, -NHR¹¹, -NR¹¹₂ ou halogène (de façon préférable F, Cl),
R¹¹ représente un radical alkyle halogéné ou non substitué comportant 1 à 15 atome(s) de C, où, en outre, un ou plusieurs groupe(s) CH₂ dans ce radical peut/peuvent chacun être remplacé(s), indépendamment les uns des autres, par -C≡C-, -CH=CH-, -(CO)O-, -O(CO)-, -(CO)- ou -O- de telle sorte que des atomes de O ne soient pas liés directement les uns aux autres, et où deux radicaux R¹¹ peuvent être liés l'un à l'autre afin de former un cycle, ou H, et
k représente 0, 1, 2 ou 3.

6. Milieu LC selon la revendication 4 ou 5, **caractérisé en ce que** le composé organique inclut un composé de la formule I :
R¹-R² (I)
dans laquelle :
R¹ est comme défini selon la revendication 5, et
R² représente, indépendamment les uns des autres, alkyle en chaîne droite, ramifié ou cyclique comportant 1 à 25 atome(s) de C, dans lequel un ou plusieurs groupe(s) CH₂ non adjacents est/sont en option remplacé(s) par -NR⁰-, -O-, -S-, -CO-, -CO-O-, -O-CO-, -O-CO-O- de telle sorte que des atomes de N, O et/ou S ne soient pas liés directement les uns aux autres et dans lequel un ou plusieurs atome(s) de carbone tertiaire (des groupes CH) est/sont en option remplacé(s) par N et où un ou plusieurs atome(s) de H est/sont en option remplacé(s) par F ou CI, étant entendu que le radical R² inclut un ou plusieurs hétéroatome(s) choisi(s) parmi N, S et/ou O.

7. Milieu LC selon une ou plusieurs des revendications 1 à 6, **caractérisé en ce que**, pour le composé de la formule I,
R¹ représente un groupe alkyle comportant 8 à 20 atomes de C.

8. Milieu LC selon une ou plusieurs des revendications 1 à 7, **caractérisé en ce qu'**il comprend le composé organique contenant au moins un groupe d'ancrage selon une concentration inférieure à 10% en poids.

9. Milieu LC selon une ou plusieurs des revendications 1 à 8, **caractérisé en ce qu'**il comprend un ou plusieurs composé(s) polymérisable(s) de la formule M ou un composant polymérisé qui comprend un ou plusieurs composé(s) de la formule M sous forme polymérisée :
P^{a}-(Sp^{a})ₛ₁-A²-(Z¹-A¹)ₙ-(Sp^{b})ₛ₂-P^{b} M
dans laquelle les radicaux individuels présentent les significations qui suivent :
P^{a}, P^{b} représentent, chacun indépendamment de l'autre, un groupe polymérisable,
Sp^{a}, Sp^{b} représentent, pour chaque occurrence, de manière identique ou différente, un groupe d'espaceur,
s1, s2 représentent, chacun indépendamment de l'autre, 0 ou 1,
A¹, A² représentent, chacun indépendamment de l'autre, un radical choisi parmi les groupes qui suivent :
a) le groupe constitué par trans-1,4-cyclohexylène, 1,4-cyclo-hexénylène et 4,4'-bicyclohexylène, où, en outre, un ou plusieurs groupe(s) CH₂ non adjacents peut/peuvent être remplacé(s) par -O- et/ou -S- et où, en outre, un ou plusieurs atome(s) de H peut/peuvent être remplacé(s) par F,
b) le groupe constitué par 1,4-phénylène et 1,3-phénylène, où, en outre, un ou deux groupe(s) CH peut/peuvent être remplacé(s) par N et où, en outre, un ou plusieurs atome(s) de H peut/peuvent être remplacé(s) par L,
c) le groupe constitué par tétrahydropyran-2,5-diyle, 1,3-dioxane-2,5-diyle, tétrahydrofuran-2,5-diyle, cyclobutane-1,3-diyle, pipéridine-1,4-diyle, thiophène-2,5-diyle et sélénophène-2,5-diyle, dont chacun peut également être monosubstitué ou polysubstitué par L,
d) le groupe constitué par des radicaux polycycliques saturés, partiellement non saturés ou complètement non saturés, et en option substitués comportant 5 à 20 atomes de C cycliques, dont un ou plusieurs peut/peuvent, en outre, être remplacé(s) par des hétéroatomes, de façon préférable choisis parmi le groupe constitué par bicyclo[1.1.1]pentane-1,3-diyle, bicyclo[2.2.2]octane-1,4-diyle, spiro[3.3]heptane-2,6-diyle, 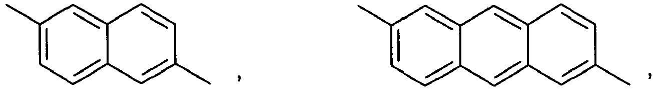 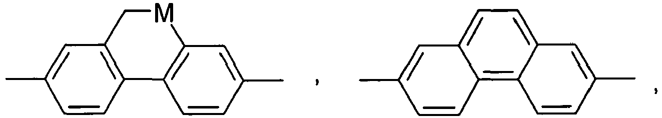 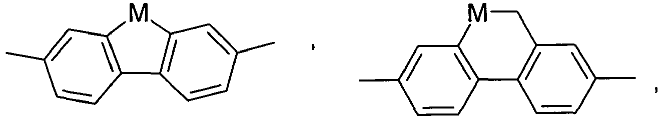 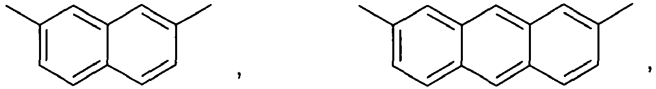 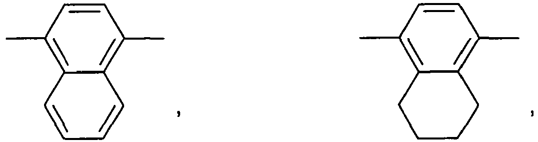 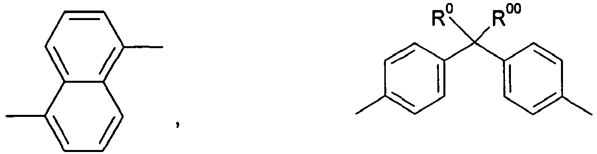 où, en outre, un ou plusieurs atome(s) de H dans ces radicaux peut/peuvent être remplacé(s) par L, et/ou une ou plusieurs liaison(s) double(s) peut/peuvent être remplacée(s) par des liaisons simples, et/ou un ou plusieurs groupe(s) CH peut/peuvent être remplacé(s) par N,
n représente 0, 1, 2 ou 3,
Z¹ représente, dans chaque cas, indépendamment les uns des autres, -CO-O-, -O-CO-, -CH₂O-, -OCH₂-, -CF₂O-, -OCF₂-, ou -(CH₂)ₙ-, où n est 2, 3 ou 4, -O-, -CO-, -C(R^{y}R^{z})-, -CH₂CF₂-, -CF₂CF₂- ou une liaison simple,
L représente, pour chaque occurrence, de manière identique ou différente, F, Cl, CN, SCN, SF₅ ou alkyle, alcoxy, alkylcarbonyle, alcoxycarbonyle, alkylcarbonyloxy ou alcoxycarbonyloxy en chaîne droite ou ramifié, dans chaque cas en option fluoré, comportant 1 à 12 atome(s) de C,
R⁰, R⁰⁰ représentent, chacun indépendamment de l'autre, H, F ou alkyle en chaîne droite ou ramifié comportant 1 à 12 atome(s) de C, où, en outre, un ou plusieurs atome(s) de H peut/peuvent être remplacé(s) par F,
M représente -O-, -S-, -CH₂-, -CHY¹- ou -CY¹Y²-, et
Y¹ et Y² présentent, chacun indépendamment de l'autre, l'une des significations indiquées ci avant pour R⁰ ou représentent Cl ou CN.

10. Milieu LC selon une ou plusieurs des revendications 1 à 9, **caractérisé en ce que** le composé de la formule I contient un ou plusieurs groupe(s)polymérisable(s) en tant que fonctionnalisation supplémentaire en plus du groupe d'ancrage polaire.

11. Affichage LC comprenant une cellule LC comportant deux substrats et au moins deux électrodes, où au moins un substrat est transparent vis-à-vis de la lumière, et une couche d'un milieu LC selon une ou plusieurs des revendications 1 à 10 située entre les substrats, où le composé organique ou le composé de la formule I convient pour réaliser un alignement homéotrope du milieu LC par rapport aux surfaces de substrat.

12. Affichage LC selon la revendication 11, **caractérisé en ce que** les substrats ne comportent pas de couches d'alignement pour un alignement homéotrope.

13. Affichage LC selon la revendication 11, **caractérisé en ce que** les substrats comportent des couches d'alignement sur un seul côté ou sur les deux côtés.

14. Affichage LC selon une ou plusieurs des revendications 11 à 13, **caractérisé en ce qu'**il s'agit d'un affichage VA contenant un milieu LC présentant une anisotropie diélectrique négative et comportant des électrodes agencées sur des substrats opposés.

15. Affichage LC selon une ou plusieurs des revendications 11 à 14, **caractérisé en ce qu'**il s'agit d'un affichage VA-IPS contenant un milieu LC présentant une anisotropie diélectrique positive et comportant des électrodes interdigitées agencées sur au moins un substrat.

16. Procédé pour la préparation d'un milieu LC, **caractérisé en ce qu'**un ou plusieurs composé(s) organique(s) contenant au moins un groupe d'ancrage polaire et au moins un radical non polaire en chaîne longue comportant au moins 8 atomes de C sont mélangés avec un composant cristallin liquide de poids moléculaire faible, un ou plusieurs composé(s) polymérisable(s) est/sont en option ajouté(s), et des additifs sont en option ajoutés et en option polymérisés.

17. Utilisation de composés organiques contenant au moins un groupe d'ancrage polaire et au moins un radical non polaire en chaîne longue comportant au moins 8 atomes de C selon une ou plusieurs des revendications précédentes en tant qu'additif pour des milieux LC pour effectuer un alignement homéotrope par rapport à une surface délimitant le milieu LC.

18. Procédé pour la fabrication d'un affichage LC comprenant une cellule LC comportant deux substrats et au moins deux électrodes, où au moins un substrat est transparent vis-à-vis de la lumière et au moins un substrat comporte une ou deux électrode(s), comprenant les étapes consistant à :
- remplir la cellule avec un milieu LC selon une ou plusieurs des revendications 1 à 10 qui adopte un alignement homéotrope par rapport aux surfaces de substrat, et en option, l'étape consistant à :
- polymériser le composant polymérisable, en option à l'aide de l'application d'une tension sur la cellule ou sous l'action d'un champ électrique.
